# EUROPEAN PATENT APPLICATION

(11) **EP 4 468 622 A1**
(43) Date of publication of application: **27.11.2024**
(21) Application number: 24174493.7
(22) Date of filing: 07.05.2024
(51) Int. Cl.: H04B 7/06, G06N 3/0455, H04L 25/02

(54) **MODEL MISMATCH MITIGATION FOR AUTOENCODER BASED CHANNEL STATE INFORMATION FEEDBACK**

(30) Priority: 08.05.2023 US 202363500800 P
(71) Applicant: INTEL Corporation, Santa Clara, CA 95054 (US)
(72) Inventor: LI, Qian, Portland, 97229 (US); LI, Ziyi, Beijing (CN); YAO, Shuang, Beaverton, 97003 (US); YING, Dawei, Portland, 97229 (US)
(74) Representative: Viering, Jentschura & Partner mbB Patent- und Rechtsanwälte

(57) **Abstract**

An apparatus for an access node of a cellular network, the apparatus may include a processor configured to: determine whether a user equipment, UE, is capable of implementing an autoencoder based channel state information, CSI, feedback based on capability information received from the UE; and identify a model mismatch between an encoder machine learning, ML, model of the UE and a decoder ML model based on the capability information.

## Description

### CROSS-REFERENCE TO RELATED APPLICATIONS

The present application claims priority to US Provisional Patent Application Ser. No. 63/500,800 filed on May 8, 2023.

### TECHNICAL FIELD

The present disclosure is generally related to wireless communication, cellular networks, cloud computing, data centers, network topologies, and communication system implementations, and in particular, to technologies for channel state information (CSI) autoencoder model mismatch mitigation.

### BACKGROUND

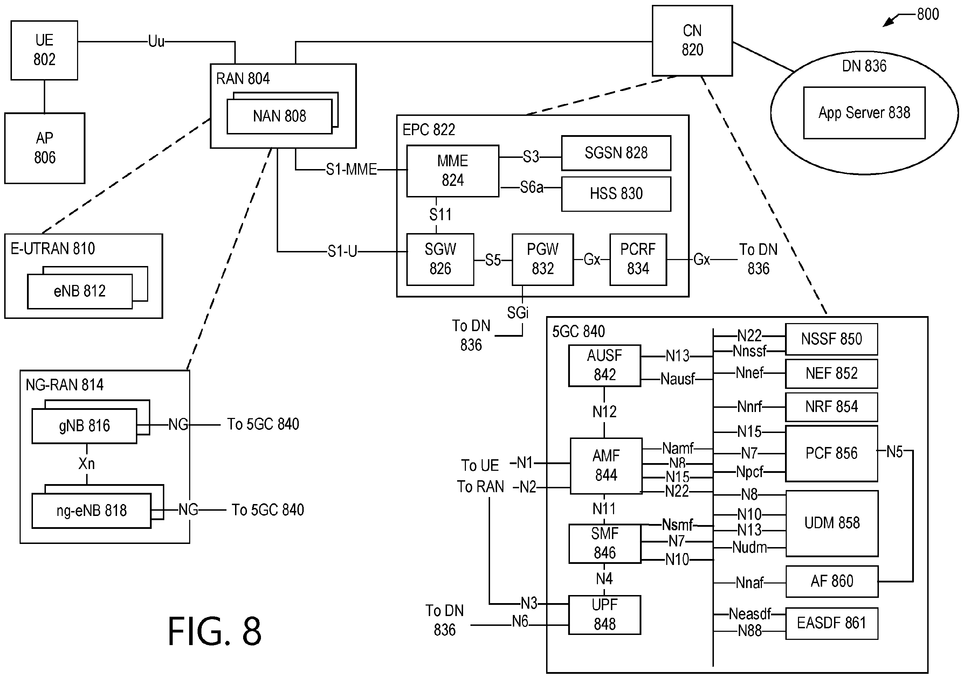

To fully exploit the advantages of multiple-input multiple-output (MIMO), accurate channel state information (CSI) is required. Downlink CSI is obtained at the user equipment (UE) (e.g., UE 802 in FIG. 8) and sent to a base station (BS) or network access node (NAN) (e.g., NAN 808 in FIG. 8). To achieve high accuracy CSI feedback with limited overhead, a two-sided autoencoder-based machine learning (ML) model has been adopted (see e.g., Wen et al., Deep Learning for Massive MIMO CSI Feedback, IEEE WIRELESS COMMUNICATIONS LETTERS, vol. 7, no. 5, pp. 748 751 (Oct. 2018)("[1]")) and is now being actively investigated, where an encoder compresses the CSI at the UE and a decoder decompresses the CSI at the NAN 808.

For such a two-sided model, model training is usually conducted in an end-to-end way, where both parts are involved and the loss function calculates the discrepancy between the UE-side encoder input and the NAN-side decoder output. Therefore, model mismatch would arise when the UE-side encoder and NAN-side decoder are not obtained from the same training procedure, which leads to performance degradation and sometimes even model failure. Currently, no mechanism has been defined to identify model mismatch. No mechanism has been defined to mitigate model mismatch between UE-side encoder and NAN-side decoder.

### BRIEF DESCRIPTION OF THE DRAWINGS

FIG. 1 shows an example end-to-end (e2e) two-sided AI/ML-based autoencoder architecture for CSI feedback.
FIG. 2 shows an example process for model mismatch check and/or model mismatch mitigation.
FIG. 3 shows an example procedure of UE report its capability of autoencoder based CSI feedback.
FIG. 4 shows an example model mismatch check procedure.
FIG .5 shows an example procedure for NAN configuration of UE-side model.
FIG. 6 shows an example NAN-side decoder fine-tuning procedure.
FIG .7 shows an example joint two-sided fine-tuning procedure.
FIG. 8 shows an example network architecture.
FIG. 9 shows an example of a wireless network.
FIG. 10 shows an example of components capable of reading instructions from a machine-readable or a computer-readable medium.
FIG. 11 shows an example cellular network.
FIG. 12 shows an example AI/ML-assisted communication network.
FIG. 13 shows an example neural network.
FIG. 14 shows an example of a reinforcement learning architecture.

### DETAILED DESCRIPTION

### 1. CHANNEL STATE INFORMATION (CSI) ASPECTS

The present disclosure provides mechanisms to identify model mismatch based on UE's capability and information of autoencoder based CSI feedback. The present disclosure provides solutions to mitigate model mismatch, including: NAN 808 directly configures UE-side encoder; NAN 808 performs NAN-side decoder tuning; NAN 808 and UE perform joint two-sided tuning. The selection of model mismatch solution can be decided upon UE's capability. For purposes of the present disclosure, "tuning" or "fine-tuning" can involve adjusting model parameters and/or hyperparameters to optimize the performance of an ML model.

### 1.1. MODEL MISMATCH MITIGATION ASPECTS

### 1.1.1. AI/ML-ASSISTED CSI FEEDBACK USE CASE OVERVIEW

CSI (including precoder matrix indicator (PMI), channel quality indicator (CQI), etc.) plays an important role in achieving high throughput and interference management. Enhancing CSI feedback with AI/ML models has been listed as a use case in 3GPP release 18 (see e.g., RP-213599, "New SI: Study on Artificial Intelligence (AI)/Machine Learning (ML) for NR Air Interface," Qualcomm, December 6 - 17, 2021 ("[2]"), and a two-sided model (e.g., an encoder at the UE 802 to compress the CSI paired with another decoder at the NAN 808 to reconstruct CSI) has been adopted as a starting point.

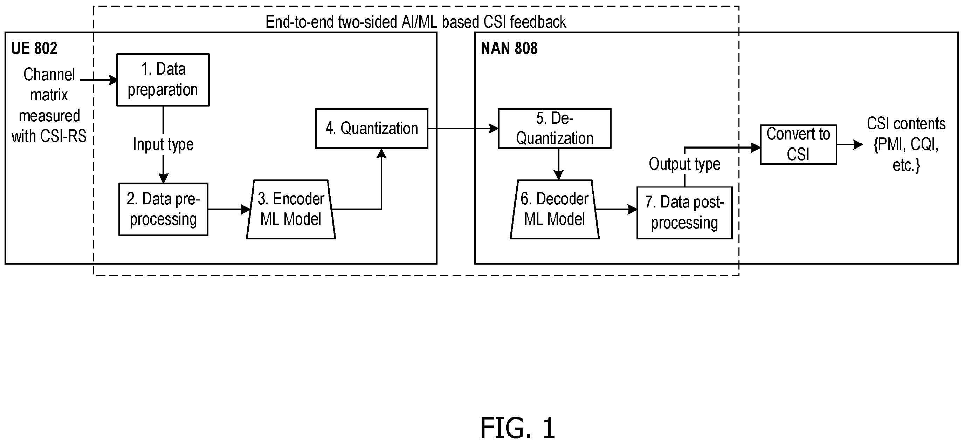

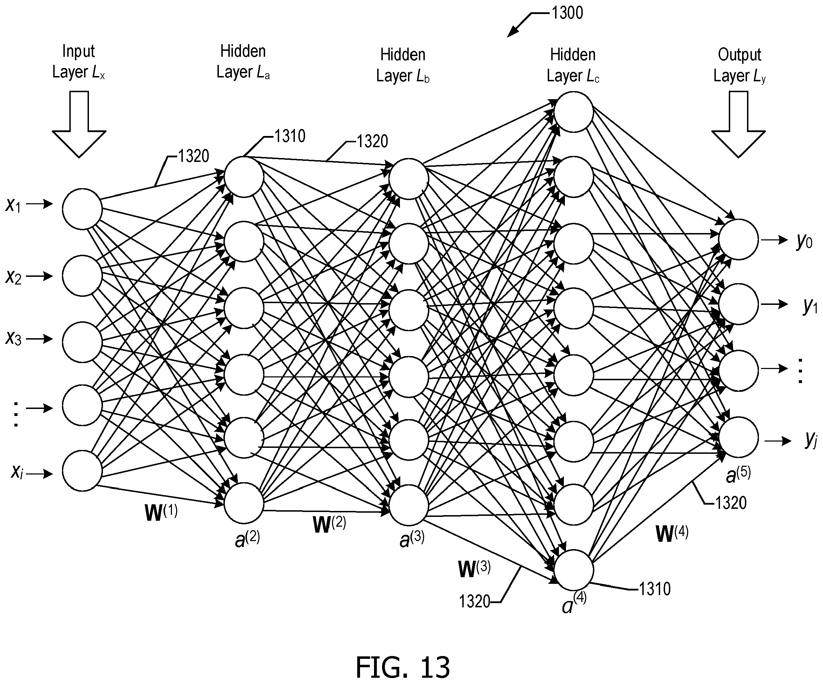

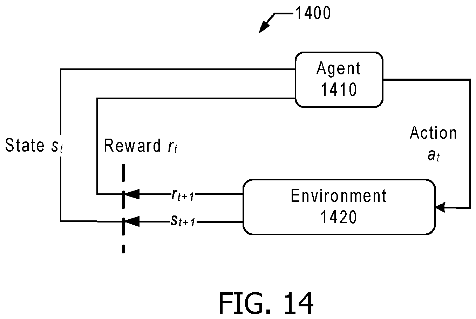

FIG. 1 shows an example end-to-end (e2e) two-sided AI/ML-based autoencoder architecture for CSI feedback, which may be also referred to as an end-to-end autoencoder based CSI feedback, which operates as follows: at the UE 802, a channel matrix measured with CSI-RS is input to a data preparation block, which may involve eigenvector derivation. An output of the data preparation block is provided to a data pre-processing block, which may include two-dimensional (2D) Fast Fourier Transform (FFT), normalization, complex-to-real conversion, and/or the like. An output of the data pre-processing block is provided to an encoder ML model, which may have an architecture and/or topology of any of the AI/ML aspects discussed herein (see e.g., Figures 13 and 14). An output of the encoder ML model is provided to a quantization block, where scalar or vector quantization can be applied. An output of the quantization block is transmitted over an air interface to the NAN 808 and is provided to a de-quantization block in the NAN 808, which converts bits back to numerical values. An output of the de-quantization block is provided to a decoder ML model, which may have an architecture and/or topology of any of the AI/ML aspects discussed herein (see e.g., Figures 13 and 14). An output of the decoder ML model is provided to a data post-processing block that undoes the pre-processing operations and/or performs various operations to obtain the contents of the CSI (e.g., one or more of channel quality indicator (CQI), precoding matrix indicator (PMI), CSI-RS resource indicator (CRI), SSB resource indicator (SSBRI), layer indicator (LI), rank indicator (RI), L1-RSRP, L1-SINR, CapabilityIndex, and/or the like), such as those described by [TS38214] or other 3GPP specifications.

The aforementioned blocks may include any combination or hardware (HW) and/or software (SW) elements. In some examples, one or more of the aforementioned blocks are implemented as individual HW circuits. In some examples, one or more of the aforementioned blocks are implemented are implemented as SW elements. In various implementations, one or more of the aforementioned blocks may be, or are part of, one or more functions, stages, SW components, SW engines, and/or hardware components, devices, or other elements.

Each of the blocks of the e2e two-sided AI/ML-based autoencoder architecture is included in model training and can affect the final model parameters and/or hyperparameters. A "model mismatch" may occur when the blocks used in UE-side encoder model training are not aligned with those used in the NAN-side decoder model training. Additionally or alternatively, a model mismatch may occur when the UE encoder model and/or the NAN decoder model perform(s) poorly on data that it has not seen before. As examples, a model mismatch could happen when a model was trained on a dataset that is different from the data that it is being evaluated on, a model was not trained with enough data, a model is not complex enough to capture the relationships in the data or identify patterns in the data, and/or the model overfits the training data. Examples of mitigation techniques for model mismatch include using a larger and/or more representative dataset to train the model, using a more complex model, adding new or alternative models to an ML pipeline or ML application, regularizing the model to prevent overfitting, and/or using a variety of evaluation metrics to assess the model's performance. When a model mismatch happens, joint inference over the UE encoder and/or the NAN decoder may fail. Therefore, a model mismatch is identified and rectified (e.g., according to the various embodiments discussed herein) before the UE encoder and/or the NAN decoder are put to use.

### 1.1.2. MODEL MISMATCH CHECK AND MODEL MISMATCH MITIGATION

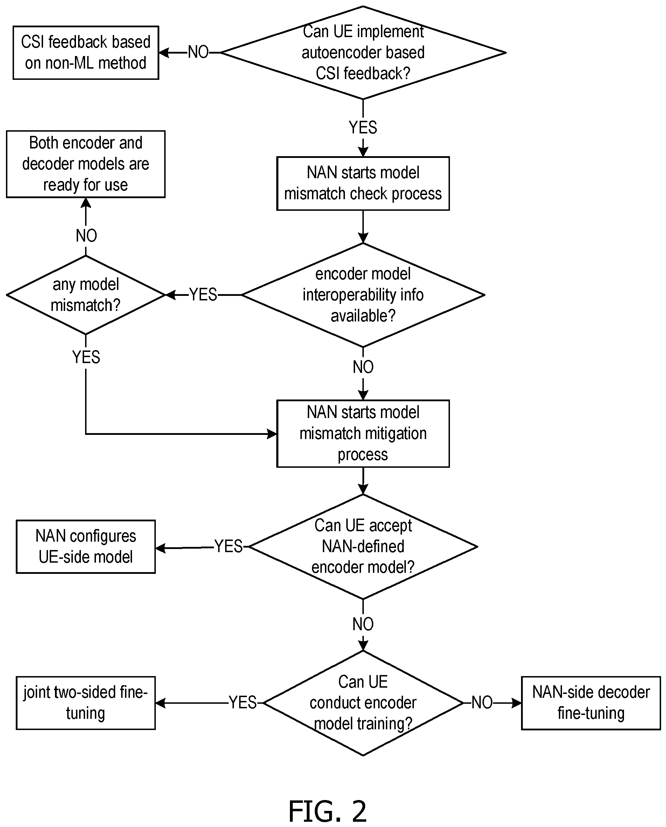

Model mismatch check and model mismatch mitigation are two processes started by NAN 808. FIG. 2 depicts the overall flowchart of these two processes. After NAN 808 is notified that UE 802 has the capability of implementing autoencoder based CSI feedback, NAN 808 first starts model mismatch check process, where the first step is to check if encoder model interoperability information is available. Encoder model interoperability information is to capture the scenario where UE vendors and NAN 808 vendors collaborate on model development and model training, and solve model mismatch prior to product deployment. Encoder model interoperability information can be used to disclose the information of this process, e.g., a model development ID that is agreed by both vendors. The detailed definition of encoder model interoperability information may be implementation-specific. If encoder model interoperability information is available, NAN 808 then checks if there is any model mismatch based on encoder model interoperability information. If there is no model mismatch, both UE-side encoder and NAN-side decoder can be directly put to use. On the other hand, if encoder model interoperability information is not available or NAN 808 determines there exists model mismatch based on encoder model interoperability information, NAN 808 starts mismatch mitigation process. In one embodiment, after entering mismatch mitigation process, NAN 808 first checks if UE 802 can accept a NAN-defined encoder model. If UE 802 can accept a NAN-defined model, NAN 808 adopts solution-1 where NAN 808 directly configures UE-side model. If UE 802 cannot accept a NAN-defined model, NAN 808 checks if UE 802 can conduct encoder model training. If UE 802 can conduct encoder model training, NAN 808 adopts solution-3 of joint two-sided tuning (e.g., both UE-side encoder and NAN-side decoder model are fine-tuned). If UE 802 cannot conduct encoder model training, NAN 808 adopts solution-2 of NAN-side decoder fine-tuning, i.e., UE-side encoder model is kept frozen.

It is worth mentioning that which solution to apply during the model mismatch mitigation process may be implementation specific. NAN 808 can follow every step shown in FIG. 2, but NAN 808 can also skip some steps. In another embodiment, after NAN 808 is notified that UE 802 cannot accept a NAN-defined model, NAN 808 can directly adopt solution-2 of NAN-side decoder fine-tuning without checking UE's 802 encoder model training capability.

### 1.1.3. UE CAPABILITY OF AUTOENCODER-BASED CSI FEEDBACK

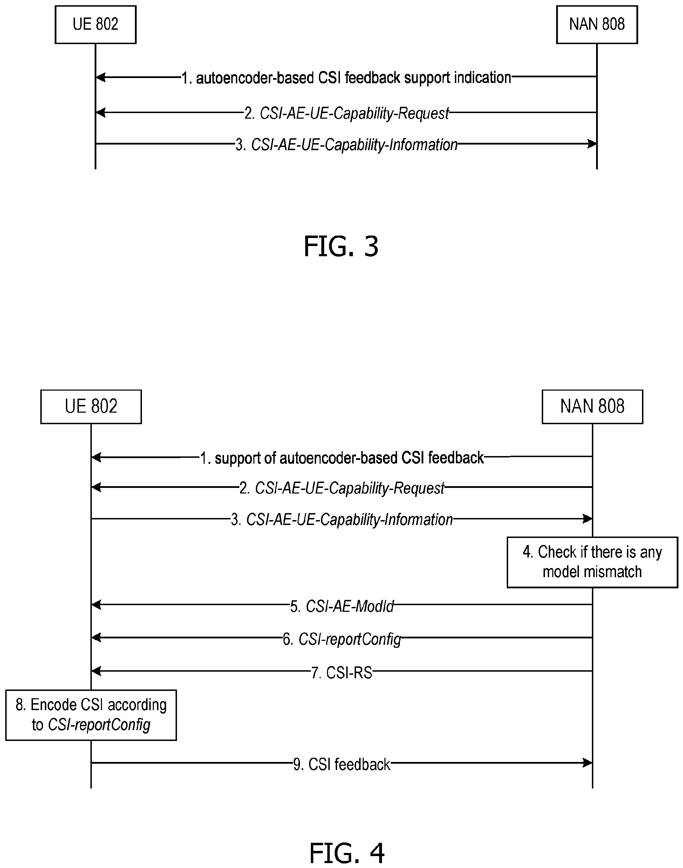

To enable NAN 808 to identify and mitigate model mismatch, the UE 802 reports its capability of autoencoder based CSI feedback, as shown by FIG. 3.

The procedure of FIG. 3 may operate as follows:
1. NAN 808 broadcasts its support of autoencoder-based CSI feedback (e.g., via higher layer signaling).
2. NAN 808 request UE's 802 capability of autoencoder-based CSI feedback using the *CSI-AE-UE-Capability-Request* IE.
3. UE 802 reports its capability of autoencoder-based CSI feedback using the *CSI-AE-UE-Capability-Information* IE.

In FIG. 3, the NAN 808 requests the UE capability of autoencoder-based CSI feedback via a *CSI-AE-UE-Capability-Request* IE (see e.g., Tables 1.1.3-1 and 1.1.3-2). In some embodiments, the *CSI-AE-UE-Capability-Request* IE can be part of the *UECapabilityEnquiry* message. The UE 802 reports its capability of autoencoder-based CSI feedback via *CSI-AE-UE-Capability-Information* IE (see e.g., Table 1.1.3-3 and 1.1.3-4). In some embodiments, the *CSI-AE-UE-Capability-Information* IE can be part of the *UECapabilityInformation* message

The *CSI-AE-UE-Capability-Request* IE is used to indicate what kind of information the UE 802 reports to the NAN 808 within *CSI-AE-UE-Capability-Information.*

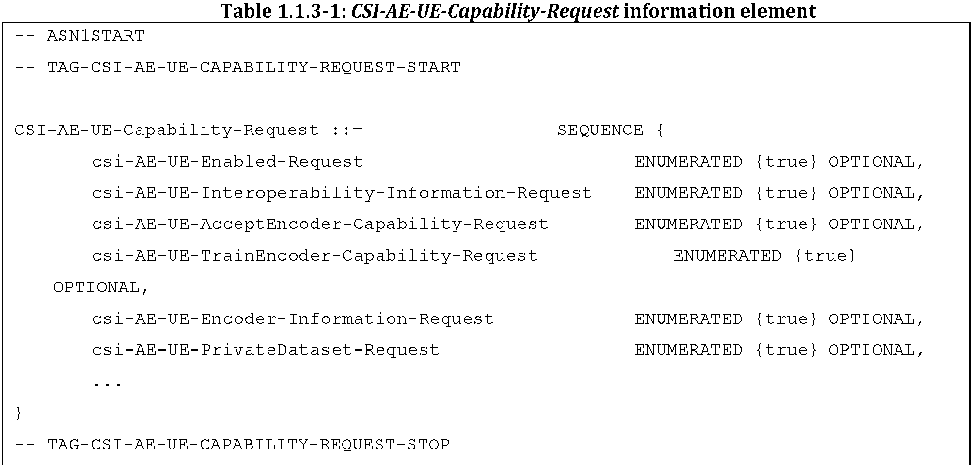

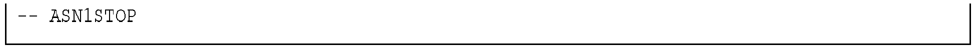

**Table 1.1.3-2: CSI-AE-UE-Capability-Request field descriptions**

| ***csi-AE-UE-Enabled-Request*** |
|---|
| This field is used to indicate whether the UE shall report autoencoder based CSI feedback is enabled/disabled at the UE. |

| ***csi-AE-UE-Interoperability-Information-Request*** |
|---|
| This field is used to indicate whether the UE shall report encoder model interoperability information. |

| ***csi-AE-UE-AcceptEncoder-Capability-Request*** |
|---|
| This field is used to indicated whether the UE shall report *CSI-AE-UE-AcceptEncoder-Capability.* |

| ***csi-AE-UE-TrainEncoder-Capability-Request*** |
|---|
| This field is used to indicate whether the UE shall report *CSI-AE-UE-TrainEncoder-Capability.* |

| ***csi-AE-UE-Encoder-Information-Request*** |
|---|
| This field is used to indicate whether the UE shall report *CSI-AE-UE-Encoder-Information.* |

| ***csi-AE-UE-PrivateDataset-Request*** |
|---|
| This field is used to indicate whether the UE shall report *CSI-AE-UE-PrivateDataset.* |

The *CSI-AE-UE-Capability-Information* IE is used to report UE's 802 information about autoencoder based CSI feedback. In some implementations, the presence of the fields depends upon *CSI AE-UE-Capability-Request,* such as according to the following examples:

In a first example, if the *csi-AE-UE-Enabled-Request* is set to *true,* the UE 802 includes *csi-AE-UE-Enabled.*

In a second example, if the *csi-AE-UE-Interoperability-Information-Request* is set to *true,* the UE 802 includes *csi-AE-UE-Interoperability-Information* in the *CSI-AE-UE-Capability-Information.* Additionally or alternatively, if the *csi-AE-UE-Interoperability-Information-Request* is set to *true,* the UE 802 includes *csi-AE-UE-Interoperability-Information* in the *UEAssistanceInformation* message.

In a third example, if *csi-AE-UE-AcceptEncoder-Capability-Request* is set to *true,* the UE 802 includes *csi-AE-UE-AcceptEncoder-Capability.*

In a fourth example, if *csi-AE-UE-TrainEncoder-Capability-Request* is set to *true,* the UE 802 includes *csi-AE-UE-TrainEncoder-Capability.*

In a fifth example, if *csi-AE-UE-Encoder-Information-Request* is set to *true,* the UE 802 includes *csi-AE-UE-Encoder-Information.*

In a sixth example, if *csi-AE-UE-PrivateDataset-Request* is set to *true,* then the UE 802 includes *csi-AE-UE-PrivateDatase t.*

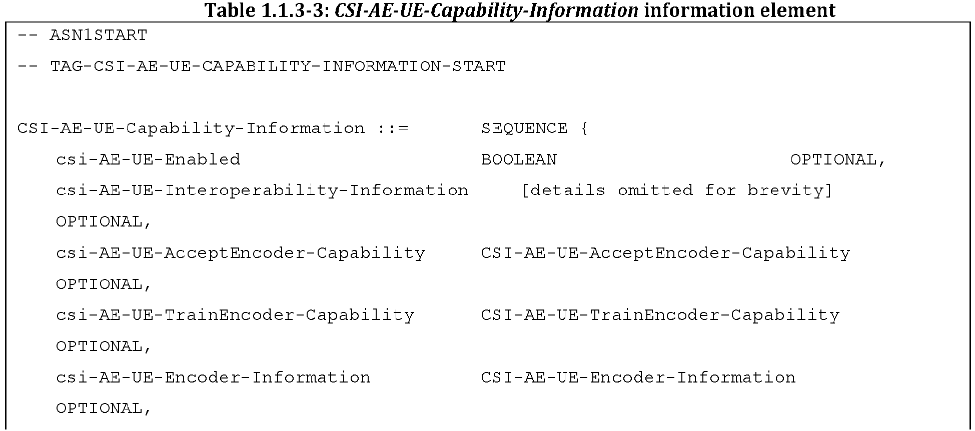

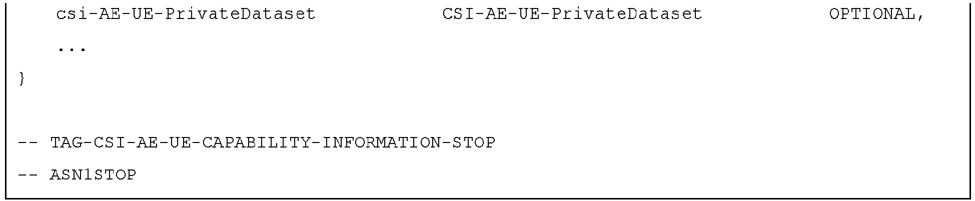

**Table 1.1.3-4: CSI-AE-UE-Capability-Information field descriptions**

| ***csi-AE-UE-Enabled*** |
|---|
| This field is used to indicate whether autoencoder based CSI feedback is enabled/disabled at the UE. This field only presents if *csi-AE-UE-Enabled-Request* is set to *true.* |

| ***csi-AE-UE-Interoperability-Information*** |
|---|
| This field is used to report encoder model interoperability information. This field only presents if *csi-AE-UE-Interoperability-Information-Request* is set to *true.* |

| ***csi-AE-UE-AcceptEncoder-Capability*** |
|---|
| This field only presents if *csi-AE-UE-AcceptEncoder-Capability-Request* is set to *true.* |

| ***csi-AE-UE-TrainEncoder-Capability*** |
|---|
| This field only presents if *csi-AE-UE-TrainEncoder-Capability-Request* is set to *true.* |

| ***csi-AE-UE-Encoder-Information*** |
|---|
| This field only presents if *csi-AE-UE-Encoder-Information-Request* is set to *true.* |

| ***csi-AE-UE-PrivateDataset*** |
|---|
| This field only presents if *csi-AE-UE-PrivateDataset-Request* is set to *true.* |

The *CSI AE-UE AcceptEncoder-Capability* IE is used to describe UE's 802 capability of accepting NAN-defined encoder.

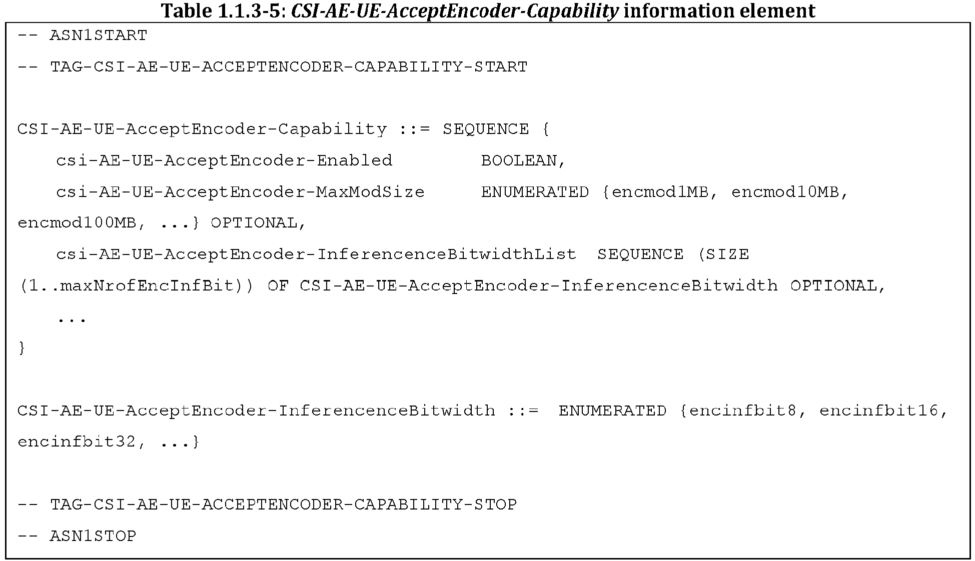

**Table 1.1.3-6: CSI-AE-UE-AcceptEncoder-Capability field descriptions**

| ***csi-AE-UE-AcceptEncoder-Enabled*** |
|---|
| This field is used to indicate whether the UE support accepting BS-defined encoder. |

| ***csi-AE-UE-AcceptEncoder-MaxModSize*** |
|---|
| This field is used to indicate the maximum size of encoder ML model that can be supported by the UE. Value *encmod1MB* corresponds to encoder ML model size of 1 Megabyte, value *encmod10MB* corresponds to encoder ML model size of 10 Megabyte and so on. |

| ***csi-AE-UE-AcceptEncoder-InferencenceBitwidthList*** |
|---|
| This field is used to indicate a list of encoder ML model inference precisions that can be supported by the UE. |

The *CSI-AE-UE-AcceptEncoder-InferencenceBitwidth* IE is used to indicate the encoder ML model inference precision. Value *encinfbit8* corresponds to 8-bit encoder ML model inference, value *encinfbit16* corresponds to 16-bit encoder ML model inference and so on.

*CSI-AE-UE-TrainEncoder-Capability* IE is used to describe UE's 802 capability of encoder training.

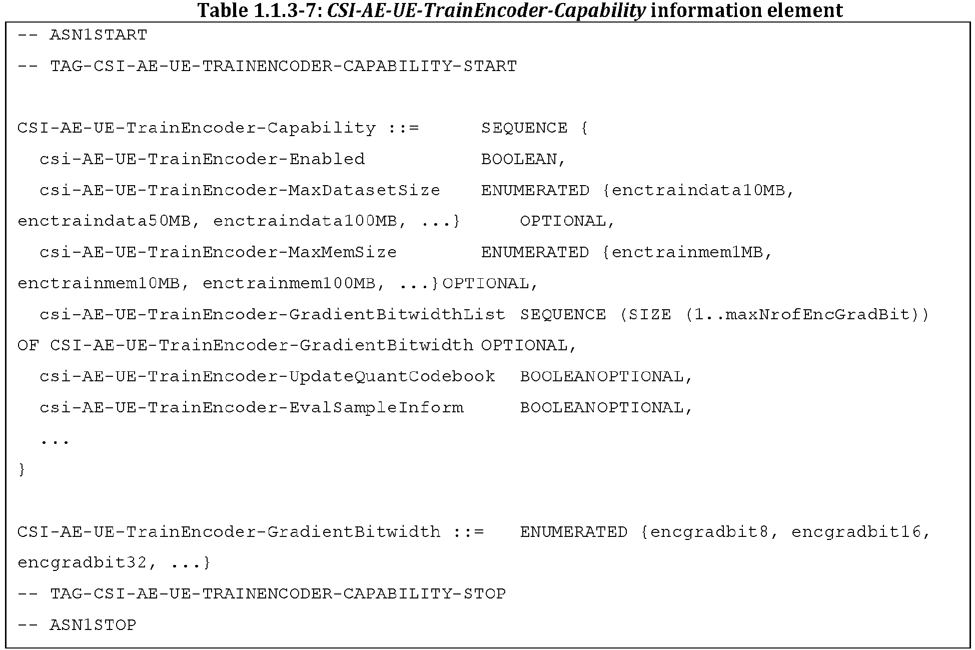

**Table 1.1.3-8: CSI-AE-UE-TrainEncoder-Capability field descriptions**

| ***csi-AE-UE-TrainEncoder-Enabled*** |
|---|
| This field is used to indicate whether the UE supports encoder training. |

| ***csi-AE-UE-TrainEncoder-MaxDatasetSize*** |
|---|
| This field is used to indicate the maximum dataset size of encoder training that can be supported by the UE. Value *enctraindata10MB* corresponds to a dataset of 10 Megabyte, value *enctraindata50MB* corresponds to a dataset of 50 Megabyte and so on. |

| ***csi-AE-UE-TrainEncoder-MaxMem Size*** |
|---|
| This field is used to indicate the maximum memory size that can be supported by the UE for encoder training. Value *enctrainmem1MB* corresponds to a memory size of 1 Megabyte, value *enctrainmem10MB* corresponds to a memory size of 10 Megabyte and so on. |

| ***csi-AE-UE-TrainEncoder-GradientBitwidthList*** |
|---|
| This field is used to indicate a list of gradient precisions of encoder training that can be supported by the UE. |

| ***csi-AE-UE-TrainEncoder-UpdateQuantCodebook*** |
|---|
| This field is used to indicate whether the UE support updating quantization codebook for encoder output |
| during training. |

| ***csi-AE-UE-TrainEncoder-EvalSampleInform*** |
|---|
| This field is used to indicate whether the UE support evaluating informativeness of training samples. |

The *CSI-AE-UE-TrainEncoder-GradientBitwidth* IE is used to indicate the gradient precision of encoder training. Value *encgradbit8* corresponds to 8-bit gradients, value *encgradbit16* corresponds to 16-bit gradients and so on.

The *CSI-AE-UE-Encoder-Information* IE is used to describe the information of UE-side encoder.

| **Table 1.1.3-9: *CSI-AE-UE-Encoder-Information* information element** | | | | | |
|---|---|---|---|---|---|
| -- ASN1START | | | | | |
| -- TAG-CSI-AE-UE-ENCODER-INFORMATION-START | | | | | |
| CSI-AE-UE-Encoder-Information ::= | | | SEQUENCE { | | |
| | csi-AE-UE-Encoder-Backbone | ENUMERATED {mlp, cnn, transformer, ...} | | | |
| | csi-AE-UE-Encoder-InputType | | | ENUMERATED {raw, eig, ...}, | |
| | csi-AE-UE-Encoder-Preprocess | | | BIT STRING (SIZE (4)), | |
| | csi-AE-UE-Encoder-OutputConfigList | | | | SEQUENCE (SIZE (1..maxNrofEncOutputConfig)) |
| OF csi-AE-UE-Encoder-OutputConfig, | | | | | |
| | | | | | |
| } | | | | | |
| -- TAG-CSI-AE-UE-ENCODER-INFORMATION-STOP | | | | | |
| -- ASN1STOP | | | | | |

**Table 1.1.3-10: CSI-AE-UE-Encoder-Information field descriptions**

| ***csi-AE-UE-Encoder-Backbone*** |
|---|
| This field is used to indicate the backbone of encoder ML model at UE-side. Value *mlp* corresponds to multilayer perceptron (MLP), value *cnn* corresponds to convolutional neural network (CNN), and value *transformer* corresponds to Transformer. |

| ***csi-AE-UE-Encoder-InputType*** |
|---|
| This field is used to indicate the input type prior to data pre-processing block at UE-side. Value *raw* corresponds to raw channel matrix and value *eig* corresponds to eigenvectors. |

| ***csi-AE-UE-Encoder-Preprocess*** |
|---|
| This field is used to indicate the data pre-processing block prior to encoder ML model at UE-side. The value refers to the index of a pre-defined table. One example of such a table is provided in Table 1.1.3-11. |

| ***csi-AE-UE-Encoder-OutputConfigList*** |
|---|
| This field is used to indicate a list of supported encoder output configurations at UE-side. |

**Table 1.1.3-11: Table for csi-AE-UE-Encoder-Preprocess field**

| **Index** | **Data pre-processing block** |
|---|---|
| 0 | Complex-to-real conversion by adding a channel dimension |
| 1 | Complex-to-real conversion by concatenating values in the space dimension |
| 2 | Complex-to-real conversion by adding a channel dimension + Normalization by Frobenius norm |
| 3 | Complex-to-real conversion by concatenating values in the space dimension + Normalization by Frobenius norm |
| 4 | 2D FFT + Complex-to-real conversion by adding a channel dimension |
| 5 | 2D FFT + Complex-to-real conversion by concatenating values in the space dimension |
| 6 | 2D FFT + Complex-to-real conversion by adding a channel dimension + Normalization by Frobenius norm |
| 7 | 2D FFT + Complex-to-real conversion by concatenating values in the space dimension + Normalization by Frobenius norm |
| 8 | 2D FFT + Down-sampling in delay domain by extracting central bins + Complex-to-real conversion by adding a channel dimension |
| 9 | 2D FFT + Down-sampling in delay domain by extracting central bins + Complex-to-real conversion by concatenating values in the space dimension |
| 10 | 2D FFT + Down-sampling in delay domain by extracting central bins + Complex-to-real conversion by adding a channel dimension + Normalization by Frobenius norm |
| 11 | 2D FFT + Down-sampling in delay domain by extracting central bins + Complex-to-real conversion by concatenating values in the space dimension + Normalization by Frobenius norm |
| 12 | 2D FFT + Down-sampling in delay domain by extracting bins with the largest absolute values + Complex-to-real conversion by adding a channel dimension |
| 13 | 2D FFT + Down-sampling in delay domain by extracting bins with the largest absolute values + Complex-to-real conversion by concatenating values in the space dimension |
| 14 | 2D FFT + Down-sampling in delay domain by extracting bins with the largest absolute values + Complex-to-real conversion by adding a channel dimension + Normalization by Frobenius norm |
| 15 | 2D FFT + Down-sampling in delay domain by extracting bins with the largest absolute values + Complex-to-real conversion by concatenating values in the space dimension + Normalization by Frobenius norm |

The *CSI-AE-UE-Encoder-OutputConfig* IE is used to describe an encoder output configuration. It is defined to capture both scalar quantization and vector quantization applied at encoder output. For vector quantization, encoder outputs are separated into encoder output groups and quantization is performed per group. Scalar quantization can be viewed as a special case of vector quantization where the width of one encoder output group is 1. In one embodiment, each encoder output group has the same width, the same number of bits and the same quantization codebook.

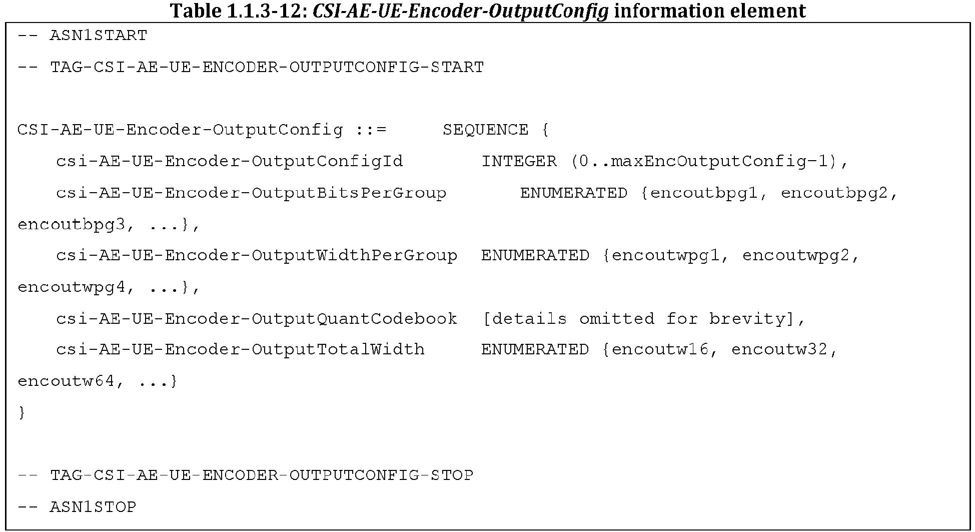

**Table 1.1.3-13: CSI-AE-UE-Encoder-OutputConfig field descriptions**

| ***csi-AE-UE-Encoder-OutputConfigld*** |
|---|
| This field is to indicate the ID of the encoder output configuration. It is an integer and UE is responsible for generating the ID. |

| ***csi-AE-UE-Encoder-OutputBitsPerGroup*** |
|---|
| This field is used to indicate the number of bits for one encoder output group at UE-side. Value *encoutbpg1* corresponds to 1 bit per encoder output group, value *encoutbpg2* corresponds to 2 bits per encoder output group and so on. |

| ***csi-AE-UE-Encoder-OutputWidthPerGroup*** |
|---|
| This field is used to indicate the width of one encoder output group at UE-side. Value *encoutwpg1* corresponds to encoder output width of 1 per encoder output group, value *encoutwpg2* corresponds to encoder output width of 2 per encoder output group and so on. |

| ***csi-AE-UE-Encoder-OutputQuantCodebook*** |
|---|
| This field is used to indicate the quantization codebook for one encoder output group at UE-side. |

| ***csi-AE-UE-Encoder-OutputTotaIWidth*** |
|---|
| This field is used to indicate the total width of encoder output at UE-side. Value *encoutw16* corresponds to total encoder output width of 16, value *encoutw32* corresponds to total encoder output width of 32 and so on. |

The *CSI-AE-UE-PrivateDataset* IE is used to describe the dataset that is managed by UE.

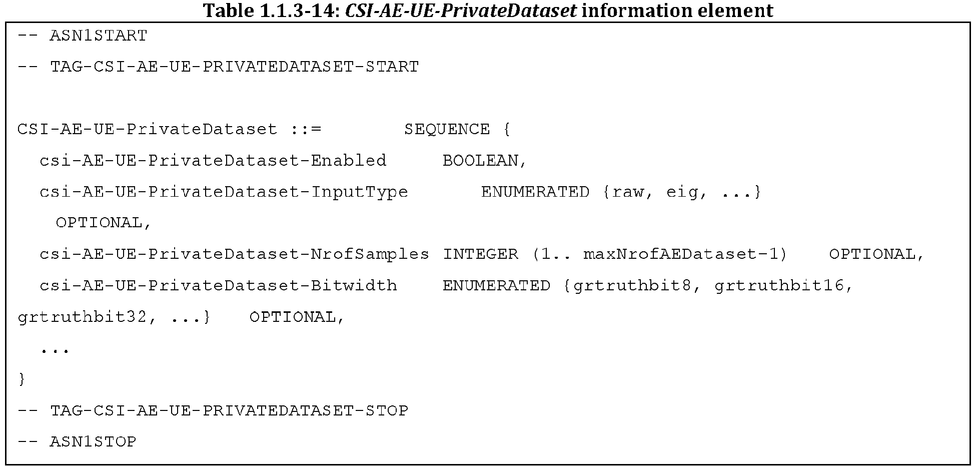

**Table 1.1.3-15: CSI-AE-UE-PrivateDataset field descriptions**

| ***csi-AE-UE-PrivateDataset-Enabled*** |
|---|
| This field is used to indicate whether the UE owns a dataset that is managed by the UE. |

| ***csi-AE-UE-PrivateDataset-InputType*** |
|---|
| This field is used to indicate the data type of the data samples of the dataset managed by the UE. |

| ***csi-AE-UE-PrivateDataset-NrofSamples*** |
|---|
| This field is used to indicate the number of samples of the dataset managed by the UE. |

| ***csi-AE-UE-PrivateDataset-Bitwidth*** |
|---|
| This field is used to indicate the precision of the ground truth values of the data samples of the dataset managed by the UE. Value *grtruthbit8* corresponds to 8-bit ground truth values, *grtruthbit16* corresponds to 16-bit ground truth values and so on. |

### 1.1.4. No MODEL MISMATCH

FIG. 4 depicts an example procedure where a NAN 808 determines that there is no mismatch model based on encoder model interoperability information.

The procedure of FIG. 4 may operate as follows:
1. NAN 808 broadcasts its support of autoencoder-based CSI feedback.
2. NAN 808 request UE's capability of autoencoder-based CSI feedback using the *CSI-AE-UE-Capability-Request* IE.
3. UE 802 reports its capability of autoencoder-based CSI feedback *CSI-AE-UE-Capability-Information.*
4. NAN 808 checks if there is any model mismatch.
5. NAN 808 configures model ID *CSI-AE-ModId.*
6. NAN 808 configures CSI report *CSI-reportConfig.* See e.g., [TS38214] and [TS38331].
7. NAN 808 transmits CSI-RS. See e.g., [TS38214].
8. UE 802 measures the CSI-RS, and generates and encodes CSI according to *CSI-reportConfig.* See e.g., [TS38214].
9. UE 802 reports CSI feedback. See e.g., [TS38214].

In FIG. 4, after checking encoder model interoperability information and determining that there is no model mismatch, the NAN 808 configures a model ID via the *CSI-AE-ModId* field/IE. In some examples, a new field/IE *csi-AE-ModId* (see e.g., Tables 1.1.4-1 and 1.1.4-2) is added to a CSI report configuration (e.g., *CSI-reportConfig* shown/described by Tables 1.1.4-3 and 1.1.4-4) to indicate the model ID of the autoencoder that the UE 802 is to use to generate the CSI report. Upon receiving *CSI-reportConfig* with a *csi-AE-ModId* that matches the model ID of the encoder model that the UE 802 owns, the UE 802 assumes that the encoder model can be put to use and applies the encoder for CSI reporting. If there is more than one encoder output configurations, such as adjustable quantization bit-width at encoder output, it is also specified within *CSI-reportConfig.* Details of the control signaling and information elements related to the encoder output configuration are discussed in U.S. Provisional App. No. 63/415,190 filed October 11, 2022 ("[3]"), the contents of which are hereby incorporated by reference in its entirety. The UE 802 measures the CSI-RS based on the CSI configuration, and generates and encodes CSI with the encoder.

**Table 1.1.4-1: CSI-AE-ModId information element**

| |
|---|
| ```
 -- ASN1 START
 -- TAG-CSI-AE-MODID-START
 CSI-AE-ModId ::= INTEGER (0..maxNrofAEMods-1)
 -- TAG-CSI-AE-MODID-STOP
 -- ASN1STOP
``` |

**Table 1.1.4-2: CSI-AE-Modld field descriptions**

| ***CSI-AE-Modld*** |
|---|
| This field is used to indicate the model ID of the autoencoder. |

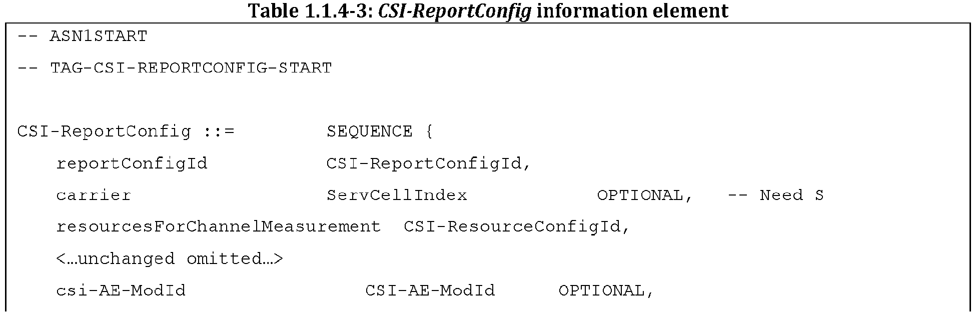

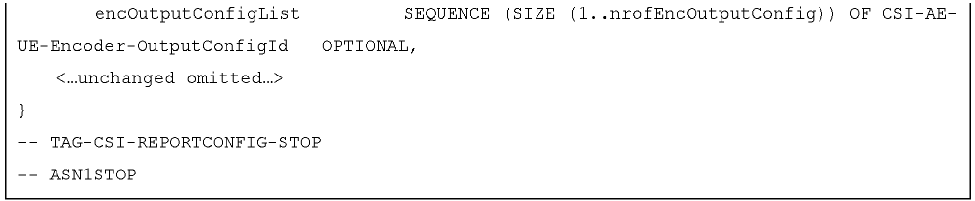

**Table 1.1.4-4: CSI-ReportConfig field descriptions**

| ***csi-AE-ModId*** |
|---|
| This field is used to indicate the *CSI-AE-ModId* of the autoencoder that the UE shall use for the CSI report. |

### 1.1.5. NAN CONFIGURATION OF UE-SIDE MODEL

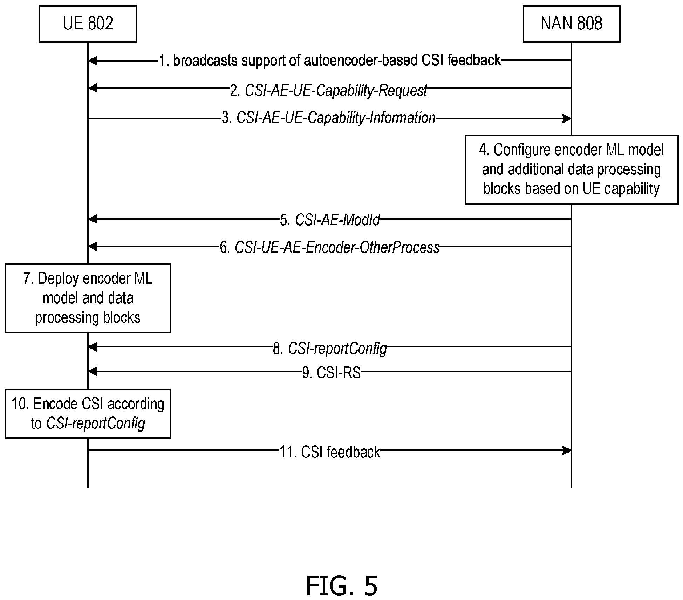

FIG. 5 depicts an example procedure of of NAN 808 configuring UE-side model.

The procedure of FIG. 5 may operate as follows:
1. NAN 808 broadcasts its support of autoencoder-based CSI feedback.
2. NAN 808 request UE's 802 capability of autoencoder-based CSI feedback using the *CSI-AE-UE-Capability-RequestIE.*
3. UE 802 reports capability of autoencoder-based CSI feedback using the *CSI-AE-UE-Capability-Information* IE.
4. NAN 808 configures encoder ML model and zero or more additional data processing blocks based on the UE's 802 capability e.g., based on the *CSI-AE-UE-Capability-Information* IE obtained at step 3).
5. NAN 808 delivers encoder ML model and configures model ID using the *CSI*-AE-*ModId* IE.
6. NAN 808 configures other data processing blocks at UE-side via *CSI-UE-AE-Encoder-OtherProcess.*
7. UE 802 deploys encoder ML model and data processing blocks.
8. NAN 808 configures CSI report using a *CSI-reportConfig* IE. See e.g., [TS38214] and [TS38331]
9. NAN 808 transmits CSI-RS. See e.g., [TS38214].
10. UE 802 measures the CSI-RS, generates and encodes CSI according to the *CSI-reportConfig* IE. See e.g., [TS38214].
11. UE 802 reports CSI feedback. See e.g., [TS38214].

In FIG. 5, the NAN 808 configures an encoder ML model and zero or more other data processing functions according to UE's 802 capability reported via the *csi-AE-UE-AcceptEncoder-Capability* IE. The NAN 808 delivers the encoder ML model and/or configures a model ID via the *CSI-AE-ModId* IE, and specifies other data processing blocks via *csi-AE-UE-Encoder-OtherProcess* (see e.g., Tables 1.1.5-1 and 1.1.5-2). Encoder ML model delivery can be implementation-specific, based on use case, and/or vary from embodiment to embodiment. In some examples, the ML encoder model is sent or streamed to the UE 802 in a suitable format and/or using suitable compression techniques. In some examples, the UE 802 is provided a reference, identifier, network address, and/or pointer (e.g., in the *CSI-AE-ModId* IE) to a location where the ML encoder model is stored, and the UE 802 is configured to obtain the ML encoder model using the provided reference, identifier, network address, and/or pointer. Additionally, the UE 802 is provided with access credentials (e.g., password, signature, digital certificate, and/or the like) to obtain the ML encoder model from the storage location. In either implementation, the UE 802 deploys the encoder ML model and other data processing blocks. Then both UE-side encoder and NAN-side decoder can be put to use.

The *csi-AE-UE-Encoder-OtherProcess* IE is defined to specify other data processing blocks apart from encoder ML model at UE-side.

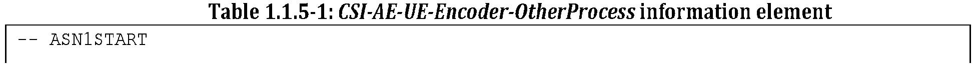

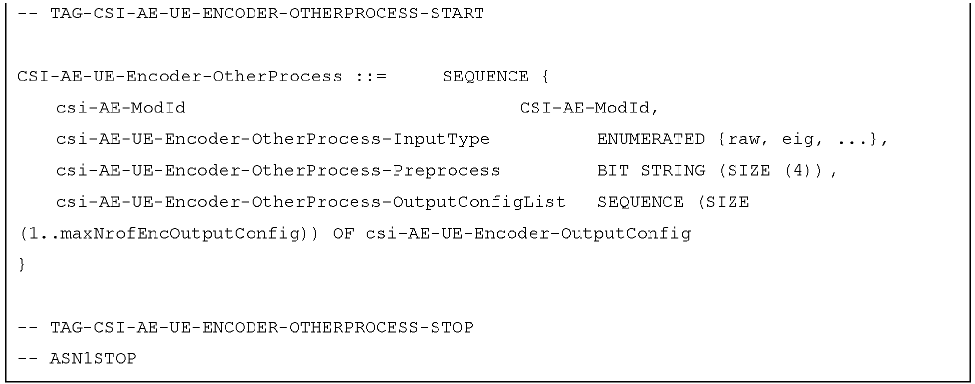

**Table 1.1.5-2: CSI-AE-UE-Encoder-OtherProcess field descriptions**

| ***csi-AE-Modld*** |
|---|
| This field is used to indicate the model ID of the autoencoder that data processing blocks are applied to. |

| ***csi-AE-UE-Encoder-OtherProcess-InputType*** |
|---|
| This field is used to indicate the input type prior to data pre-processing block at UE-side. |

| ***csi-AE-UE-Encoder-OtherProcess-Preprocess*** |
|---|
| This field is used to indicate the data pre-processing block prior to encoder ML model at UE-side. The value refers to the index of a pre-defined table. One example of such a table is provided in Table 1.1.3-11. |

| ***csi-AE-UE-Encoder-OtherProcess-OutputConfigList*** |
|---|
| This field is used to indicate a list of encoder output configurations at UE-side. |

### 1.1.6. NAN-SIDE DECODER FINE-TUNING

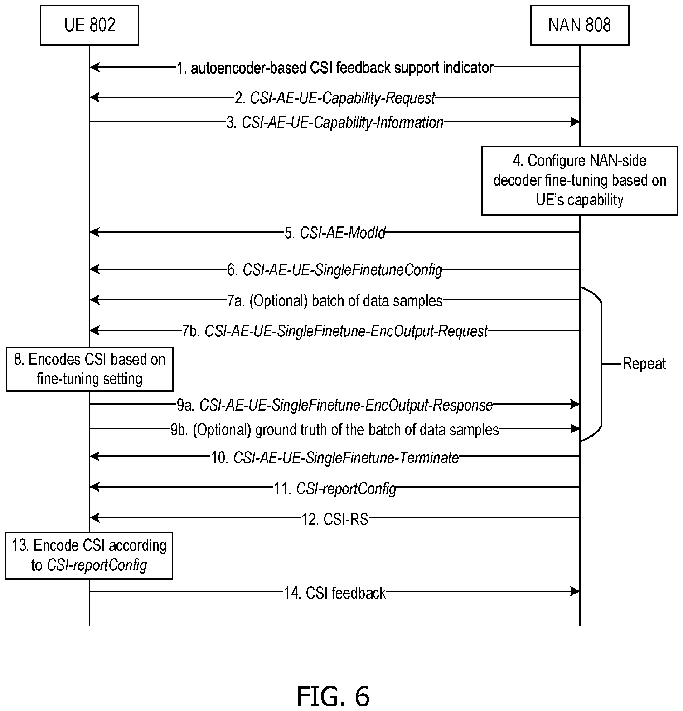

FIG. 6 depicts an example procedure of NAN-side decoder fine-tuning.

The procedure of FIG. 6 may operate as follows:
1. NAN 808 broadcasts its support of autoencoder-based CSI feedback.
2. NAN 808 request UE's capability of autoencoder-based CSI feedback *CSI-AE-UE-Capability-Request.*
3. UE 802 reports its capability of autoencoder-based CSI feedback *CSI-AE-UE-Capability-Information.*
4. NAN 808 configures NAN-side decoder fine-tuning based on UE's 802 capability (e.g., based on the *CSI-AE-UE-Capability-Information* IE obtained at step 3).
5. NAN 808 configures model ID using the *CSI*-AE-*ModId* IE/field.
6. NAN 808 configures NAN-side decoder fine-tuning *CSI-AE-UE-SingleFinetuneConfig.*
7a-9b. Repeat 0 or more times.
7a. (Optional) NAN delivers a batch of data samples.
7b. NAN 808 queries UE-side encoder output on a batch of data samples *CSI-AE-UE-SingleFinetune-EncOutput-Request*.
8. UE 802 encodes CSI based on fine-tuning setting.
9a. UE 802 reports encoder output on the batch of data samples using the *CSI-AE-UE-SingleFinetune-EncOutput-Response* IE.
9b. (Optional) UE 802 delivers ground truth of the batch of data samples.
10. NAN 808 notifies UE 802 of the termination of NAN-side decoder fine-tuning *CSI-AE-UE-SingleFinetune-Terminate.* In some examples, the NAN-side decoder fine-tuning terminates when the encoder and/or decoder models converge.
11. NAN 808 configures CSI report *CSI-reportConfig.* See e.g., [TS38214] and [TS38331].
12. NAN 808 transmits CSI-RS. See e.g., [TS38214].
13. UE 802 encodes CSI according to *CSI-reportConfig.* See e.g., [TS38214].
14. UE 802 reports CSI feedback. See e.g., [TS38214].

In FIG. 6, after NAN 808 decides to mitigate model mismatch, the NAN 808 configures a model ID via *CSI*-*AE*-*ModId* and configures NAN-side decoder fine-tuning setting via the *CSI-AE-UE-SingleFinetuneConfig* IE (see e.g., Tables 1.1.6-1 and 1.1.6-2).

Steps 7-9 are for decoder-side fine-tuning and are repeated for every iteration of fine-tuning. For every iteration, the NAN 808 queries the encoder output on a batch of data samples via the *CSI AE-UE-SingleFinetune-EncOutput-Request* IE (see e.g., Tables 1.1.6-3 and 1.1.6-4), the UE 802 encodes CSI according to fine-tuning setting and reports encoder output to NAN 808 via *CSI-AE-UE-SingleFinetune-EncOutput-Response* IE (see e.g., Tables 1.1.6-5, 1.1.6-6, 1.1.6-7, and 1.1.6-8). When NAN 808 determines to terminate NAN-side decoder fine-tuning, it sends *CSI-AE-UE-SingleFinetune-Terminate* IE with a *csi-AE-ModId* matched with the one specified via *CSI-AE-UE-SingleFinetuneConfig* to UE 802 to notify the termination of NAN-side decoder fine-tuning.

Within *CSI-AE-UE-SingleFinetuneConfig* IE, there is a field *csi-AE-UE-SingleFinetune-Dataset* to indicate the dataset used for decoder-side fine tuning. If the dataset defined by *csi-AE-UE-SingleFinetune-Dataset* is a dataset managed by NAN 808, then NAN 808 needs to deliver the ground truth to UE 802 in step 7a, which is used as the UE-side input. If the dataset defined by *csi-AE-UE-SingleFinetune-Dataset* is a dataset managed by the UE 802, then the UE 802 needs to deliver the ground truth values to NAN 808 in step 9b.

The *CSI-AE-UE-SingleFinetuneConfig* IE is to define the setting of NAN-side decoder fine-tuning.

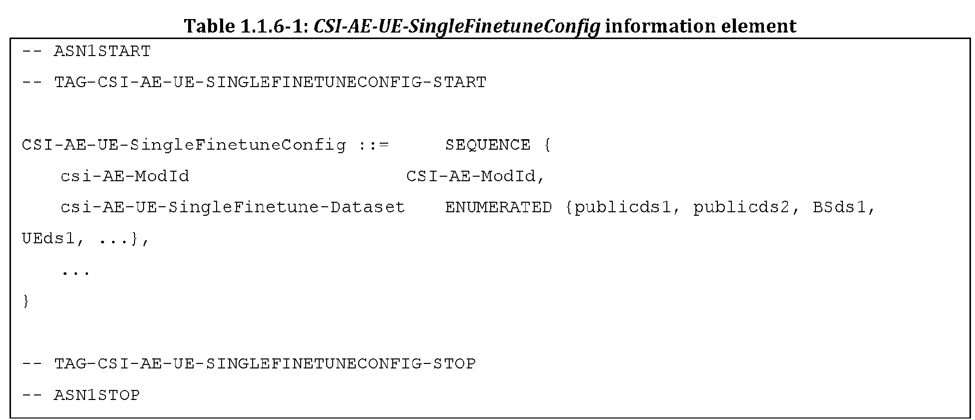

**Table 1.1.6-2: CSI-AE-UE-SingleFinetuneConfig field descriptions**

| ***csi-AE-Modld*** |
|---|
| This field is used to indicate the model ID of the autoencoder that decoder-side fine-tuning is applied to. |

| ***csi-AE-UE-SingleFinetune-Dataset*** |
|---|
| This field is used to indicate the dataset for decoder-side fine-tuning. Value *publicds1* corresponds to a public data that both UE and BS can access, value *BSds1* corresponds to a dataset managed by BS, and value *UEds1* corresponds to a dataset managed by the UE. Only when *csi-AE-UE-PrivateDataset-Enabled* is set to *true* in *csi-AE-UE-PrivateDataset,* can this field be set to a dataset managed by the UE. |

*CSI-AE-UE-SingleFinetune-EncOutput-Request* IE is to define the request made by the NAN 808 to query the UE-side encoder output on a batch of data samples.

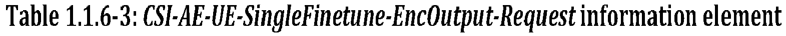

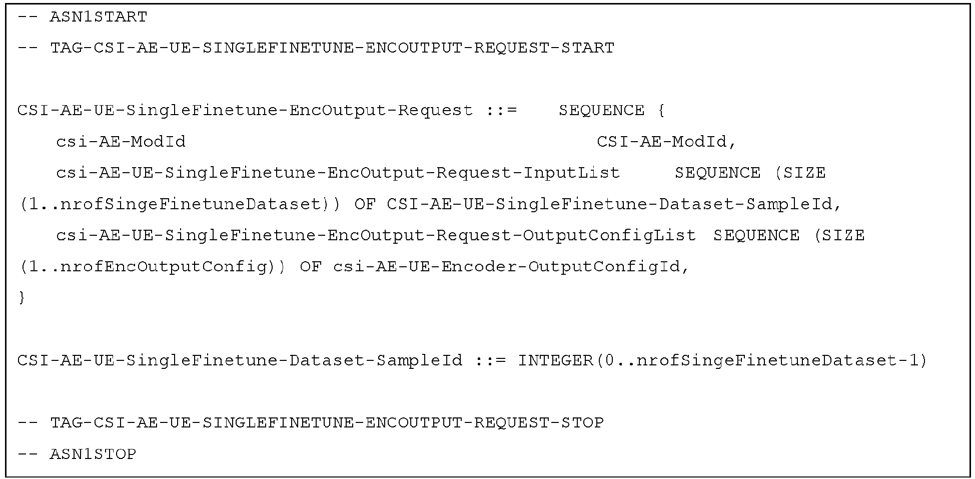

**Table 1.1.6-4: CSI-AE-UE-SingleFinetune-EncOutput-Request field descriptions**

| ***csi-AE-ModId*** |
|---|
| This field is used to indicate the model ID of the autoencoder that the request on encoder output is made. |

| ***csi-AE-UE-SingleFinetune-EncOutput-Request-InputList*** |
|---|
| This field is used to indicate a list of in data samples whose encoder output should be reported by the UE. Every element in the list is the index of the data sample. The length of the sequence has to be less than or equal to *nrofSingeFinetuneDataset*, the number of data samples in the *csi-AE-UE-SingleFinetune-Dataset.* |

| ***csi-AE-UE-SingleFinetune-EncOutput-Request-OutputConfigList*** |
|---|
| This field is used to indicate a list of encoder output configurations for the requested data samples. It applies to all the data samples indicated in *csi-AE-UE-SingleFinetune-EncOutput-Request-InputList.* The length of the sequence has to be less than or equal to *nrofEncOutputConfig,* the number of encoder output configurations supported by the UE, i.e., the length of *csi-AE-UE-Encoder-OutputConfigList* in *CSI-AE-UE-Encoder-Information.* |

*CSI-AE-UE-SingleFinetune-EncOutput-Response* IE is to define the response from the UE of the UE-side encoder output on the batch of data samples. It includes a list of *CSI-AE-UE-SingleFinetune-EncOutput-Response-Element,* and the length of the list is equal to the *nrofSingleFinetune-EncOutput-Request-InputList,* the number of data samples requested by the NAN 808 via *CSI-AE-UE-SingleFinetune-EncOutput-Request.*

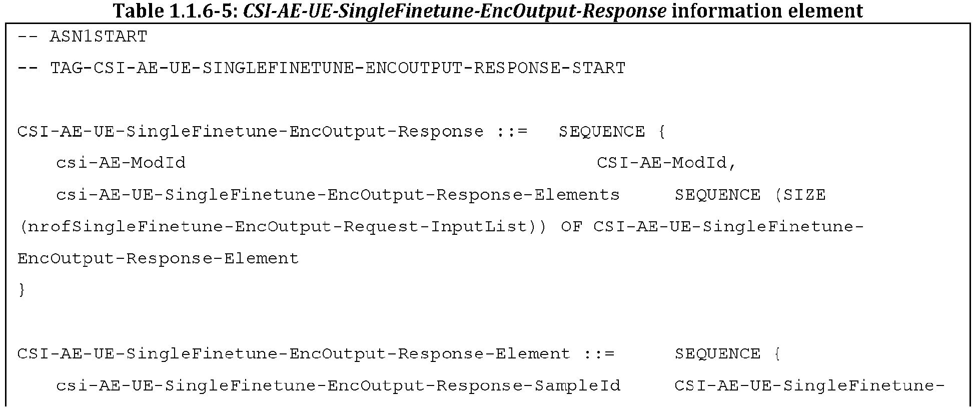

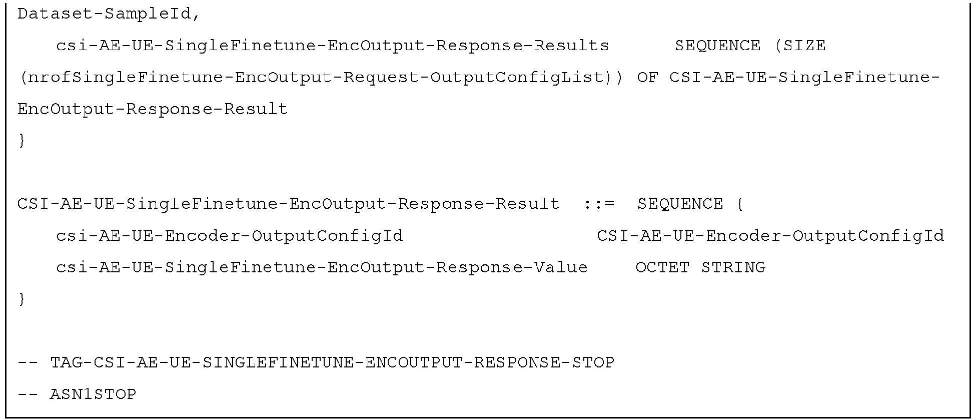

**Table 1.1.6-6: CSI-AE-UE-SingleFinetune-EncOutput-Response field descriptions**

| ***csi-AE-ModId*** |
|---|
| This field is used to indicate the model ID of the autoencoder that generates the encoder output. |

**Table 1.1.6-7: CSI-AE-UE-SingleFinetune-EncOutput-Response-Element field descriptions**

| ***csi-AE-UE-SingleFinetune-EncOutput-Response-Sampleld*** |
|---|
| This field is used to indicate the index of the data sample whose encoder output is reported. |

| ***CSI-AE-UE-SingleFinetune-EncOutput-Response-Results*** |
|---|
| This field is used to indicate a list of encoder outputs. The length of the list is equal to *nrofSingleFinetune-EncOutput-Request-OutputConfigList,* the length of *csi-AE-UE-SingleFinetune-EncOutput-Request-OutputConfigList* in *CSI-AE-UE-SingleFinetune-EncOutput-Request.* |

**Table 1.1.6-8: CSI-AE-UE-SingleFinetune-EncOutput-Response-Result field descriptions**

| ***csi-AE-UE-Encoder-OutputConfigId*** |
|---|
| This field is used to indicate the ID of the encoder output configuration that generates the encoder output. |

| ***csi-AE-UE-SingleFinetune-EncOutput-Response-Value*** |
|---|
| This field is used to indicate the encoder output at the encoder output configuration specified by *csi-AE-UE-Encoder-OutputConfigId.* |

*CSI-AE-UE-SingleFinetune-Terminate* IE is to define the message from NAN 808 to the UE 802 to indicate the end of the NAN-side decoder fine-tuning.

**Table 1.1.6-9: CSI-AE-UE-SingleFinetune-Terminate information element**

| |
|---|
| ```
-- ASN1START
     -- TAG-CSI-AE-UE-SINGLEFINETUNE-TERMINATE-START
     csi-AE-ModId ::= CSI-AE-ModId
     -- TAG-CSI-AE-UE-SINGLEFINETUNE-TERMINATE-STOP
     -- ASN1STOP
``` |

**Table 1.1.6-10: CSI-AE-UE-SingleFinetune-Terminate field descriptions**

| ***csi-AE-ModId*** |
|---|
| This field is used to indicate the model ID of the autoencoder where NAN-side decoder fine-tuning terminates . |

### 1.1.7. JOINT Two-SDED FINE-TUNING

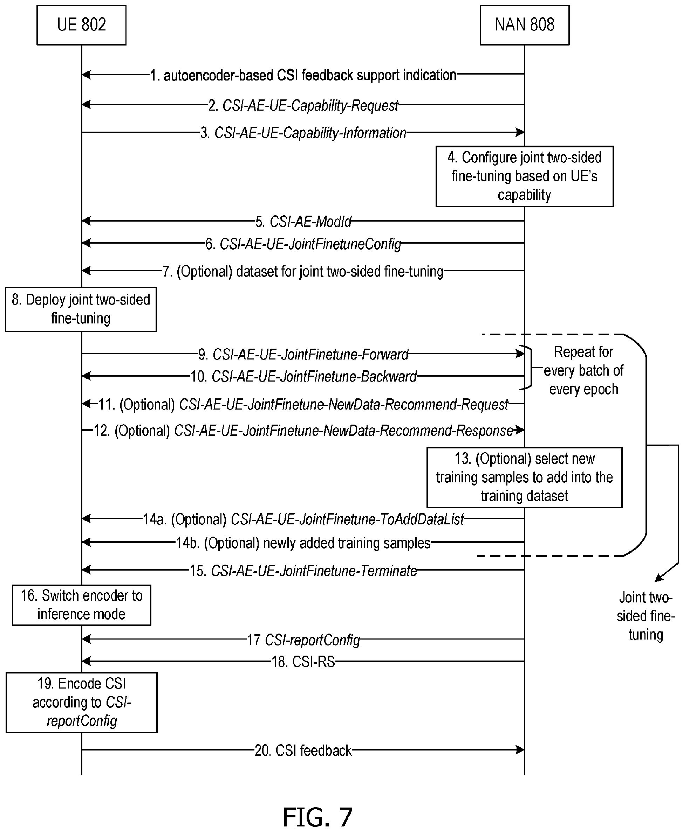

FIG. 7 depicts an example procedure for joint two-sided fine-tuning. In FIG. 7, after the NAN 808 decides to mitigate model mismatch, NAN 808 configures a model ID via the *CSI-AE-ModId* field/IE and configures joint two-sided fine-tuning setting via *CSI-AE-UE-JointFinetuneConfig.* Step 9-14 are for joint two-sided fine-tuning. Step 9-10 are repeated for every batch of every iteration. Step 11-14 are optional and capture the scenario where the size of the fine-tuning dataset is gradually increased during fine-tuning. If *csi-AE-UE-TrainEncoder-EvalSampleInform* is set to *true* in *CSI-AE-UE-TrainEncoder-Capability* IE, the NAN 808 may query the UE 802 for its recommendation on new training samples to add. If *csi-AE-UE-TrainEncoder-EvalSampleInform* is set to *false* in *CSI-AE-UE-TrainEncoder-Capability* IE, the NAN 808 skips step 11 and 12. In step 13, the NAN 808 selects new training samples to add to the training dataset. The selection of training samples can be random, or it can be based on active learning. It is up to the NAN 808 to decide which data selection algorithm to use. In step 14a, the NAN 808 notifies the UE 802 of the newly added training samples and the epoch number that the updated dataset is put to use. If the dataset is managed by NAN 808, the NAN 808 also needs to deliver these training samples to the UE 802 in step 14b. When NAN 808 determines to terminate joint two-sided fine-tuning, it sends *CSI-AE-UE-JointFinetune-Terminate* IE with a *csi-AE-ModId* matched with the one specified via *CSI-AE-UE-JointFinetuneConfig* to UE 802 to notify the termination of joint two-sided fine-tuning. Upon receiving *CSI-AE-UE-JointFinetune-Terminate,* the UE 802 switches the specified encoder to the inference mode.

Within the *CSI-AE-UE-JointFinetuneConfig* IE, there is a field *csi-AE-UE-JointFinetune-Dataset* to indicate the dataset used for joint two-sided fine tuning. If the dataset defined by *csi-AE-UE-JointFinetune-Dataset* is a dataset managed by NAN 808, then NAN 808 needs to deliver the ground truth to UE 802 in step 7.

The procedure of FIG. 7 may operate as follows:
1. NAN 808 broadcasts its support of autoencoder-based CSI feedback.
2. NAN 808 request UE's 802capability of autoencoder-based CSI feedback *CSI-AE-UE-Capability-Request.*
3. UE 802 reports its capability of autoencoder-based CSI feedback *CSI-AE-UE-Capability Information.*
4. NAN 808 configures joint two-sided fine-tuning based on UE's 802 capability (e.g., based on the *CSI-AE-UE-Capability-Information* IE obtained at step 3).
5. NAN 808 configures model ID using the *CSI*-*AE*-*ModId* IE/field.
6. NAN 808 configures joint two-sided fine-tuning *CSI-AE-UE-JointFinetuneConfig.*
7. (Optional) NAN 808 delivers dataset for joint two-sided fine-tuning.
8. UE 802 deploys joint two-sided fine-tuning.
9-14b. Joint two-sided fine-tuning.
9-10. Repeat for every batch of every epoch.
9. UE 802: forward propagation *CSI-AE-UE-JointFinetune-Forward.*
10. NAN 808: backward propagation *CSI-AE-UE-JointFinetune-Backward.*
11. (Optional) NAN 808 queries UE's 802 recommendation on new training samples to add *CSI-AE-UE-JointFinetune-NewData-Recommend-Request.*
12. (Optional) UE 802 reports its recommendation on new training samples to add *CSI-AE-UE-JointFinetune-NewData-Recommend-Response.*
13. (Optional) NAN 808 selects new training samples to add into the training dataset.
14a. (Optional) NAN 808 informs UE 802 of newly added training samples *CSI-AE-UE-JointFinetune-ToAddDataList.*
14b. (Optional) NAN 808 delivers newly added training samples.
15. NAN 808 notifies UE 802 of the termination of joint two-sided fine-tuning *CFI-AE-UE-JointFinetune-Terminate.* In some examples, the joint two-sided fine-tuning terminates when the encoder and/or decoder models converge.
16. UE 802 switches encoder to inference mode.
17. NAN 808 configures CSI report *CSI-reportConfig.* See e.g., [TS38214] and [TS38331].
18. NAN 808 transmits CSI-RS. See e.g., [TS38214].
19. UE 802 encodes CSI according to *CSI-reportConfig.* See e.g., [TS38214].
20. UE 802 reports CSI feedback. See e.g., [TS38214].

The *CSI-AE-UE-jointFinetuneConfig* IE is to describe the setting of joint two-sided fine-tuning.

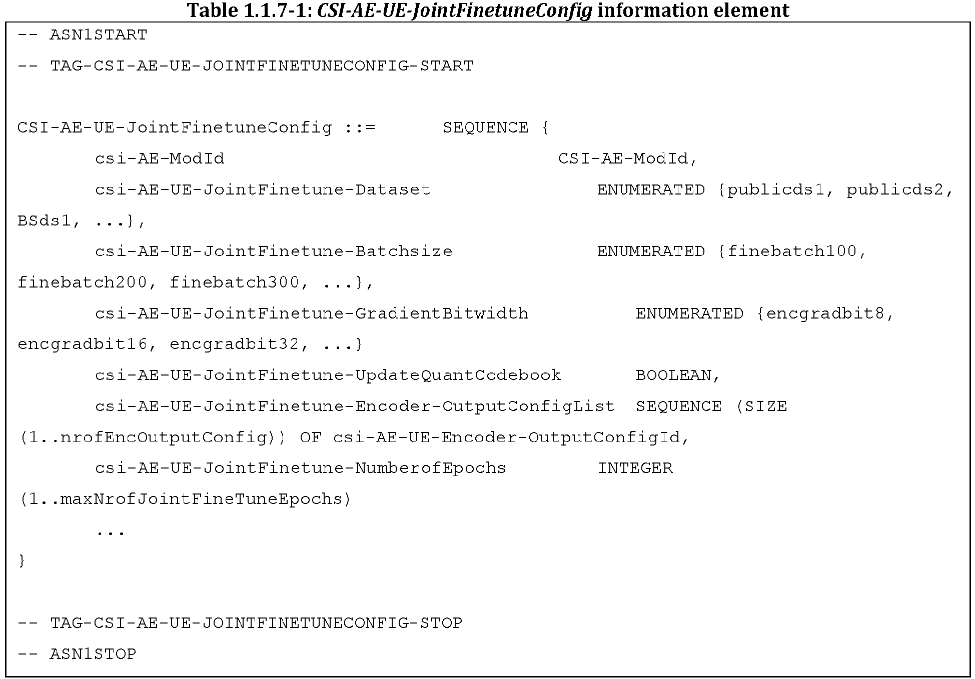

**Table 1.1.7-2: CSI-AE-UE-JointFinetuneConfia field descriptions**

| ***csi-AE-Modld*** |
|---|
| This field is used to indicate the model ID of the autoencoder that joint two-sided fine-tuning is applied to. |

| ***csi-AE-UE-JointFinetune-Dataset*** |
|---|
| This field is used to indicate the dataset for joint two-sided fine-tuning. It can be a public dataset where both UE and BS can access. It can also be a dataset managed by BS. The size of the dataset has to be less than or equal to *csi-AE-UE-TrainEncoder-MaxDatasetSize* in *CSI-AE-UE-TrainEncoder-Capability* IE. |

| ***csi-AE-UE-JointFinetune-Batchsize*** |
|---|
| This field is used to indicate the batch size for joint two-sided fine-tuning. Value *finebatch100* corresponds to a batch size of 100, Value *finebatch200* corresponds to a batch size of 200 and so on. |

| *csi-AE-UE-JointFinetune-GradientBitwidth* |
|---|
| This field is used to indicate the gradient precision for joint two-sided fine-tuning. It has to be an element that belongs to *csi-AE-UE-TrainEncoder-GradientBitwidthList* in *CSI-AE-UE-TrainEncoder-Capability* IE. |

| ***csi-AE-UE-JointFinetune-UpdateQuantCodebook*** |
|---|
| This field is used to whether the UE shall update the quantization codebook for encoder output during joint two-sided fine-tuning. It can only be set to true if *csi-AE-UE-TrainEncoder-UpdateQuantCodebook* in *CSI-AE-UE-TrainEncoder-Capability* IE is set to true. |

| ***csi-AE-UE-JointFinetune-Encoder-OutputConfigList*** |
|---|
| This field is used to indicate a list of encoder output configurations for joint two-sided fine-tuning. The length |
| of the sequence has to be less than or equal to *nrofEncOutputConfig,* the number of encoder output configurations supported by the UE, i.e., the length of *csi-AE-UE-Encoder-OutputConfigList* in *CSI-AE-UE-Encoder-Information.* |

| ***csi-AE-UE-JointFinetune-NumberofEpochs*** |
|---|
| This field is used to indicate the total number of epochs of joint two-sided fine-tuning. |

The *CSI-AE-UE-JointFinetune-Forward* IE is to define forward propagation results from UE 802 to NAN 808.

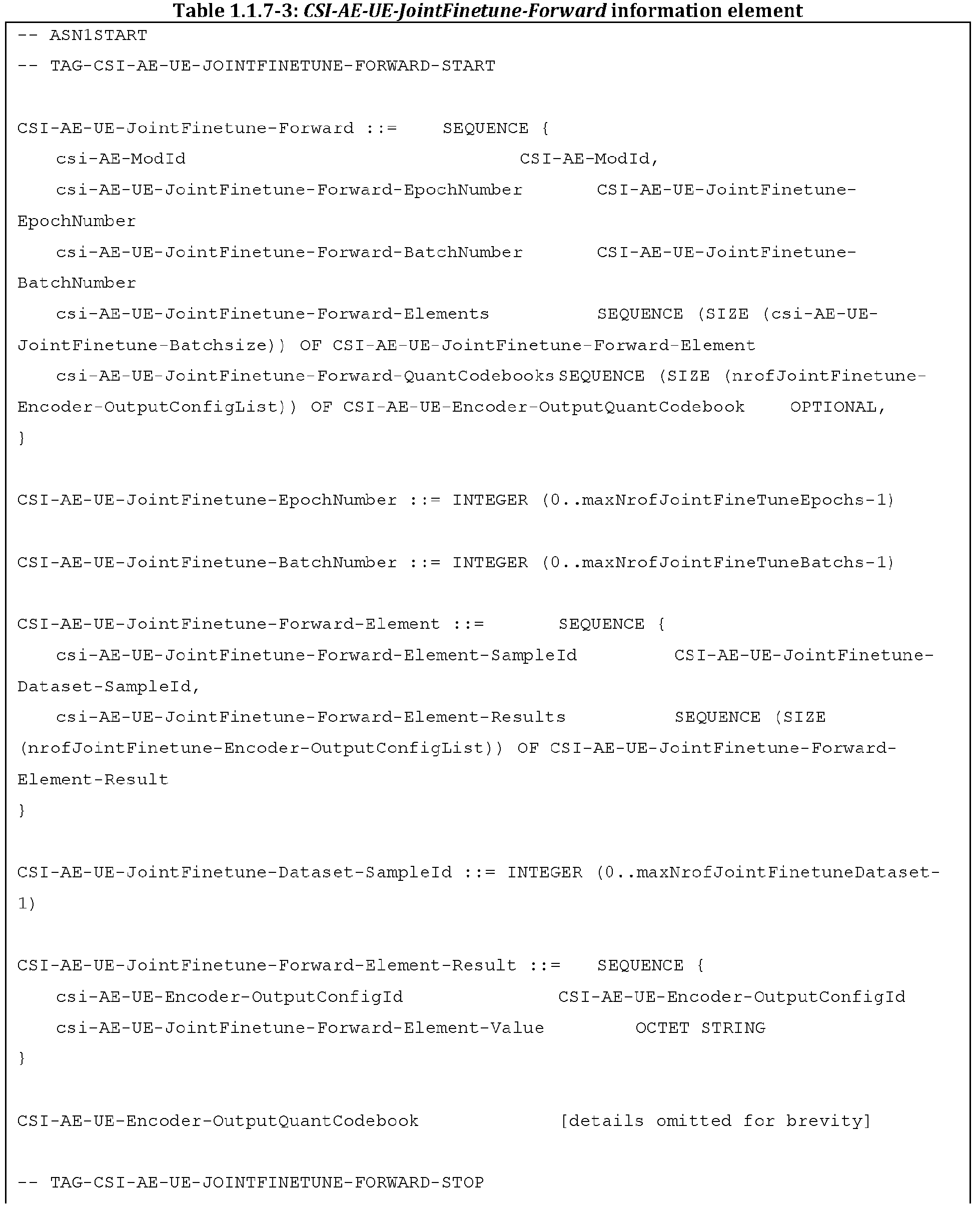

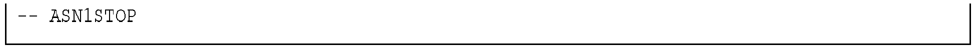

**Table 1.1.7-4: CSI-AE-UEJointFinetune-Forward field descriptions**

| |
|---|
| ***csi-AE-Modld*** |
| This field is used to indicate the model ID of the autoencoder that generates the forward propagation results. |
| ***csi-AE-UE-JointFinetune-Forward-EpochNumber*** |
| This field is to indicate the epoch number of current forward propagation results. |
| ***csi-AE-UE-JointFinetune-Forward-BatchNumber*** |
| This field is to indicate the batch number of current forward propagation results. |
| ***csi-AE-UE-JointFinetune-Forward-Elements*** |
| This field is to indicate a list of forward propagation results. Every element within the list correspond to one sample within the batch. The length of the list is equal to *csi-AE-UE-JointFinetune-Batchsize* in *CSI-AE-UE-JointFinetuneConfig.* |
| ***csi-AE-UE-JointFinetune-Forward-QuantCodebooks*** |
| This field is used to indicate a list of quantization codebooks for encoder output. The length of the list is equal to *nrofJointFinetune-Encoder-OutputConfigList,* the length of *csi-AE-UE-JointFinetune-Encoder-OutputConfigList* in *CSI-AE-UE-JointFinetuneConfig.* This field only presents if *csi-AE-UE-JointFinetune-UpdateQuantCodebook* in *CSI-AE-UE-JointFinetuneConfig* is set to *true.* |

**Table 1.1.7-5: CSI-AE-UE-JointFinetune-Forward-Element field descriptions**

| |
|---|
| ***csi-AE-UE-JointFinetune-Forward-Element-Sampleld*** |
| This field is used to indicate the index of the data sample whose forward propagation results are delivered. |
| ***csi-AE-UE-JointFinetune-Forward-Element-Results*** |
| This field is used to indicate a list of forward propagation results. The elements within the list correspond to the same data sample at different encoder output configurations. The length of the list is equal to *nrofJointFinetune-Encoder-OutputConfigList,* the length of *csi-AE-UE-JointFinetune-Encoder-OutputConfigList* in *CSI-AE-UE-JointFinetuneConfig.* |

**Table 1.1.7-6: CSI-AE-UE-JointFinetune-Forward-Element-Resultfield descriptions**

| |
|---|
| ***csi-AE-UE-Encoder-OutputConfigld*** |
| This field is used to indicate the ID of the encoder output configuration that generates the forward propagation result. |
| ***csi-AE-UE-JointFinetune-Forward-Element-Value*** |
| This field is used to indicate the forward propagation result at the encoder output configuration specified by *csi-AE-UE-Encoder-OutputConfigId.* |

The *CSI AE-UE-JointFinetune-Backward* IE is to define backpropagation results from NAN 808 to UE 802.

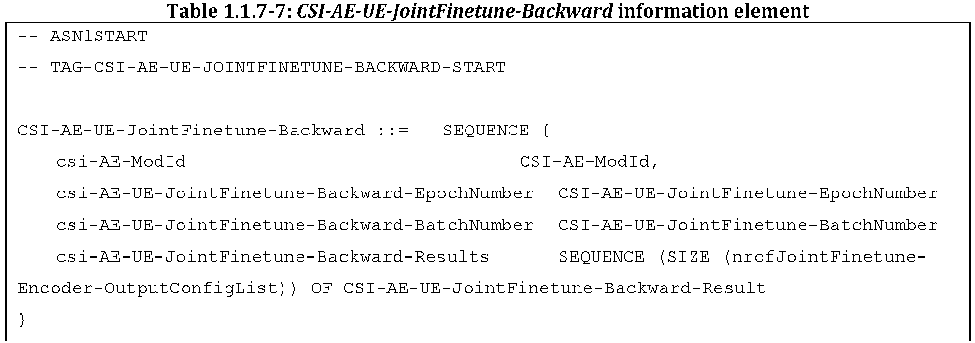

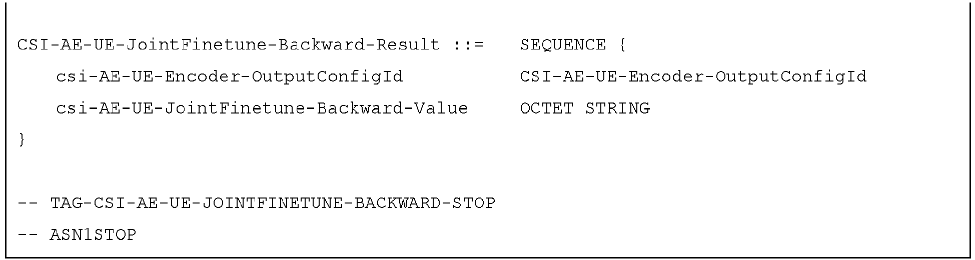

**Table 1.1.7-8: CSI-AE-UE-JointFinetune-Backward field descriptions**

| |
|---|
| ***csi-AE-Modld*** |
| This field is used to indicate the model ID of the autoencoder that generates the backpropagation results. |
| ***csi-AE-UE-JointFinetune-Backward-EpochNumber*** |
| This field is to indicate the epoch number of current backpropagation results. |
| ***csi-AE-UE-JointFinetune-Backward-BatchNumber*** |
| This field is to indicate the batch number of current backpropagation results. |
| ***csi-AE-UE-JointFinetune-Backward-Results*** |
| This field is used to indicate a list of backpropagation results. The length of the list is equal to *nrofJointFinetune-Encoder-OutputConfigList,* the length of *csi-AE-UE-JointFinetune-Encoder-OutputConfigList* in *CSI-AE-UE-JointFinetuneConfig.* |

**Table 1.1.7-9: CSI-AE-UEJointFinetune-Backward-Result field descriptions**

| |
|---|
| ***csi-AE-UE-Encoder-OutputConfigld*** |
| This field is used to indicate the ID of the encoder output configuration that generates the backpropagation result. |
| ***csi-AE-UE-JointFinetune-Backward-Value*** |
| This field is used to indicate the backpropagation result for a batch at the encoder output configuration specified by *csi-AE-UE-Encoder-OutputConfigId.* |

The *CSI-AE-UE-JointFinetune-NewData-Recommend-Request* IE is to define the request of NAN 808 to query UE's 802 recommendation on new training samples to add.

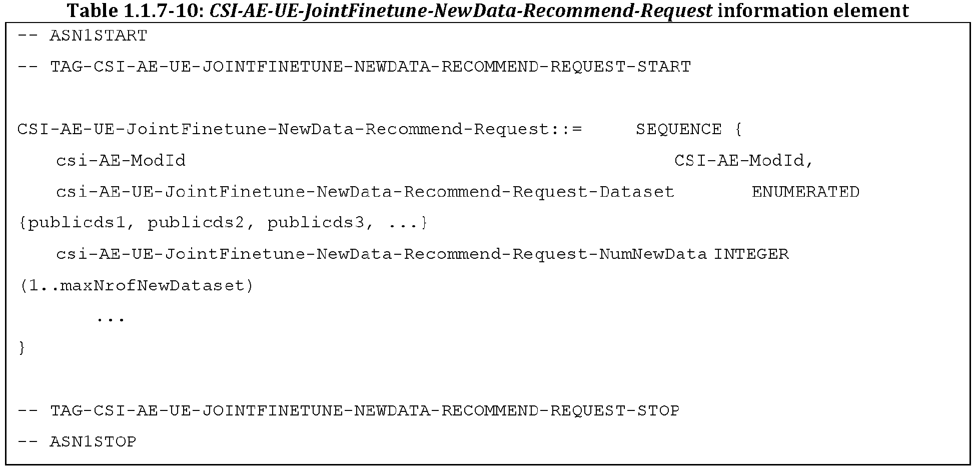

**Table 1.1.7-11: CSI-AE-UE-JointFinetune-NewData-Recommend-Request field descriptions**

| |
|---|
| ***csi-AE-ModId*** |
| This field is used to indicate the model ID of the autoencoder that new training samples are to be applied. |
| ***csi-AE-UE-JointFinetune-NewData-Recommend-Request-Dataset*** |
| This field is used to indicate the dataset that the new training samples belong to, which the UE shall make recommendations on. |
| ***csi-AE-UE-JointFinetune-NewData-Recommend-Request-NumNewData*** |
| This field is used to indicate the number of new samples that the UE shall recommend to BS to add to the fine-tuning dataset. |

The *CSI-AE-UE-JointFinetune-NewData-Recommend-Response* IE is to define the response from the UE 802 of its recommendation on new training samples to add. It is a sequence of *CSI-AE-UE-JointFinetune-Dataset-SampleId,* and the length of the sequence is equal to *csi-AE-UE-JointFinetune-NewData-Recommend-Request-NumNewData.*

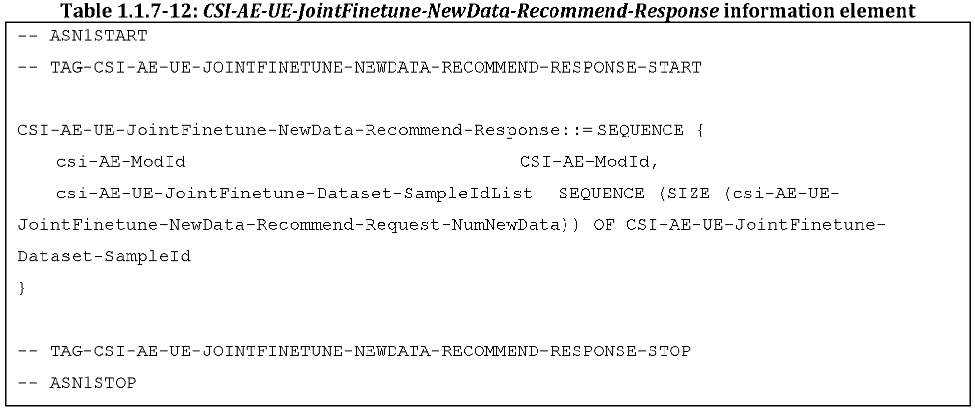

**Table 1.1.7-13: CSI-AE-UE-JointFinetune-NewData-Recommend-Response field descriptions**

| |
|---|
| ***csi-AE-Modld*** |
| This field is used to indicate the model ID of the autoencoder that the new training samples are to be applied. |
| ***csi-AE-UE-JointFinetune-Dataset-SampleldList*** |
| This field is used to indicate a list of indices of the new samples that the UE recommends to BS to add to the fine-tuning dataset. |

The *CSI-AE-UE-JointFinetune-ToAddDataList* IE is to define a list of new data samples that are added into the fine-tuning dataset.

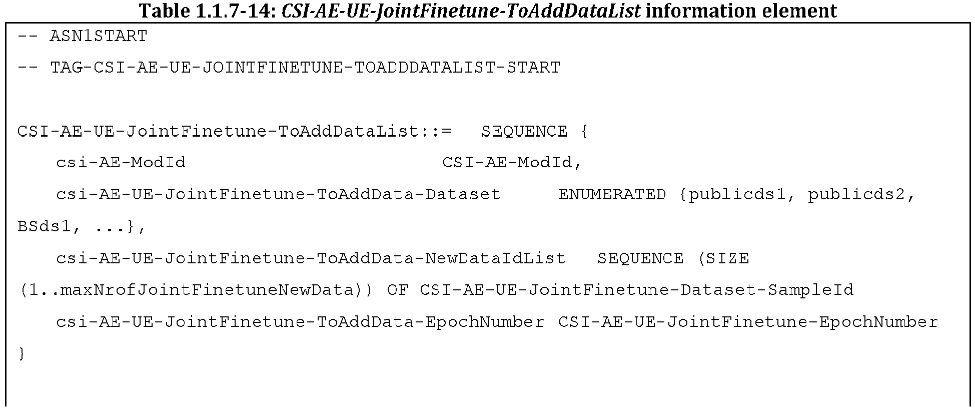

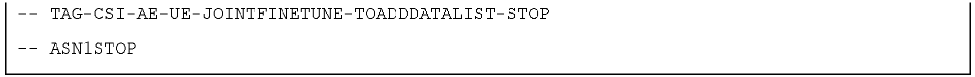

**Table 1.1.7-15: CSI-AE-UE-JointFinetune-ToAddDataList field descriptions**

| ***csi-AE-ModId*** |
|---|
| This field is used to indicate the model ID of the autoencoder that the new training samples are to be applied. |

| ***csi-AE-UE-JointFinetune-ToAddData-Dataset*** |
|---|
| This field is used to indicate the dataset that new training samples belong to. |

| ***csi-AE-UE-JointFinetune-ToAddData-NewDataIdList*** |
|---|
| This field is used to indicate a list of indices of the new samples that are added into the fine-tuning dataset. |

| ***csi-AE-UE-JointFinetune-ToAddData-EpochNumber*** |
|---|
| This field is used to indicate the epoch number that the updated fine-tuning dataset is put to use. |

*CSI-AE-UE-JointFinetune-Terminate* IE is to define the message from NAN 808 to the UE 802 to indicate the end of the joint two-sided fine-tuning.

**Table 1.1.7-16: CSI-AE-UE-JointFinetune-Terminate information element**

| |
|---|
| ```
     -- ASN1START
     -- TAG-CSI-AE-UE-JOINTFINETUNE-TERMINATE-START
     csi-AE-ModId ::= CSI-AE-ModId
     -- TAG-CSI-AE-UE-JOINTFINETUNE-TERMINATE-STOP
     -- ASN1STOP
``` |

**Table 1.1.7-17: CSI-AE-UE-JointFinetune-Terminate field descriptions**

| ***csi-AE-ModId*** |
|---|
| This field is used to indicate the model ID of the autoencoder where joint two-sided fine-tuning terminates. |

### 2. CELLULAR NETWORK ASPECTS

FIG. 8 depicts an example network architecture 800. The network 800 may operate in a manner consistent with 3GPP technical specifications for LTE or 5G/NR systems. However, the example embodiments are not limited in this regard and the described examples may apply to other networks that benefit from the principles described herein, such as future 3GPP systems, or the like.

The network 800 includes a UE 802, which is any mobile or non-mobile computing device designed to communicate with a RAN 804 via an over-the-air connection. The UE 802 is communicatively coupled with the RAN 804 by a Uu interface, which may be applicable to both LTE and NR systems. Examples of the UE 802 include, but are not limited to, a smartphone, tablet computer, wearable device (e.g., smart watch, fitness tracker, smart glasses, smart clothing/fabrics, head-mounted displays, smart shows, and/or the like), desktop computer, workstation, laptop computer, in-vehicle infotainment system, in-car entertainment system, instrument cluster, head-up display (HUD) device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, machine-to-machine (M2M), device-to-device (D2D), machine-type communication (MTC) device, Internet of Things (IoT) device, smart appliance, flying drone or unmanned aerial vehicle (UAV), terrestrial drone or autonomous vehicle, robot, electronic signage, single-board computer (SBC) (e.g., Raspberry Pi, Arduino, Intel Edison, and the like), plug computers, and/or any type of computing device such as any of those discussed herein.

The network 800 may include a set of UEs 802 coupled directly with one another via a D2D, ProSe, PC5, and/or SL interface, and/or any other suitable interface such as any of those discussed herein. These UEs 802 may be M2M/D2D/MTC/IoT devices and/or vehicular systems that communicate using physical sidelink channels such as, but not limited to, PSBCH, PSDCH, PSSCH, PSCCH, PSFCH, and the like. The UE 802 may perform blind decoding attempts of SL channels/links according to the various examples herein.

In some examples, the UE 802 may additionally communicate with an AP 806 via an over-the-air (OTA) connection. The AP 806 manages a WLAN connection, which may serve to offload some/all network traffic from the RAN 804. The connection between the UE 802 and the AP 806 may be consistent with any IEEE 802.11 protocol. Additionally, the UE 802, RAN 804, and AP 806 may utilize cellular-WLAN aggregation/integration (e.g., LWA/LWIP). Cellular-WLAN aggregation may involve the UE 802 being configured by the RAN 804 to utilize both cellular radio resources and WLAN resources.

The RAN 804 includes one or more network access nodes (NANs) 808. The ANs 808 terminate air-interface(s) for the UE 802 by providing access stratum protocols including RRC, PDCP, RLC, MAC, and PHY/L1 protocols. In this manner, the NAN 808 enables data/voice connectivity between CN 820 and the UE 802. The ANs 808 may be a macrocell base station or a low power base station for providing femtocells, picocells or other like cells having smaller coverage areas, smaller user capacity, or higher bandwidth compared to macrocells; or some combination thereof. In these implementations, an NAN 808 be referred to as a base station (BS), gNB, RAN node, eNB, ng-eNB, NodeB, RSU, TRxP, and the like.

One example implementation is a "CU/DU split" architecture where the ANs 808 are embodied as a gNB-Central Unit (CU) that is communicatively coupled with one or more gNB-Distributed Units (DUs), where each DU may be communicatively coupled with one or more Radio Units (RUs) (also referred to as RRHs, RRUs, or the like). In some implementations, the one or more RUs may be individual RSUs. In some implementations, the CU/DU split may include an ng-eNB-CU and one or more ng-eNB-DUs instead of, or in addition to, the gNB-CU and gNB-DUs, respectively. The ANs 808 employed as the CU may be implemented in a discrete device or as one or more software entities running on server computers as part of, for example, a virtual network including a virtual Base Band Unit (BBU) or BBU pool, cloud RAN (CRAN), Radio Equipment Controller (REC), Radio Cloud Center (RCC), centralized RAN (C-RAN), virtualized RAN (vRAN), and/or the like (although these terms may refer to different implementation concepts). Any other type of architectures, arrangements, and/or configurations can be used.

The set of ANs 808 are coupled with one another via respective X2 interfaces if the RAN 804 is an LTE RAN or Evolved Universal Terrestrial Radio Access Network (E-UTRAN) 810, or respective Xn interfaces if the RAN 804 is a NG-RAN 814. The X2/Xn interfaces, which may be separated into control/user plane interfaces in some examples, may allow the ANs to communicate information related to handovers, data/context transfers, mobility, load management, interference coordination, and the like.

The ANs of the RAN 804 may each manage one or more cells, cell groups, component carriers, and the like to provide the UE 802 with an air interface for network access. The UE 802 may be simultaneously connected with a set of cells provided by the same or different ANs 808 of the RAN 804. For example, the UE 802 and RAN 804 may use carrier aggregation to allow the UE 802 to connect with a set of component carriers, each corresponding to a Pcell or Scell. In dual connectivity scenarios, a first NAN 808 may be a master node that provides an MCG and a second NAN 808 may be secondary node that provides an SCG. The first/second ANs 808 may be any combination of eNB, gNB, ng-eNB, and the like.

The RAN 804 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

Additionally or alternatively, individual UEs 802 provide radio information to one or more ANs 808 and/or one or more edge compute nodes (e.g., edge servers/hosts, and the like). The radio information may be in the form of one or more measurement reports, and/or may include, for example, signal strength measurements, signal quality measurements, and/or the like. Each measurement report is tagged with a timestamp and the location of the measurement (e.g., the UEs 802 current location). As examples, the measurements collected by the UEs 802 and/or included in the measurement reports may include one or more of the following: bandwidth (BW), network or cell load, latency, jitter, round trip time (RTT), number of interrupts, out-of-order delivery of data packets, transmission power, bit error rate, bit error ratio (BER), Block Error Rate (BLER), packet error ratio (PER), packet loss rate, packet reception rate (PRR), data rate, peak data rate, end-to-end (e2e) delay, signal-to-noise ratio (SNR), signal-to-noise and interference ratio (SINR), signal-plus-noise-plus-distortion to noise-plus-distortion (SINAD) ratio, carrier-to-interference plus noise ratio (CINR), Additive White Gaussian Noise (AWGN), energy per bit to noise power density ratio (Eb/N0), energy per chip to interference power density ratio (Ec/I0), energy per chip to noise power density ratio (Ec/N0), peak-to-average power ratio (PAPR), reference signal received power (RSRP), reference signal received quality (RSRQ), received signal strength indicator (RSSI), received channel power indicator (RCPI), received signal to noise indicator (RSNI), Received Signal Code Power (RSCP), average noise plus interference (ANPI), GNSS timing of cell frames for UE positioning for E-UTRAN or 5G/NR (e.g., a timing between an AP 806 or RAN node 808 reference time and a GNSS-specific reference time for a given GNSS), GNSS code measurements (e.g., the GNSS code phase (integer and fractional parts) of the spreading code of the ith GNSS satellite signal), GNSS carrier phase measurements (e.g., the number of carrier-phase cycles (integer and fractional parts) of the ith GNSS satellite signal, measured since locking onto the signal; also called Accumulated Delta Range (ADR)), channel interference measurements, thermal noise power measurements, received interference power measurements, power histogram measurements, channel load measurements, STA statistics, and/or other like measurements. The RSRP, RSSI, and/or RSRQ measurements may include RSRP, RSSI, and/or RSRQ measurements of cell-specific reference signals, channel state information reference signals (CSI-RS), and/or synchronization signals (SS) or SS blocks for 3GPP networks (e.g., LTE or 5G/NR), and RSRP, RSSI, RSRQ, RCPI, RSNI, and/or ANPI measurements of various beacon, Fast Initial Link Setup (FILS) discovery frames, or probe response frames for WLAN/WiFi (e.g., [IEEE80211]) networks. Other measurements may be additionally or alternatively used, such as those discussed in 3GPP TS 36.214 v17.0.0 (2022-03-31) ("[TS36214]"), 3GPP TS 38.215 v17.3.0 (2023-03-30) ("[TS38215]"), 3GPP TS 38.314 v17.2.0 (2023-01-13) ("[TS38314]"), IEEE Standard for Information Technology--Telecommunications and Information Exchange between Systems - Local and Metropolitan Area Networks--Specific Requirements - Part 11: Wireless LAN Medium Access Control (MAC) and Physical Layer (PHY) Specifications, IEEE Std 802.11-2020, pp.1-4379 (26 Feb. 2021) ("[IEEE80211]"), and/or the like. Additionally or alternatively, any of the aforementioned measurements (or combination of measurements) may be collected by one or more ANs 808 and provided to the edge compute node(s)

Additionally or alternatively, the measurements can include one or more of the following measurements: measurements related to Data Radio Bearer (DRB) (e.g., number of DRBs attempted to setup, number of DRBs successfully setup, number of released active DRBs, in-session activity time for DRB, number of DRBs attempted to be resumed, number of DRBs successfully resumed, and the like); measurements related to Radio Resource Control (RRC) (e.g., mean number ofRRC connections, maximum number of RRC connections, mean number of stored inactive RRC connections, maximum number of stored inactive RRC connections, number of attempted, successful, and/or failed RRC connection establishments, and the like); measurements related to UE Context (UECNTX); measurements related to Radio Resource Utilization (RRU) (e.g., DL total PRB usage, UL total PRB usage, distribution of DL total PRB usage, distribution of UL total PRB usage, DL PRB used for data traffic, UL PRB used for data traffic, DL total available PRBs, UL total available PRBs, and the like); measurements related to Registration Management (RM); measurements related to Session Management (SM) (e.g., number of PDU sessions requested to setup; number of PDU sessions successfully setup; number of PDU sessions failed to setup, and the like); measurements related to GTP Management (GTP); measurements related to IP Management (IP); measurements related to Policy Association (PA); measurements related to Mobility Management (MM) (e.g., for inter-RAT, intra-RAT, and/or Intra/Inter-frequency handovers and/or conditional handovers: number of requested, successful, and/or failed handover preparations; number of requested, successful, and/or failed handover resource allocations; number of requested, successful, and/or failed handover executions; mean and/or maximum time of requested handover executions; number of successful and/or failed handover executions per beam pair, and the like); measurements related to Virtualized Resource(s) (VR); measurements related to Carrier (CARR); measurements related to QoS Flows (QF) (e.g., number of released active QoS flows, number of QoS flows attempted to release, in-session activity time for QoS flow, in-session activity time for a UE 802, number of QoS flows attempted to setup, number of QoS flows successfully established, number of QoS flows failed to setup, number of initial QoS flows attempted to setup, number of initial QoS flows successfully established, number of initial QoS flows failed to setup, number of QoS flows attempted to modify, number of QoS flows successfully modified, number of QoS flows failed to modify, and the like); measurements related to Application Triggering (AT); measurements related to Short Message Service (SMS); measurements related to Power, Energy and Environment (PEE); measurements related to NF service (NFS); measurements related to Packet Flow Description (PFD); measurements related to Random Access Channel (RACH); measurements related to Measurement Report (MR); measurements related to Layer 1 Measurement (L1M); measurements related to Network Slice Selection (NSS); measurements related to Paging (PAG); measurements related to Non-IP Data Delivery (NIDD); measurements related to external parameter provisioning (EPP); measurements related to traffic influence (TI); measurements related to Connection Establishment (CE); measurements related to Service Parameter Provisioning (SPP); measurements related to Background Data Transfer Policy (BDTP); measurements related to Data Management (DM); and/or any other performance measurements such as those discussed in 3GPP TS 28.552 v18.2.0 (2023-03-30) ("[TS28552]"), 3GPP TS 32.425 v17.1.0 (2021-06-24) ("[TS32425]"), and/or the like.

The radio information may be reported in response to a trigger event and/or on a periodic basis. Additionally or alternatively, individual UEs 802 report radio information either at a low periodicity or a high periodicity depending on a data transfer that is to take place, and/or other information about the data transfer. Additionally or alternatively, the edge compute node(s) may request the measurements from the ANs 808 at low or high periodicity, or the ANs 808 may provide the measurements to the edge compute node(s) at low or high periodicity. Additionally or alternatively, the edge compute node(s) may obtain other relevant data from other edge compute node(s), core network functions (NFs), application functions (AFs), and/or other UEs 802 such as Key Performance Indicators (KPIs), with the measurement reports or separately from the measurement reports.

Additionally or alternatively, in cases where is discrepancy in the observation data from one or more UEs, one or more RAN nodes, and/or core network NFs (e.g., missing reports, erroneous data, and the like) simple imputations may be performed to supplement the obtained observation data such as, for example, substituting values from previous reports and/or historical data, apply an extrapolation filter, and/or the like. Additionally or alternatively, acceptable bounds for the observation data may be predetermined or configured. For example, CQI and MCS measurements may be configured to only be within ranges defined by suitable 3GPP standards. In cases where a reported data value does not make sense (e.g., the value exceeds an acceptable range/bounds, or the like), such values may be dropped for the current learning/training episode or epoch. For example, on packet delivery delay bounds may be defined or configured, and packets determined to have been received after the packet delivery delay bound may be dropped.

The UE 802 can also perform determine reference signal (RS) measurement and reporting procedures to provide the network with information about the quality of one or more wireless channels and/or the communication media in general, and this information can be used to optimize various aspects of the communication system. As examples, the measurement and reporting procedures performed by the UE 802 can include those discussed in 3GPP TS 38.211 v17.4.0 (2023-01-04) ("[TS38211]"), 3GPP TS 38.212 v17.5.0 (2023-03-30) ("[TS38212]"), 3GPP TS 38.213 v17.5.0 (2023-03-30) ("[TS38213]"), 3GPP TS 38.214 v17.5.0 (2023-03-30) ("[TS38214]"), [TS38215], 3GPP TS 38.101-1 v18.1.0 (2023-04-07) ("[TS38101-1]"), 3GPP TS 38.104 v18.1.0 (2023-04-07) ("[TS38104]"), 3GPP TS 38.133 v18.1.0 (2023-04-07) ("[TS38133]"), [TS38331], and/or other the like. The physical signals and/or reference signals can include demodulation reference signals (DM-RS), phase-tracking reference signals (PT-RS), positioning reference signal (PRS), channel-state information reference signal (CSI-RS), synchronization signal block (SSB), primary synchronization signal (PSS), secondary synchronization signal (SSS), and sounding reference signal (SRS).

In any of the examples discussed herein, any suitable data collection and/or measurement mechanism(s) may be used to collect the observation data. For example, data marking (e.g., sequence numbering, and the like), packet tracing, signal measurement, data sampling, and/or timestamping techniques may be used to determine any of the aforementioned metrics/observations. The collection of data may be based on occurrence of events that trigger collection of the data. Additionally or alternatively, data collection may take place at the initiation or termination of an event. The data collection can be continuous, discontinuous, and/or have start and stop times. The data collection techniques/mechanisms may be specific to a HW configuration/implementation or non-HW-specific, or may be based on various software parameters (e.g., OS type and version, and the like). Various configurations may be used to define any of the aforementioned data collection parameters. Such configurations may be defined by suitable specifications/standards, such as 3GPP (e.g., [SA6Edge]), ETSI (e.g., [MEC]), O-RAN (e.g., [O-RAN]), Intel^{®} Smart Edge Open (formerly OpenNESS) (e.g., [ISEO]), IETF (e.g., MAMS [RFC8743]), IEEE/WiFi (e.g., [IEEE80211], [WiMAX], [IEEE16090], and the like), and/or any other like standards such as those discussed herein.

In V2X scenarios the UE 802 or NAN 808 may be or act as a roadside unit (RSU), which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network. Furthermore, one or more V2X RATs may be employed, which allow V2X nodes to communicate directly with one another, with infrastructure equipment (e.g., NAN 808), and/or other devices/nodes. In some implementations, at least two distinct V2X RATs may be used including WLAN V2X (W-V2X) RATs based on IEEE V2X technologies (e.g., DSRC for the U.S. and ITS-G5 for Europe) and cellular V2X (C-V2X) RATs based on 3GPP V2X technologies (e.g., LTE V2X, 5G/NR V2X, and beyond). In one example, the C-V2X RAT may utilize a C-V2X air interface and the WLAN V2X RAT may utilize an W-V2X air interface.

The W-V2X RATs include, for example, IEEE Guide for Wireless Access in Vehicular Environments (WAVE) Architecture, IEEE STANDARDS ASSOCIATION, IEEE 1609.0-2019 (10 Apr. 2019) ("[IEEE16090]"), V2X Communications Message Set Dictionary, SAE INT'L (23 Jul. 2020) ("[J2735_202007]"), Intelligent Transport Systems in the 5 GHz frequency band (ITS-G5), the [IEEE80211p] (which is the layer 1 (L1) and layer 2 (L2) part of WAVE, DSRC, and ITS-G5), and/or IEEE Standard for Air Interface for Broadband Wireless Access Systems, IEEE Std 802.16-2017, pp.1-2726 (02 Mar. 2018) ("[WiMAX]"). The term "DSRC" refers to vehicular communications in the 5.9 GHz frequency band that is generally used in the United States, while "ITS-G5" refers to vehicular communications in the 5.9 GHz frequency band in Europe. Since any number of different RATs are applicable (including [IEEE80211p] RATs) that may be used in any geographic or political region, the terms "DSRC" (used, among other regions, in the U.S.) and "ITS-G5" (used, among other regions, in Europe) may be used interchangeably throughout this disclosure. The access layer for the ITS-G5 interface is outlined in ETSI EN 302 663 V1.3.1 (2020-01) (hereinafter "[EN302663]") and describes the access layer of the ITS-S reference architecture. The ITS-G5 access layer comprises [IEEE80211] (which now incorporates [IEEE80211p]), as well as features for Decentralized Congestion Control (DCC) methods discussed in ETSI TS 102 687 V1.2.1 (2018-04) ("[TS102687]"). The access layer for 3GPP LTE-V2X based interface(s) is outlined in, inter alia, ETSI EN 303 613 V1.1.1 (2020-01), 3GPP TS 23.285 v16.2.0 (2019-12); and 3GPP 5G/NR-V2X is outlined in, inter alia, 3GPP TR 23.786 v16.1.0 (2019-06) and 3GPP TS 23.287 v18.0.0 (2023-03-31) ("[TS23287]").

In examples where the RAN 804 is an E-UTRAN 810 with one or more eNBs 812, the E-UTRAN 810 provides an LTE air interface (Uu) with the parameters and characteristics at least as discussed in 3GPP TS 36.300 v17.2.0 (2022-09-30) ("[TS36300]"). In examples where the RAN 804 is an next generation (NG)-RAN 814 with a set of gNBs 816. Each gNB 816 connects with 5G-enabled UEs 802 using a 5G-NR air interface (which may also be referred to as a Uu interface) with parameters and characteristics as discussed in [TS38300], among many other 3GPP standards. Where the NG-RAN 814 includes a set of ng-eNBs 818, the one or more ng-eNBs 818 connect with a UE 802 via the 5G Uu and/or LTE Uu interface. The gNBs 816 and the ng-eNBs 818 connect with the 5GC 840 through respective NG interfaces, which include an N2 interface, an N3 interface, and/or other interfaces. The gNB 816 and the ng-eNB 818 are connected with each other over an Xn interface. Additionally, individual gNBs 816 are connected to one another via respective Xn interfaces, and individual ng-eNBs 818 are connected to one another via respective Xn interfaces. In some examples, the NG interface may be split into two parts, an NG user plane (NG-U) interface, which carries traffic data between the nodes of the NG-RAN 814 and a UPF 848 (e.g., N3 interface), and an NG control plane (NG-C) interface, which is a signaling interface between the nodes of the NG-RAN 814 and an AMF 844 (e.g., N2 interface).

The NG-RAN 814 may provide a 5G-NR air interface (which may also be referred to as a Uu interface) with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

The 5G-NR air interface may utilize BWPs for various purposes. For example, BWP can be used for dynamic adaptation of the SCS. For example, the UE 802 can be configured with multiple BWPs where each BWP configuration has a different SCS. When a BWP change is indicated to the UE 802, the SCS of the transmission is changed as well. Another use case example of BWP is related to power saving. In particular, multiple BWPs can be configured for the UE 802 with different amount of frequency resources (e.g., PRBs) to support data transmission under different traffic loading scenarios. A BWP containing a smaller number of PRBs can be used for data transmission with small traffic load while allowing power saving at the UE 802 and in some cases at the gNB 816. A BWP containing a larger number of PRBs can be used for scenarios with higher traffic load.

In some implementations, individual gNBs 816 can include a gNB-CU and a set of gNB-DUs. Additionally or alternatively, gNBs 816 can include one or more RUs. In these implementations, the gNB-CU may be connected to each gNB-DU via respective F1 interfaces. In case of network sharing with multiple cell ID broadcast(s), each cell identity associated with a subset of PLMNs corresponds to a gNB-DU and the gNB-CU it is connected to, share the same physical layer cell resources. For resiliency, a gNB-DU may be connected to multiple gNB-CUs by appropriate implementation. Additionally, a gNB-CU can be separated into gNB-CU control plane (gNB-CU-CP) and gNB-CU user plane (gNB-CU-UP) functions. The gNB-CU-CP is connected to a gNB-DU through an F1 control plane interface (F1-C), the gNB-CU-UP is connected to the gNB-DU through an F1 user plane interface (F1-U), and the gNB-CU-UP is connected to the gNB-CU-CP through an E1 interface. In some implementations, one gNB-DU is connected to only one gNB-CU-CP, and one gNB-CU-UP is connected to only one gNB-CU-CP. For resiliency, a gNB-DU and/or a gNB-CU-UP may be connected to multiple gNB-CU-CPs by appropriate implementation. One gNB-DU can be connected to multiple gNB-CU-UPs under the control of the same gNB-CU-CP, and one gNB-CU-UP can be connected to multiple DUs under the control of the same gNB-CU-CP. Data forwarding between gNB-CU-UPs during intra-gNB-CU-CP handover within a gNB may be supported by Xn-U.

Similarly, individual ng-eNBs 818 can include an ng-eNB-CU and a set of ng-eNB-DUs. In these implementations, the ng-eNB-CU and each ng-eNB-DU are connected to one another via respective W1 interface. An ng-eNB can include an ng-eNB-CU-CP, one or more ng-eNB-CU-UP(s), and one or more ng-eNB-DU(s). An ng-eNB-CU-CP and an ng-eNB-CU-UP is connected via the E1 interface. An ng-eNB-DU is connected to an ng-eNB-CU-CP via the W1-C interface, and to an ng-eNB-CU-UP via the W1-U interface. The general principle described herein w.r.t gNB aspects also applies to ng-eNB aspects and corresponding E1 and W1 interfaces, if not explicitly specified otherwise.

The node hosting user plane part of the PDCP protocol layer (e.g., gNB-CU, gNB-CU-UP, and for EN-DC, MeNB or SgNB depending on the bearer split) performs user inactivity monitoring and further informs its inactivity or (re)activation to the node having control plane connection towards the core network (e.g., over E1, X2, or the like). The node hosting the RLC protocol layer (e.g., gNB-DU) may perform user inactivity monitoring and further inform its inactivity or (re)activation to the node hosting the control plane (e.g., gNB-CU or gNB-CU-CP).

In these implementations, the NG-RAN 814, is layered into a Radio Network Layer (RNL) and a Transport Network Layer (TNL). The NG-RAN 814 architecture (e.g., the NG-RAN logical nodes and interfaces between them) is part of the RNL. For each NG-RAN interface (e.g., NG, Xn, F1, and the like) the related TNL protocol and the functionality are specified. The TNL provides services for user plane transport and/or signalling transport. In NG-Flex configurations, each NG-RAN node is connected to all AMFs 844 of AMF sets within an AMF region supporting at least one slice also supported by the NG-RAN node. The AMF Set and the AMF Region are defined in [TS23501].

The RAN 804 is communicatively coupled to CN 820 that includes network elements and/or network functions (NFs) to provide various functions to support data and telecommunications services to customers/subscribers (e.g., UE 802). The components of the CN 820 may be implemented in one physical node or separate physical nodes. In some examples, NFV may be utilized to virtualize any or all of the functions provided by the network elements of the CN 820 onto physical compute/storage resources in servers, switches, and the like. A logical instantiation of the CN 820 may be referred to as a network slice, and a logical instantiation of a portion of the CN 820 may be referred to as a network sub-slice.

The CN 820 may be an LTE CN 822 (also referred to as an Evolved Packet Core (EPC) 822). The EPC 822 may include MME 824, SGW 826, SGSN 828, HSS 830, PGW 832, and PCRF 834 coupled with one another over interfaces (or "reference points") as shown. The NFs in the EPC 822 are briefly introduced as follows. The MME 824 implements mobility management functions to track a current location of the UE 802 to facilitate paging, bearer activation/deactivation, handovers, gateway selection, authentication, and the like. The SGW 826 terminates an S1 interface toward the RAN 810 and routes data packets between the RAN 810 and the EPC 822. The SGW 826 may be a local mobility anchor point for inter-RAN node handovers and also may provide an anchor for inter-3GPP mobility. Other responsibilities may include lawful intercept, charging, and some policy enforcement. The SGSN 828 tracks a location of the UE 802 and performs security functions and access control. The SGSN 828 also performs inter-EPC node signaling for mobility between different RAT networks; PDN and S-GW selection as specified by MME 824; MME 824 selection for handovers; and the like. The S3 reference point between the MME 824 and the SGSN 828 enable user and bearer information exchange for inter-3GPP access network mobility in idle/active states. The HSS 830 includes a database for network users, including subscription-related information to support the network entities' handling of communication sessions. The HSS 830 can provide support for routing/roaming, authentication, authorization, naming/addressing resolution, location dependencies, and the like. An S6a reference point between the HSS 830 and the MME 824 may enable transfer of subscription and authentication data for authenticating/authorizing user access to the EPC 820. The PGW 832 may terminate an SGi interface toward a data network (DN) 836 that may include an application (app)/content server 838. The PGW 832 routes data packets between the EPC 822 and the data network 836. The PGW 832 is communicatively coupled with the SGW 826 by an S5 reference point to facilitate user plane tunneling and tunnel management. The PGW 832 may further include a node for policy enforcement and charging data collection (e.g., PCEF). Additionally, the SGi reference point may communicatively couple the PGW 832 with the same or different data network 836. The PGW 832 may be communicatively coupled with a PCRF 834 via a Gx reference point. The PCRF 834 is the policy and charging control element of the EPC 822. The PCRF 834 is communicatively coupled to the app/content server 838 to determine appropriate QoS and charging parameters for service flows. The PCRF 832 also provisions associated rules into a PCEF (via Gx reference point) with appropriate TFT and QCI.

The CN 820 may be a 5GC 840 including an Authentication Server Function (AUSF) 842, Access and Mobility Management Function (AMF) 844, Session Management Function (SMF) 846, User Plane Function (UPF) 848, Network Slice Selection Function (NSSF) 850, Network Exposure Function (NEF) 852, Network Repository Function (NRF) 854, Policy Control Function (PCF) 856, Unified Data Management (UDM) 858, Unified Data Repository (UDR) 859, and Application Function (AF) 860 coupled with one another over various interfaces as shown. The NFs in the 5GC 840 are briefly introduced as follows.

The AUSF 842 stores data for authentication of UE 802 and handle authentication-related functionality. The AUSF 842 may facilitate a common authentication framework for various access types..

The AMF 844 allows other functions of the 5GC 840 to communicate with the UE 802 and the RAN 804 and to subscribe to notifications about mobility events with respect to the UE 802. The AMF 844 is also responsible for registration management (e.g., for registering UE 802), connection management, reachability management, mobility management, lawful interception of AMF-related events, and access authentication and authorization. The AMF 844 provides transport for SM messages between the UE 802 and the SMF 846, and acts as a transparent proxy for routing SM messages. AMF 844 also provides transport for SMS messages between UE 802 and an SMSF. AMF 844 interacts with the AUSF 842 and the UE 802 to perform various security anchor and context management functions. Furthermore, AMF 844 is a termination point of a RAN-CP interface, which includes the N2 reference point between the RAN 804 and the AMF 844. The AMF 844 is also a termination point of NAS (N1) signaling, and performs NAS ciphering and integrity protection.

AMF 844 also supports NAS signaling with the UE 802 over an N3IWF interface. The N3IWF provides access to untrusted entities. N3IWF may be a termination point for the N2 interface between the (R)AN 804 and the AMF 844 for the control plane, and may be a termination point for the N3 reference point between the (R)AN 814 and the 848 for the user plane. As such, the AMF 844 handles N2 signaling from the SMF 846 and the AMF 844 for PDU sessions and QoS, encapsulate/de-encapsulate packets for IPSec and N3 tunneling, marks N3 user-plane packets in the uplink, and enforces QoS corresponding to N3 packet marking taking into account QoS requirements associated with such marking received over N2. N3IWF may also relay UL and DL control-plane NAS signaling between the UE 802 and AMF 844 via an N1 reference point between the UE 802and the AMF 844, and relay uplink and downlink user-plane packets between the UE 802 and UPF 848. The N3IWF also provides mechanisms for IPsec tunnel establishment with the UE 802. The AMF 844 may exhibit an Namf service-based interface, and may be a termination point for an N14 reference point between two AMFs 844 and an N17 reference point between the AMF 844 and a 5G-EIR (not shown by FIG. 8).

The SMF 846 is responsible for SM (e.g., session establishment, tunnel management between UPF 848 and NAN 808); UE IP address allocation and management (including optional authorization); selection and control of UP function; configuring traffic steering at UPF 848 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 844 over N2 to NAN 808; and determining SSC mode of a session. SM refers to management of a PDU session, and a PDU session or "session" refers to a PDU connectivity service that provides or enables the exchange of PDUs between the UE 802 and the DN 836. The SMF 846 may also include the following functionalities to support edge computing enhancements (see e.g., [TS23548]): selection of EASDF 861 and provision of its address to the UE as the DNS server for the PDU session; usage of EASDF 861 services as defined in [TS23548]; and for supporting the application layer architecture defined in [TS23558], provision and updates of ECS address configuration information to the UE. Discovery and selection procedures for EASDFs 861 is discussed in [TS23501] 9 6.3.23.

The UPF 848 acts as an anchor point for intra-RAT and inter-RAT mobility, an external PDU session point of interconnect to data network 836, and a branching point to support multi-homed PDU session. The UPF 848 also performs packet routing and forwarding, packet inspection, enforces user plane part of policy rules, lawfully intercept packets (UP collection), performs traffic usage reporting, perform QoS handling for a user plane (e.g., packet filtering, gating, UL/DL rate enforcement), performs uplink traffic verification (e.g., SDF-to-QoS flow mapping), transport level packet marking in the uplink and downlink, and performs downlink packet buffering and downlink data notification triggering. UPF 848 may include an uplink classifier to support routing traffic flows to a data network.

The NSSF 850 selects a set of network slice instances serving the UE 802. The NSSF 850 also determines allowed NSSAI and the mapping to the subscribed S-NSSAIs, if needed. The NSSF 850 also determines an AMF set to be used to serve the UE 802, or a list of candidate AMFs 844 based on a suitable configuration and possibly by querying the NRF 854. The selection of a set of network slice instances for the UE 802 may be triggered by the AMF 844 with which the UE 802 is registered by interacting with the NSSF 850; this may lead to a change of AMF 844. The NSSF 850 interacts with the AMF 844 via an N22 reference point; and may communicate with another NSSF in a visited network via an N31 reference point (not shown).

The NEF 852 securely exposes services and capabilities provided by 3GPP NFs for third party, internal exposure/re-exposure, AFs 860, edge computing or fog computing systems (e.g., edge compute node, and the like. In such examples, the NEF 852 may authenticate, authorize, or throttle the AFs. NEF 852 may also translate information exchanged with the AF 860 and information exchanged with internal network functions. For example, the NEF 852 may translate between an AF-Service-Identifier and an internal 5GC information. NEF 852 may also receive information from other NFs based on exposed capabilities of other NFs. This information may be stored at the NEF 852 as structured data, or at a data storage NF using standardized interfaces. The stored information can then be re-exposed by the NEF 852 to other NFs and AFs, or used for other purposes such as analytics.

The NRF 854 supports service discovery functions, receives NF discovery requests from NF instances, and provides information of the discovered NF instances to the requesting NF instances. NRF 854 also maintains information of available NF instances and their supported services. The NRF 854 also supports service discovery functions, wherein the NRF 854 receives NF Discovery Request from NF instance or an SCP (not shown), and provides information of the discovered NF instances to the NF instance or SCP.

The PCF 856 provides policy rules to control plane functions to enforce them, and may also support unified policy framework to govern network behavior. The PCF 856 may also implement a front end to access subscription information relevant for policy decisions in a UDR 859 of the UDM 858. In addition to communicating with functions over reference points as shown, the PCF 856 exhibit an Npcf service-based interface.

The UDM 858 handles subscription-related information to support the network entities' handling of communication sessions, and stores subscription data of UE 802. For example, subscription data may be communicated via an N8 reference point between the UDM 858 and the AMF 844. The UDM 858 may include two parts, an application front end and a UDR. The UDR may store subscription data and policy data for the UDM 858 and the PCF 856, and/or structured data for exposure and application data (including PFDs for application detection, application request information for multiple UEs 802) for the NEF 852. The Nudr service-based interface may be exhibited by the UDR to allow the UDM 858, PCF 856, and NEF 852 to access a particular set of the stored data, as well as to read, update (e.g., add, modify), delete, and subscribe to notification of relevant data changes in the UDR. The UDM 858 may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 858 may exhibit the Nudm service-based interface.

Edge Application Server Discovery Function (EASDF) 861 exhibits an Neasdf service-based interface, and is connected to the SMF 846 via an N88 interface. One or multiple EASDF instances may be deployed within a PLMN, and interactions between 5GC NF(s) and the EASDF 861 take place within a PLMN. The EASDF 861 includes one or more of the following functionalities: registering to NRF 854 for EASDF 861 discovery and selection; handling the DNS messages according to the instruction from the SMF 846; and/or terminating DNS security, if used. Handling the DNS messages according to the instruction from the SMF 846 includes one or more of the following functionalities: receiving DNS message handling rules and/or BaselineDNSPattern from the SMF 846; exchanging DNS messages from/with the UE 802; forwarding DNS messages to C-DNS or L-DNS for DNS query; adding EDNS client subnet (ECS) option into DNS query for an FQDN; reporting to the SMF 846 the information related to the received DNS messages; and/or buffering/discarding DNS messages from the UE 802 or DNS Server. The EASDF has direct user plane connectivity (e.g., without any NAT) with the PSA UPF over N6 for the transmission of DNS signalling exchanged with the UE. The deployment of a NAT between EASDF 861 and PSA UPF 848 may or may not be supported. Additional aspects of the EASDF 861 are discussed in [TS23548].

AF 860 provides application influence on traffic routing, provide access to NEF 852, and interact with the policy framework for policy control. The AF 860 may influence UPF 848 (re)selection and traffic routing. Based on operator deployment, when AF 860 is considered to be a trusted entity, the network operator may permit AF 860 to interact directly with relevant NFs. In some implementations, the AF 860 is used for edge computing implementations.

The 5GC 840 may enable edge computing by selecting operator/3rd party services to be geographically close to a point that the UE 802 is attached to the network. This may reduce latency and load on the network. In edge computing implementations, the 5GC 840 may select a UPF 848 close to the UE 802 and execute traffic steering from the UPF 848 to DN 836 via the N6 interface. This may be based on the UE subscription data, UE location, and information provided by the AF 860, which allows the AF 860 to influence UPF (re)selection and traffic routing.

The data network (DN) 836 may represent various network operator services, Internet access, or third party services that may be provided by one or more servers including, for example, application (app)/content server 838. The DN 836 may be an operator external public, a private PDN, or an intra-operator packet data network, for example, for provision of IMS services. In this example, the app server 838 can be coupled to an IMS via an S-CSCF or the I-CSCF. In some implementations, the DN 836 may represent one or more local area DNs (LADNs), which are DNs 836 (or DN names (DNNs)) that is/are accessible by a UE 802 in one or more specific areas. Outside of these specific areas, the UE 802 is not able to access the LADN/DN 836.

Additionally or alternatively, the DN 836 may be an edge DN 836, which is a (local) DN that supports the architecture for enabling edge applications. In these examples, the app server 838 may represent the physical hardware systems/devices providing app server functionality and/or the application software resident in the cloud or at an edge compute node that performs server function(s). In some examples, the app/content server 838 provides an edge hosting environment that provides support required for Edge Application Server's execution.

In some examples, the 5GS can use one or more edge compute nodes to provide an interface and offload processing of wireless communication traffic. In these examples, the edge compute nodes may be included in, or co-located with one or more RANs 810, 814. For example, the edge compute nodes can provide a connection between the RAN 814 and UPF 848 in the 5GC 840. The edge compute nodes can use one or more NFV instances instantiated on virtualization infrastructure within the edge compute nodes to process wireless connections to and from the RAN 814 and UPF 848.

In some implementations, the edge compute nodes provide a distributed computing environment for application and service hosting, and also provide storage and processing resources so that data and/or content can be processed in close proximity to subscribers (e.g., users of UEs 802) for faster response times. The edge compute nodes also support multitenancy run-time and hosting environment(s) for applications, including virtual appliance applications that may be delivered as packaged virtual machine (VM) images, middleware application and infrastructure services, content delivery services including content caching, mobile big data analytics, and computational offloading, among others. Computational offloading involves offloading computational tasks, workloads, applications, and/or services to the edge compute nodes from the UEs 802, CN 820, DN 836, and/or server(s) 838, or vice versa. For example, a device application or client application operating in a UE 802 may offload application tasks or workloads to one or more edge compute nodes. In another example, an edge compute node may offload application tasks or workloads to a set of UEs 802 (e.g., for distributed machine learning computation and/or the like).

The edge compute nodes may include or be part of an edge system that employs one or more edge computing technologies (ECTs) (also referred to as an "edge computing framework" or the like). The edge compute nodes may also be referred to as "edge hosts" or "edge servers." The edge system includes a collection of edge servers and edge management systems (not shown) necessary to run edge computing applications within an operator network or a subset of an operator network. The edge servers are physical computer systems that may include an edge platform and/or virtualization infrastructure, and provide compute, storage, and network resources to edge computing applications. Each of the edge servers are disposed at an edge of a corresponding access network, and are arranged to provide computing resources and/or various services (e.g., computational task and/or workload offloading, cloud-computing capabilities, IT services, and other like resources and/or services as discussed herein) in relatively close proximity to UEs 802. The VI of the edge compute nodes provide virtualized environments and virtualized resources for the edge hosts, and the edge computing applications may run as VMs and/or application containers on top of the VI.

In one example implementation, the ECT is and/or operates according to the MEC framework, as discussed in ETSI GR MEC 001 v3.1.1 (2022-01), ETSI GS MEC 003 v3.1.1 (2022-03), ETSI GS MEC 009 v3.1.1 (2021-06), ETSI GS MEC 010-1 v1.1.1 (2017-10), ETSI GS MEC 010-2 v2.2.1 (2022-02), ETSI GS MEC 011 v2.2.1 (2020-12), ETSI GS MEC 012 V2.2.1 (2022-02), ETSI GS MEC 013 V2.2.1 (2022-01), ETSI GS MEC 014 v2.1.1 (2021-03), ETSI GS MEC 015 v2.1.1 (2020-06), ETSI GS MEC 016 v2.2.1 (2020-04), ETSI GS MEC 021 v2.2.1 (2022-02), ETSI GRMEC 024 v2.1.1 (2019-11), ETSI GS MEC 028 V2.2.1 (2021-07), ETSI GS MEC 029 v2.2.1 (2022-01), ETSI MEC GS 030 v2.1.1 (2020-04), ETSI GR MEC 031 v2.1.1 (2020-10), U.S. Provisional App. No. 63/003,834 filed April 1, 2020 ("[US'834]"), and Int'l App. No. PCT/US2020/066969 filed on December 23, 2020 ("[PCT'696]") (collectively referred to herein as "[MEC]"), the contents of each of which are hereby incorporated by reference in their entireties. This example implementation (and/or in any other example implementation discussed herein) may also include NFV and/or other like virtualization technologies such as those discussed in ETSI GR NFV 001 V1.3.1 (2021-03), ETSI GS NFV 002 V1.2.1 (2014-12), ETSI GR NFV 003 V1.6.1 (2021-03), ETSI GS NFV 006 V2.1.1 (2021-01), ETSI GS NFV-INF 001 V1.1.1 (2015-01), ETSI GS NFV-INF 003 V1.1.1 (2014-12), ETSI GS NFV-INF 004 V1.1.1 (2015-01), ETSI GS NFV-MAN 001 v1.1.1 (2014-12), and/or Israel et al., OSM Release FIVE Technical Overview, ETSI OPEN SOURCE MANO, OSM White Paper, 1st ed. (Jan. 2019), https://osm.etsi.org/images/OSM-Whitepaper-TechContent-ReleaseFIVE-FINAL.pdf (collectively referred to as "[ETSINFV]"), the contents of each of which are hereby incorporated by reference in their entireties. Other virtualization technologies and/or service orchestration and automation platforms may be used such as, for example, those discussed in E2E Network Slicing Architecture, GSMA, Official Doc. NG.127, v1.0 (03 Jun. 2021), https://www.gsma.com/newsroom/wp-content/uploads//NG.127-v1.0-2.pdf, Open Network Automation Platform (ONAP) documentation, Release Istanbul, v9.0.1 (17 Feb. 2022), https://docs.onap.org/en/latest/index.html ("[ONAP]"), 3GPP Service Based Management Architecture (SBMA) as discussed in 3GPP TS 28.533 v17.1.0 (2021-12-23) ("[TS28533]"), the contents of each of which are hereby incorporated by reference in their entireties.

In another example implementation, the ECT is and/or operates according to the O-RAN framework. Typically, front-end and back-end device vendors and carriers have worked closely to ensure compatibility. The flip-side of such a working model is that it becomes quite difficult to plug-and-play with other devices and this can hamper innovation. To combat this, and to promote openness and inter-operability at every level, several key players interested in the wireless domain (e.g., carriers, device manufacturers, academic institutions, and/or the like) formed the Open RAN alliance ("O-RAN") in 2018. The O-RAN network architecture is a building block for designing virtualized RAN on programmable hardware with radio access control powered by AI/ML. Various aspects of the O-RAN architecture are described in O-RAN Working Group 1 (Use Cases and Overall Architecture): O-RANArchitecture Description, O-RAN ALLIANCE WG1, O-RAN Architecture Description v08.00, Release R003 (Mar. 2023) ("[ORAN.OAD]"); O-RAN Operations and Maintenance Architecture Specification v04.00, O-RAN ALLIANCE WG1 (Feb. 2021) ("[ORAN.OAM-Architecture]"); O-RAN Operations and Maintenance Interface Specification v04.00, O-RAN ALLIANCE WG1 (Feb. 2021) ("[ORAN.O1]"); O-RAN Information Model and Data Models Specification v01.00, O-RAN ALLIANCE WG1 (Feb. 2021); O-RAN Working Group 1 Slicing Architecture, O-RAN ALLIANCE WG1, Slicing Architecture Technical Specification v09.00, Release R003 (Mar. 2023); O-RAN Working Group 1 Use Cases Detailed Specification Architecture, v10.00, Release R003 (Mar. 2023) ("[ORAN.UseCases]"); O-RAN Working Group 2 (Non-RT RIC and A1 interface WG) A1 interface: General Aspects and Principles, v03.01, Relase R003 (Mar. 2023) ("[ORAN.A1GAP]"); O-RAN Working Group 2 (Non-RT RIC and A1 interface WG) A1 interface: Type Definitions, v05.00, Relase R003 (Mar. 2023); O-RAN Working Group 2 (Non-RT RIC and A1 interface WG) A1 interface: Transport Protocol, v02.01, Relase R003 (Mar. 2023); O-RAN Working Group 2 AI/ML workflow description and requirements v01.03 O-RAN ALLIANCE WG2 (Oct. 2021) ("[ORAN.AIML]"); O-RAN Working Group 2 (Non-RT RIC and A1 interface WG): R1 interface: General Aspects and Principles 4.0, v04.00, Release R003 (Mar. 2023); O-RAN Working Group 2 (Non-RT RIC and A1 interface WG) Non-RT RIC Architecture v02.01 (Oct. 2022) ("[O-RAN.WG2.Non-RT-RIC-ARCH-TS-v02.01]"); O-RAN Working Group 2 Non-RT RIC: Functional Architecture v01.01, O-RAN ALLIANCE WG2 (Jun. 2021); O-RAN Working Group 3 Near-Real-time RAN Intelligent Controller Architecture & E2 General Aspects and Principles, v03.00, Release R003 (Mar. 2023) ("[ORAN.E2GAP]"); O-RAN Working Group 3, Near-Real-time Intelligent Controller, E2 Application Protocol (E2AP), v03.00, Release R003 (Mar. 2023) ("[ORAN.E2AP]"); O-RAN Working Group 3 Near-Real-time Intelligent Controller E2 Service Model (E2SM), v03.00, Release R003 (Mar. 2023) ("[ORAN.E2SM]"); O-RAN Working Group 3 Near-Real-time Intelligent Controller E2 Service Model (E2SM) KPM, v03.00, Release R003 (Mar. 2023) ("[ORAN.WG3.E2SM-KPM]"); O-RAN Working Group 3 Near-Real-time Intelligent Controller E2 Service Model (E2SM), Cell Configuration and Control, v01.01, Release R003 (Mar. 2023) ("[ORAN.E2SM-CCC]"); O-RAN Working Group 3 Near-Real-time Intelligent Controller E2 Service Model (E2SM) RAN Function Network Interface (NI) v01.00 (Feb. 2020) ("[ORAN.E2SM-NI]"); O-RAN Working Group 3 Near-Real-time Intelligent Controller E2 Service Model (E2SM) RAN Control v01.03 (Oct. 2022) ("[ORAN.E2SM-RC]"); O-RAN Working Group 3 (Near-Real-time RAN Intelligent Controller and E2 Interface Working Group): Near-RT RIC Architecture, v04.00, Release R003 (Mar. 2023) ("[ORAN.RICARCH]"); O-RAN Working Group 4 (Open Fronthaul Interfaces WG) Control, User and Synchronization Plane Specification, v11.00, Release R003 (Mar. 2023) ("[ORAN.CUS]"); O-RANFronthaul Working Group 4 Cooperative Transport Interface Transport Control Plane Specification, v03.00 (Oct. 2022); O-RAN Fronthaul Working Group 4 Cooperative Transport Interface Transport Management Plane Specification, v11.00, Release R003 (Mar. 2023) ("[ORAN.MP]"); O-RAN Alliance Working Group 5 OI Interface specification for O-CU-UP and O-CU-CP v04.00 (Oct. 2022); O-RAN Alliance Working Group 5 OI Interface specification for O-DU, v06.00, Release R003 (Mar. 2023); O-RAN Open F1/W1/E1/X2/Xn Interfaces Working Group Transport Specification, O-RAN ALLIANCE WG5, v01.00 (Apr. 2020); O-RAN Working Group 6 (Cloudification and Orchestration) Cloud Architecture and Deployment Scenarios for O-RAN Virtualized RAN v04.00 (Oct. 2022) ("[ORAN.CADS]"); O-RAN Cloud Platform Reference Designs, v02.00, O-RAN ALLIANCE WG6 (Feb. 2021); O-RAN Working Group 6, O2 Interface General Aspects and Principles, v03.00, Release R003 (Mar. 2023); O-RAN Working Group 6 (Cloudification and Orchestration Work Group): O-RAN Acceleration Abstraction Layer General Aspects and Principles, v05.00, Release R003 (Mar. 2023); O-RAN Working Group 6: O-Cloud Notification API Specification for Event Consumers, v03.00 (Oct. 2022) ("[ORAN.O-CloudNotificationAPI]"); O-RAN White Box Hardware Working Group Hardware Reference Design Specification for Indoor Pico Cell with Fronthaul Split Option 6 v02.00, O-RAN ALLIANCE WG7 (Oct. 2021) ("[ORAN.IPC-HRD-Opt6]"); O-RAN WG7 Hardware Reference Design Specification for Indoor Picocell (FR1) with Split Architecture Option 7-2 v03.00, O-RAN ALLIANCE WG7 (Oct. 2021) ("[ORAN.IPC-HRD-Opt7-2]"); O-RAN WG7 Hardware Reference Design Specification for Indoor Picocell (FR1) with Split Architecture Option 8 v03.00 (Oct. 2021) ("[ORAN.IPC-HRD-Opt8]"); O-RAN White Box Hardware Working Group Hardware Reference Design Specification for Outdoor Micro Cell with Split Architecture Option 7.2 v03.00, O-RAN ALLIANCE WG7 (Oct. 2022) ("[ORAN.OMC-HRD-Opt7-2]"); O-RAN White Box Hardware WorkingGroup Hardware Reference Design Specification for Outdoor Macrocell with Split Architecture Option 7.2, v02.00, Release R003 (Mar. 2023) ("[ORAN.OMAC-HRD]"); O-RAN Open X-haul Transport Working Group Management interfaces for Transport Network Elements, v05.00, Release R003 (Mar. 2023); O-RAN Open Transport Working Group 9 Xhaul Packet Switched Architectures and Solutions, v03.00, Release R003 (Mar. 2023) ("[ORAN.XPSAAS]"); O-RAN Open X-haul Transport Working Group Synchronization Architecture and Solution Specification, v03.00 (Oct. 2022); O-RAN Open Xhaul Transport WG9 WDM-based Fronthaul Transport, v03.00, Release R003 (Mar. 2023); O-RAN Operations and Maintenance Architecture, v08.00, Release R003 (Mar. 2023) ("[ORAN.OAM-Arch]"); O-RAN Operations and Maintenance Interface Specification, v09.00, Release R003 (Mar. 2023) ("[ORAN.O1-Interface.0]"); and O-RAN: Towards an Open and Smart RAN, O-RAN ALLIANCE, White Paper (Oct. 2018) (collectively referred to as "[O-RAN]"), the contents of each of which are hereby incorporated by reference in their entireties.

In another example implementation, the ECT is and/or operates according to the 3rd Generation Partnership Project (3GPP) System Aspects Working Group 6 (SA6) Architecture for enabling Edge Applications (referred to as "3GPP edge computing") as discussed in 3GPP TS 23.558 v18.1.0 (2022-12-23) ("[TS23558]"), 3GPP TS 23.501 v18.0.0 (2022-12-21) ("[TS23501]"), 3GPP TS 23.502 v18.1.1 (2023-04-05) ("[TS23502]"), 3GPP TS 23.548 v18.1.0 (2023-04-06) ("[TS23548]"), 3GPP TS 28.538 v18.2.0 (2023-03-30) ("[TS28538]"), 3GPP TR 23.700-98 v18.0.0 (2022-12-23) ("[TR23700-98]"), 3GPP TS 23.222 v18.0.0 (2022-12-23) ("[TS23222]"), 3GPP TS 33.122 v18.0.0 (2022-12-16) ("[TS33122]"), 3GPP 3GPP TS 29.222 v17.1.0 (2021-06-25) ("[TS29222]"), 3GPP TS 29.522 v18.0.0 (2022-12-16) ("[TS29522]"), 3GPP TS 29.122 v18.0.0 (2022-12-16) ("[TS29122]"), 3GPP TS 23.682 v17.3.0 (2022-06-15) ("[TS23682]"), 3GPP TS 23.434 v18.3.0 (2022-12-23) ("[TS23434]"), and 3GPP TS 23.401 v18.0.0 (2022-12-21) (collectively referred to as "[SA6Edge]"), the contents of each of which are hereby incorporated by reference in their entireties.

In another example implementation, the ECT is and/or operates according to the Intel^{®} Smart Edge Open framework (formerly known as OpenNESS) as discussed in Intel® Smart Edge Open Developer Guide, version 21.09 (30 Sep. 2021), available at: https://smart-edge-open.github.io/ ("[ISEO]"), the contents of which is hereby incorporated by reference in its entirety.

In another example implementation, the ECT operates according to the Multi-Access Management Services (MAMS) framework as discussed in Kanugovi et al., Multi-Access Management Services (MAMS), INTERNET ENGINEERING TASK FORCE (IETF), Request for Comments (RFC) 8743 (Mar. 2020) ("[RFC8743]"), Ford et al., TCP Extensions for Multipath Operation with Multiple Addresses, IETF RFC 8684, (Mar. 2020), De Coninck et al., Multipath Extensions for QUIC (MP-QUIC), IETF DRAFT-DECONINCK-QUIC-MULTIPATH-07, IETA, QUIC Working Group (03-May-2021), Zhu et al., User-Plane Protocols for Multiple Access Management Service, IETF DRAFT-ZHU-INTAREA-MAMS-USER-PROTOCOL-09, IETA, INTAREA (04-Mar-2020), and Zhu et al., Generic Multi-Access (GMA) Convergence Encapsulation Protocols, IETF RFC 9188 (Feb. 2022) (collectively referred to as "[MAMS]"), the contents of each of which are hereby incorporated by reference in their entireties.

It should be understood that the aforementioned edge computing frameworks/ECTs and services deployment examples are only illustrative examples of ECTs, and that the present disclosure may be applicable to many other or additional edge computing/networking technologies in various combinations and layouts of devices located at the edge of a network including the various edge computing networks/systems described herein. Further, the techniques disclosed herein may relate to other IoT edge network systems and configurations, and other intermediate processing entities and architectures may also be applicable to the present disclosure. Examples of such edge computing/networking technologies include [MEC]; [O-RAN]; [ISEO]; [SA6Edge]; Content Delivery Networks (CDNs) (also referred to as "Content Distribution Networks" or the like); Mobility Service Provider (MSP) edge computing and/or Mobility as a Service (MaaS) provider systems (e.g., used in AECC architectures); Nebula edge-cloud systems; Fog computing systems; Cloudlet edge-cloud systems; Mobile Cloud Computing (MCC) systems; Central Office Re-architected as a Datacenter (CORD), mobile CORD (M-CORD) and/or Converged Multi-Access and Core (COMAC) systems; and/or the like. Further, the techniques disclosed herein may relate to other IoT edge network systems and configurations, and other intermediate processing entities and architectures may also be used for purposes of the present disclosure.

The interfaces of the 5GC 840 include reference points and service-based interfaces. The reference points include: N1 (between the UE 802 and the AMF 844), N2 (between RAN 814 and AMF 844), N3 (between RAN 814 and UPF 848), N4 (between the SMF 846 and UPF 848), N5 (between PCF 856 and AF 860), N6 (between UPF 848 and DN 836), N7 (between SMF 846 and PCF 856), N8 (between UDM 858 and AMF 844), N9 (between two UPFs 848), N10 (between the UDM 858 and the SMF 846), N11 (between the AMF 844 and the SMF 846), N12 (between AUSF 842 and AMF 844), N13 (between AUSF 842 and UDM 858), N14 (between two AMFs 844; not shown), N15 (between PCF 856 and AMF 844 in case of a non-roaming scenario, or between the PCF 856 in a visited network and AMF 844 in case of a roaming scenario), N16 (between two SMFs 846; not shown), and N22 (between AMF 844 and NSSF 850). Other reference point representations not shown in FIG. 8 can also be used. The service-based representation of FIG. 8 represents NFs within the control plane that enable other authorized NFs to access their services. The service-based interfaces (SBIs) include: Namf (SBI exhibited by AMF 844), Nsmf (SBI exhibited by SMF 846), Nnef (SBI exhibited by NEF 852), Npcf (SBI exhibited by PCF 856), Nudm (SBI exhibited by the UDM 858), Naf (SBI exhibited by AF 860), Nnrf (SBI exhibited by NRF 854), Nnssf (SBI exhibited by NSSF 850), Nausf (SBI exhibited by AUSF 842). Other service-based interfaces (e.g., Nudr, N5g-eir, and Nudsf) not shown in FIG. 8 can also be used. In some examples, the NEF 852 can provide an interface to edge compute nodes 836x, which can be used to process wireless connections with the RAN 814.

Although not shown by FIG. 8, the system 800 may also include NFs that are not shown such as, for example, Unstructured Data Storage Function (UDSF), Network Slice Admission Control Function (NSACF), Network Slice-specific and SNPN Authentication and Authorization Function (NSSAAF), UE radio Capability Management Function (UCMF), 5G-Equipment Identity Register (5G-EIR), Network Data Analytics Function (NWDAF), CHarging Function (CHF), Time Sensitive Networking AF (TSN AF), Time Sensitive Communication and Time Synchronization Function (TSCTSF), Data Collection Coordination Function (DCCF), Analytics Data Repository Function (ADRF), Messaging Framework Adaptor Function (MFAF), Non-Seamless WLAN Offload Function (NSWOF), Service Communication Proxy (SCP), Security Edge Protection Proxy (SEPP), Non-3GPP InterWorking Function (N3IWF), Trusted Non-3GPP Gateway Function (TNGF), Wireline Access Gateway Function (W-AGF), and/or Trusted WLAN Interworking Function (TWIF) as discussed in [TS23501].

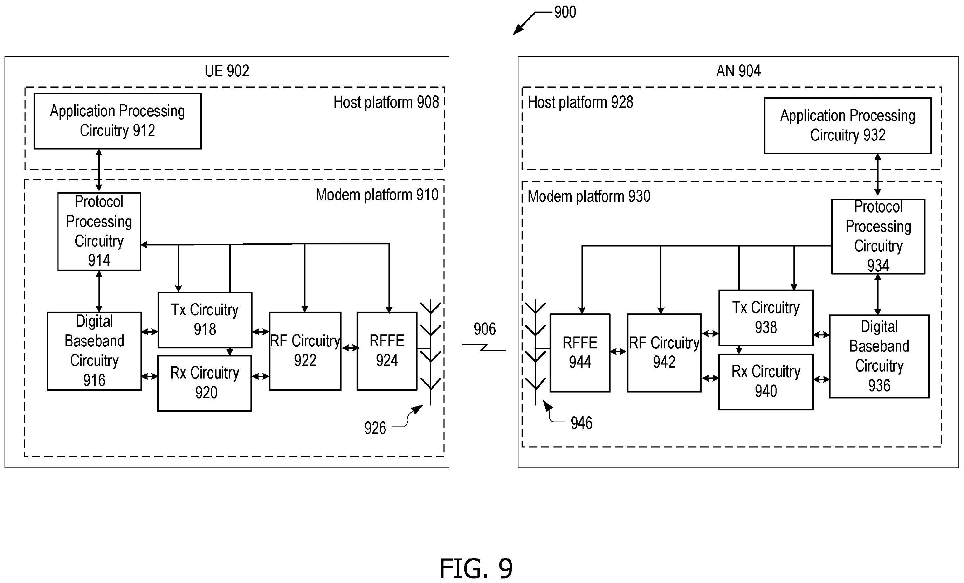

FIG. 9 schematically illustrates a wireless network 900. The wireless network 900 includes a UE 902 in wireless communication with an AN 904. The UE 902 and AN 904 may be similar to, and substantially interchangeable with, like-named components described elsewhere herein.

The UE 902 may be communicatively coupled with the AN 904 via connection 906. The connection YY06 is illustrated as an air interface to enable communicative coupling, and can be consistent with cellular communications protocols such as an LTE protocol or a 5G NR protocol operating at mmWave or sub-6GHz frequencies.

The UE 902 includes a host platform 908 coupled with a modem platform 910. The host platform 908 includes application processing circuitry 912, which may be coupled with protocol processing circuitry 914 of the modem platform 910. The application processing circuitry 912 may run various applications for the UE 902 that source/sink application data. The application processing circuitry 912 may further implement one or more layer operations to transmit/receive application data to/from a data network. These layer operations includes transport (for example UDP) and Internet (for example, IP) operations

The protocol processing circuitry 914 may implement one or more of layer operations to facilitate transmission or reception of data over the connection 906. The layer operations implemented by the protocol processing circuitry 914 includes, for example, MAC, RLC, PDCP, RRC and NAS operations.

The modem platform 910 may further include digital baseband circuitry 916 that may implement one or more layer operations that are "below" layer operations performed by the protocol processing circuitry 914 in a network protocol stack. These operations includes, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which includes one or more of space-time, space-frequency or spatial coding, reference signal generation/detection, preamble sequence generation and/or decoding, synchronization sequence generation/detection, control channel signal blind decoding, and other related functions.

The modem platform 910 may further include transmit circuitry 918, receive circuitry 920, RF circuitry 922, and RF front end (RFFE) 924, which includes or connect to one or more antenna panels 926. Briefly, the transmit circuitry 918 includes a digital-to-analog converter, mixer, intermediate frequency (IF) components, etc.; the receive circuitry 920 includes an analog-to-digital converter, mixer, IF components, etc.; the RF circuitry 922 includes a low-noise amplifier, a power amplifier, power tracking components, etc.; RFFE 924 includes filters (for example, surface/bulk acoustic wave filters), switches, antenna tuners, beamforming components (for example, phase-array antenna components), etc. The selection and arrangement of the components of the transmit circuitry 918, receive circuitry 920, RF circuitry 922, RFFE 924, and antenna panels 926 (referred generically as "transmit/receive components") may be specific to details of a specific implementation such as, for example, whether communication is TDM or FDM, in mmWave or sub-6 gHz frequencies, etc. In some examples, the transmit/receive components may be arranged in multiple parallel transmit/receive chains, may be disposed in the same or different chips/modules, etc.

In some examples, the protocol processing circuitry 914 includes one or more instances of control circuitry (not shown) to provide control functions for the transmit/receive components.

A UE reception may be established by and via the antenna panels 926, RFFE 924, RF circuitry 922, receive circuitry 920, digital baseband circuitry 916, and protocol processing circuitry 914. In some examples, the antenna panels 926 may receive a transmission from the AN 904 by receive-beamforming signals received by a set of antennas/antenna elements of the one or more antenna panels 926.

A UE transmission may be established by and via the protocol processing circuitry 914, digital baseband circuitry 916, transmit circuitry 918, RF circuitry 922, RFFE 924, and antenna panels 926. In some examples, the transmit components of the UE 904 may apply a spatial filter to the data to be transmitted to form a transmit beam emitted by the antenna elements of the antenna panels 926.

Similar to the UE 902, the AN 904 includes a host platform 928 coupled with a modem platform 930. The host platform 928 includes application processing circuitry 932 coupled with protocol processing circuitry 934 of the modem platform 930. The modem platform may further include digital baseband circuitry 936, transmit circuitry 938, receive circuitry 940, RF circuitry 942, RFFE circuitry 944, and antenna panels 946. The components of the AN 904 may be similar to and substantially interchangeable with like-named components of the UE 902. In addition to performing data transmission/reception as described above, the components of the AN 908 may perform various logical functions that include, for example, RNC functions such as radio bearer management, uplink and downlink dynamic radio resource management, and data packet scheduling.

Examples of the antenna elements of the antenna panels 926 and/or the antenna elements of the antenna panels 946 include planar inverted-F antennas (PIFAs), monopole antennas, dipole antennas, loop antennas, patch antennas, Yagi antennas, parabolic dish antennas, omni-directional antennas, and/or the like.

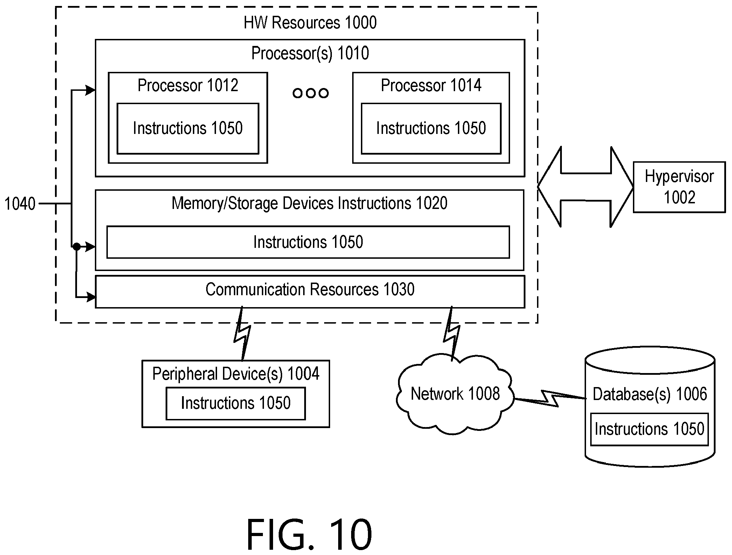

FIG. 10 illustrates components capable of reading instructions from a machine-readable or computer-readable medium (e.g., a non-transitory machine-readable storage medium) and perform any one or more of the methodologies discussed herein. Specifically, FIG. 10 shows hardware resources 1000 including one or more processors (or processor cores) 1010, one or more memory/storage devices 1020, and one or more communication resources 1030, each of which may be communicatively coupled via a bus 1040 or other interface circuitry. For examples where node virtualization (e.g., NFV) is utilized, a hypervisor 1002 may be executed to provide an execution environment for one or more network slices/sub-slices to utilize the hardware resources 1000. In some examples, the hardware resources 1000 may be implemented in or by an individual compute node, which may be housed in an enclosure of various form factors. In other examples, the hardware resources 1000 may be implemented by multiple compute nodes that may be deployed in one or more data centers and/or distributed across one or more geographic regions.

The processors 1010 may include, for example, a processor 1012 and a processor 1014. The processors 1010 may be or include, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), a microprocessor or controller, a multi-core processor, a multithreaded processor, an ultra-low voltage processor, an embedded processor, an xPU, a data processing unit (DPU), an Infrastructure Processing Unit (IPU), a network processing unit (NPU), another processor (including any of those discussed herein), and/or any suitable combination thereof.

The memory/storage devices 1020 may include main memory, disk storage, or any suitable combination thereof. The memory/storage devices 1020 may include, but are not limited to, any type of volatile, non-volatile, semi-volatile memory, and/or any combination thereof. As examples, the memory/storage devices 1020 can be or include random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, dual inline memory modules (DIMMs), microDIMMs, MiniDIMMs, block addressable memory device(s) (e.g., those based on NAND or NOR technologies (e.g., single-level cell (SLC), Multi-Level Cell (MLC), Quad-Level Cell (QLC), Tri-Level Cell (TLC), or some other NAND), read-only memory (ROM), programmable ROM (PROM), erasable PROM (EPROM), electrically EPROM (EEPROM), flash memory, non-volatile RAM (NVRAM), solid-state storage, magnetic disk storage mediums, optical storage mediums, memory devices that use chalcogenide glass, multi-threshold level NAND flash memory, NOR flash memory, single or multi-level Phase Change Memory (PCM) and/or phase change memory with a switch (PCMS), NVM devices that use chalcogenide phase change material (e.g., chalcogenide glass), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, and/or a combination of any of the aforementioned memory devices, and/or other memory.

The communication resources 1030 may include interconnection or network interface controllers, components, or other suitable devices to communicate with one or more peripheral devices 1004 or one or more databases 1006 or other network elements via a network 1008. For example, the communication resources 1030 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 1050 comprise software, program code, application(s), applet(s), an app(s), firmware, microcode, machine code, and/or other executable code for causing at least any of the processors 1010 to perform any one or more of the methodologies and/or techniques discussed herein. The instructions 1050 may reside, completely or partially, within at least one of the processors 1010 (e.g., within the processor's cache memory), the memory/storage devices 1020, or any suitable combination thereof. Furthermore, any portion of the instructions 1050 may be transferred to the hardware resources 1000 from any combination of the peripheral devices 1004 or the databases 1006. Accordingly, the memory of processors 1010, the memory/storage devices 1020, the peripheral devices 1004, and the databases 1006 are examples of computer-readable and machine-readable media.

In some examples, the peripheral devices 1004 may represent one or more sensors (also referred to as "sensor circuitry"). The sensor circuitry includes devices, modules, or subsystems whose purpose is to detect events or changes in its environment and send the information (sensor data) about the detected events to some other a device, module, subsystem, and/or the like. Individual sensors may be exteroceptive sensors (e.g., sensors that capture and/or measure environmental phenomena and/ external states), proprioceptive sensors (e.g., sensors that capture and/or measure internal states of a compute node or platform and/or individual components of a compute node or platform), and/or exproprioceptive sensors (e.g., sensors that capture, measure, or correlate internal states and external states). Examples of such sensors include, inter alia, inertia measurement units (IMU) comprising accelerometers, gyroscopes, and/or magnetometers; microelectromechanical systems (MEMS) or nanoelectromechanical systems (NEMS) comprising 3-axis accelerometers, 3-axis gyroscopes, and/or magnetometers; level sensors; flow sensors; temperature sensors (e.g., thermistors, including sensors for measuring the temperature of internal components and sensors for measuring temperature external to the compute node or platform); pressure sensors; barometric pressure sensors; gravimeters; altimeters; image capture devices (e.g., cameras); light detection and ranging (LiDAR) sensors; proximity sensors (e.g., infrared radiation detector and the like); depth sensors, ambient light sensors; optical light sensors; ultrasonic transceivers; microphones; and the like.

Additionally or alternatively, the peripheral devices 1004 may represent one or more actuators, which allow a compute node, platform, machine, device, mechanism, system, or other object to change its state, position, and/or orientation, or move or control a compute node, platform, machine, device, mechanism, system, or other object. The actuators comprise electrical and/or mechanical devices for moving or controlling a mechanism or system, and converts energy (e.g., electric current or moving air and/or liquid) into some kind of motion. As examples, the actuators can be or include any number and combination of the following: soft actuators (e.g., actuators that changes its shape in response to a stimuli such as, for example, mechanical, thermal, magnetic, and/or electrical stimuli), hydraulic actuators, pneumatic actuators, mechanical actuators, electromechanical actuators (EMAs), microelectromechanical actuators, electrohydraulic actuators, linear actuators, linear motors, rotary motors, DC motors, stepper motors, servomechanisms, electromechanical switches, electromechanical relays (EMRs), power switches, valve actuators, piezoelectric actuators and/or biomorphs, thermal biomorphs, solid state actuators, solid state relays (SSRs), shape-memory alloy-based actuators, electroactive polymer-based actuators, relay driver integrated circuits (ICs), solenoids, impactive actuators/mechanisms (e.g., jaws, claws, tweezers, clamps, hooks, mechanical fingers, humaniform dexterous robotic hands, and/or other gripper mechanisms that physically grasp by direct impact upon an object), propulsion actuators/mechanisms (e.g., wheels, axles, thrusters, propellers, engines, motors (e.g., those discussed previously), clutches, and the like), projectile actuators/mechanisms (e.g., mechanisms that shoot or propel objects or elements), and/or audible sound generators, visual warning devices, and/or other like electromechanical components. Additionally or alternatively, the actuators can include virtual instrumentation and/or virtualized actuator devices. Additionally or alternatively, the actuators can include various controller and/or components of the compute node or platform (or components thereof) such as, for example, host controllers, cooling element controllers, baseboard management controller (BMC), platform controller hub (PCH), uncore components (e.g., shared last level cache (LLC) cache, caching agent (Cbo), integrated memory controller (IMC), home agent (HA), power control unit (PCU), configuration agent (Ubox), integrated I/O controller (IIO), and interconnect (IX) link interfaces and/or controllers), and/or any other components such as any of those discussed herein. The compute node or platform may be configured to operate one or more actuators based on one or more captured events, instructions, control signals, and/or configurations received from a service provider, client device, and/or other components of a compute node or platform. Additionally or alternatively, the actuators are used to change the operational state (e.g., on/off, zoom or focus, and/or the like), position, and/or orientation of the sensors.

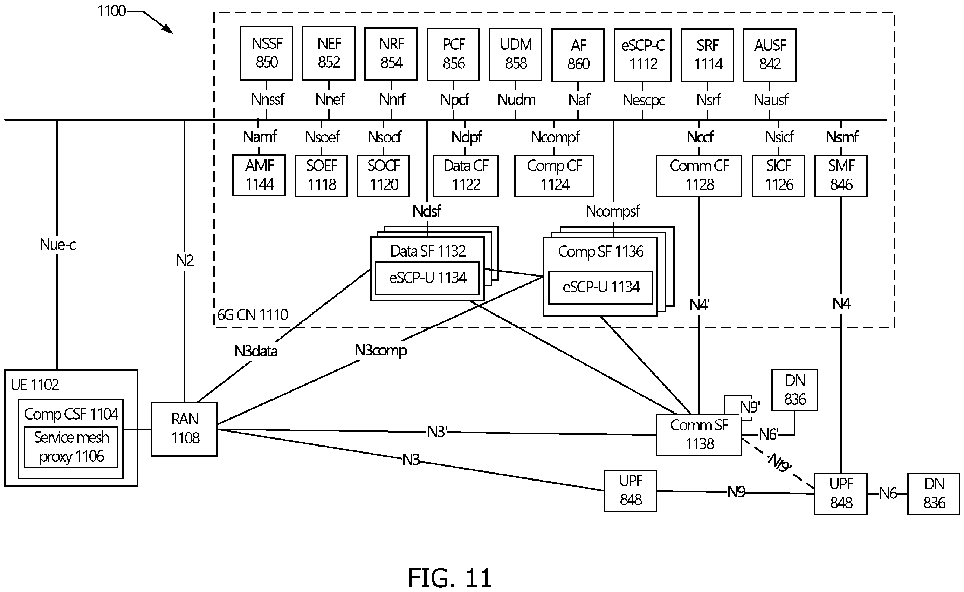

FIG. 11 illustrates an example cellular network 1100. The network 1100 may operate in a matter consistent with 3GPP technical specifications or technical reports for 6G systems. In some examples, the network 1100 may operate concurrently with network 800. For example, in some examples, the network 1100 may share one or more frequency or bandwidth resources with network 800. As one specific example, a UE (e.g., UE 1102) may be configured to operate in both network 1100 and network 800. Such configuration may be based on a UE including circuitry configured for communication with frequency and bandwidth resources of both networks 800 and 1100. In general, several elements of network 1100 may share one or more characteristics with elements of network 800. For the sake of brevity and clarity, such elements may not be repeated in the description of network 1100.

The network 1100 may include a UE 1102, which may include any mobile or non-mobile computing device designed to communicate with a RAN 1108 via an over-the-air connection. The UE 1102 may be similar to, for example, UE 802. The UE 1102 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

Although not specifically shown in FIG. 11, in some examples the network 1100 may include a set of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc. Similarly, although not specifically shown in FIG. 11, the UE 1102 may be communicatively coupled with an AP such as AP 806 as described with respect to FIG. 8. Additionally, although not specifically shown in FIG. 11, in some examples the RAN 1108 may include one or more ANs such as NAN 808 as described with respect to FIG. 8. The RAN 1108 and/or the AN of the RAN 1108 may be referred to as a base station (BS), a RAN node, or using some other term or name.

The UE 1102 and the RAN 1108 may be configured to communicate via an air interface that may be referred to as a sixth generation (6G) air interface. The 6G air interface may include one or more features such as communication in a terahertz (THz) or sub-THz bandwidth, or joint communication and sensing. As used herein, the term "joint communication and sensing" may refer to a system that allows for wireless communication as well as radar-based sensing via various types of multiplexing. As used herein, THz or sub-THz bandwidths may refer to communication in the 80 GHz and above frequency ranges. Such frequency ranges may additionally or alternatively be referred to as "millimeter wave" or "mmWave" frequency ranges.

The RAN 1108 may allow for communication between the UE 1102 and a 6G core network (CN) 1110. Specifically, the RAN 1108 may facilitate the transmission and reception of data between the UE 1102 and the 6G CN 1110. The 6G CN 1110 may include various functions such as NSSF 850, NEF 852, NRF 854, PCF 856, UDM 858, AF 860, SMF 846, and AUSF 842. The 6G CN 1110 may additional include UPF 848 and DN 836 as shown in FIG. 11.

Additionally, the RAN 1108 may include various additional functions that are in addition to, or alternative to, functions of a legacy cellular network such as a 4G or 5G network. Two such functions may include a Compute Control Function (Comp CF) 1124 and a Compute Service Function (Comp SF) 1136. The Comp CF 1124 and the Comp SF 1136 may be parts or functions of the Computing Service Plane. Comp CF 1124 may be a control plane function that provides functionalities such as management of the Comp SF 1136, computing task context generation and management (e.g., create, read, modify, delete), interaction with the underlaying computing infrastructure for computing resource management, etc.. Comp SF 1136 may be a user plane function that serves as the gateway to interface computing service users (such as UE 1102) and computing nodes behind a Comp SF instance. Some functionalities of the Comp SF 1136 may include: parse computing service data received from users to compute tasks executable by computing nodes; hold service mesh ingress gateway or service API gateway; service and charging policies enforcement; performance monitoring and telemetry collection, etc. In some examples, a Comp SF 1136 instance may serve as the user plane gateway for a cluster of computing nodes. A Comp CF 1124 instance may control one or more Comp SF 1136 instances.

Two other such functions may include a Communication Control Function (Comm CF) 1128 and a Communication Service Function (Comm SF) 1138, which may be parts of the Communication Service Plane. The Comm CF 1128 may be the control plane function for managing the Comm SF 1138, communication sessions creation/configuration/releasing, and managing communication session context. The Comm SF 1138 may be a user plane function for data transport. Comm CF 1128 and Comm SF 1138 may be considered as upgrades of SMF 846 and UPF 848, which were described with respect to a 5G system in FIG. 8. The upgrades provided by the Comm CF 1128 and the Comm SF 1138 may enable service-aware transport. For legacy (e.g., 4G or 5G) data transport, SMF 846 and UPF 848 may still be used.

Two other such functions may include a Data Control Function (Data CF) 1122 and Data Service Function (Data SF) 1132 may be parts of the Data Service Plane. Data CF 1122 may be a control plane function and provides functionalities such as Data SF 1132 management, Data service creation/configuration/releasing, Data service context management, etc. Data SF 1132 may be a user plane function and serve as the gateway between data service users (such as UE 1102 and the various functions of the 6G CN 1110) and data service endpoints behind the gateway. Specific functionalities may include include: parse data service user data and forward to corresponding data service endpoints, generate charging data, report data service status.

Another such function may be the Service Orchestration and Chaining Function (SOCF) 1120, which may discover, orchestrate and chain up communication/computing/data services provided by functions in the network. Upon receiving service requests from users, SOCF 1120 may interact with one or more of Comp CF 1124, Comm CF 1128, and Data CF 1122 to identify Comp SF 1136, Comm SF 1138, and Data SF 1132 instances, configure service resources, and generate the service chain, which could contain multiple Comp SF 1136, Comm SF 1138, and Data SF 1132 instances and their associated computing endpoints. Workload processing and data movement may then be conducted within the generated service chain. The SOCF 1120 may also responsible for maintaining, updating, and releasing a created service chain.

Another such function may be the service registration function (SRF) 1114, which may act as a registry for system services provided in the user plane such as services provided by service endpoints behind Comp SF 1136 and Data SF 1132 gateways and services provided by the UE 1102. The SRF 1114 may be considered a counterpart of NRF 854, which may act as the registry for network functions.

Other such functions may include an evolved service communication proxy (eSCP) and service infrastructure control function (SICF) 1126, which may provide service communication infrastructure for control plane services and user plane services. The eSCP may be related to the service communication proxy (SCP) of 5G with user plane service communication proxy capabilities being added. The eSCP is therefore expressed in two parts: eCSP-C 1112 and eSCP-U 1134, for control plane service communication proxy and user plane service communication proxy, respectively. The SICF 1126 may control and configure eCSP instances in terms of service traffic routing policies, access rules, load balancing configurations, performance monitoring, etc.

Another such function is the AMF 1144. The AMF 1144 may be similar to 844, but with additional functionality. Specifically, the AMF 1144 may include potential functional repartition, such as move the message forwarding functionality from the AMF 1144 to the RAN 1108.

Another such function is the service orchestration exposure function (SOEF) 1118. The SOEF may be configured to expose service orchestration and chaining services to external users such as applications.

The UE 1102 may include an additional function that is referred to as a computing client service function (comp CSF) 1104. The comp CSF 1104 may have both the control plane functionalities and user plane functionalities, and may interact with corresponding network side functions such as SOCF 1120, Comp CF 1124, Comp SF 1136, Data CF 1122, and/or Data SF 1132 for service discovery, request/response, compute task workload exchange, etc. The Comp CSF 1104 may also work with network side functions to decide on whether a computing task should be run on the UE 1102, the RAN 1108, and/or an element of the 6G CN 1110.

The UE 1102 and/or the Comp CSF 1104 may include a service mesh proxy 1106. The service mesh proxy 1106 may act as a proxy for service-to-service communication in the user plane. Capabilities of the service mesh proxy 1106 may include one or more of addressing, security, load balancing, and/or the like.

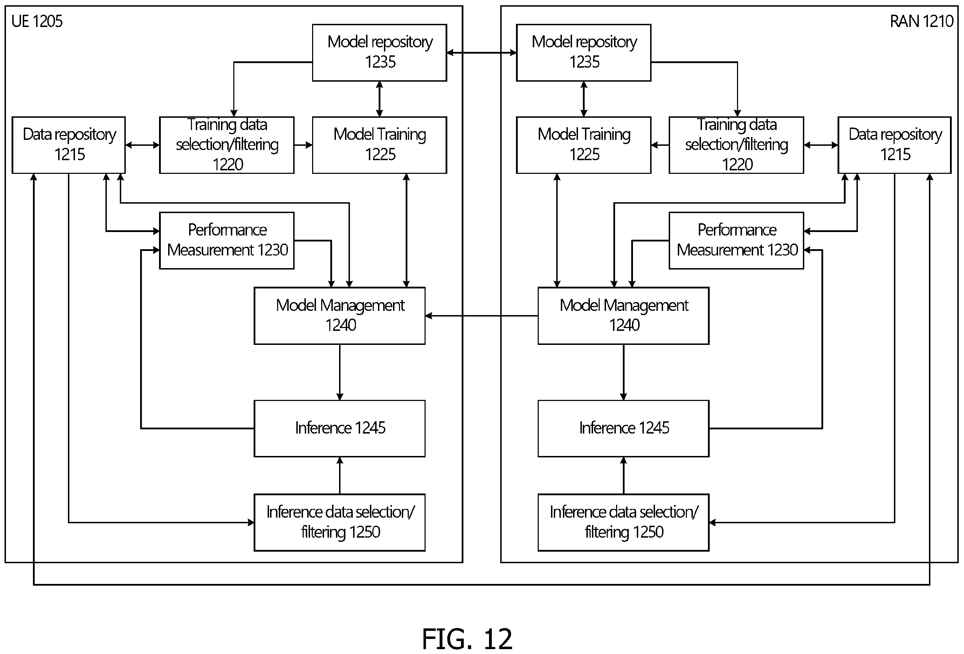

FIG. 12 depicts an example AI/ML-assisted communication network, which includes communication between a UE 1205 and a RAN 1210. More specifically, as described in further detail below, AI/ML models may be used or leveraged to facilitate over-the-air communication between the UE 1205 and the RAN 1210.

In this example, the UE 1205 and the RAN 1210 operate in a matter consistent with 3GPP technical specifications and/or technical reports for 6G systems. In some examples, the wireless cellular communication between the UE 1205 and the RAN 1210 may be part of, or operate concurrently with, networks 1100, 800, and/or some other network described herein.

The UE 1205 may be the same or similar to, and/or share one or more features with UE 802, UE 902, hardware resources 1000, UE 1102, and/or any other UE described herein. The RAN 1210 may be the same or similar to, and/or share one or more features with RAN 804, RAN 810, RAN 814, RAN 1108, and/or any other RAN described herein. Additionally or alternatively, the RAN 1210 can be or include a network access node (NAN), which may be the same or similar as, and/or share one or more features with AN 904, AP 806, ANs 808, and/or any other NAN discussed herein.

In FIG. 12, the AI/ML-related elements of UE 1205 may be the same or similar to the AI/ML-related elements of RAN 1210. For the sake of brevity, description of the various elements will be provided from the point of view of the UE 1205, however it will be understood that such discussion or description will apply to equally named/numbered elements of RAN 1210, unless explicitly stated otherwise.

As previously noted, the UE 1205 may include various elements or functions that are related to AI/ML. Such elements may be implemented as hardware, software, firmware, and/or some combination thereof. In examples, one or more of the elements may be implemented as part of the same hardware (e.g., chip or multi-processor chip), software (e.g., a computing program), or firmware as another element.

One such element may be a data repository 1215. The data repository 1215 may be responsible for data collection and storage. Specifically, the data repository 1215 may collect and store RAN configuration parameters, measurement data, performance key performance indicators (KPIs), model performance metrics, etc., for model training, update, and inference. More generally, collected data is stored into the repository. Stored data can be discovered and extracted by other elements from the data repository 1215. For example, as may be seen, the inference data selection/filter element 1250 may retrieve data from the data repository 1215. In various examples, the UE 1205 may be configured to discover and request data from the data repository 1210 in the RAN, and vice versa. More generally, the data repository 1215 of the UE 1205 may be communicatively coupled with the data repository 1215 of the RAN 1210 such that the respective data repositories of the UE and the RAN may share collected data with one another.

Another such element may be a training data selection/filtering functional block 1220. The training data selection/filter functional block 1220 may be configured to generate training, validation, and testing datasets for model training. Training data may be extracted from the data repository 1215. Data may be selected/filtered based on the specific AI/ML model to be trained. Data may optionally be transformed/augmented/pre-processed (e.g., normalized) before being loaded into datasets. The training data selection/filter functional block 1220 may label data in datasets for supervised learning. The produced datasets may then be fed into model training the model training functional block 1225.

As noted above, another such element may be the model training functional block 1225. This functional block may be responsible for training and updating(re-training) AI/ML models. The selected model may be trained using the fed-in datasets (including training, validation, testing) from the training data selection/filtering functional block. The model training functional block 1225 may produce trained and tested AI/ML models which are ready for deployment. The produced trained and tested models can be stored in a model repository 1235.

The model repository 1235 may be responsible for AI/ML models' (both trained and un-trained) storage and exposure. Trained/updated model(s) may be stored into the model repository 1235. Model and model parameters may be discovered and requested by other functional blocks (e.g., the training data selection/filter functional block 1220 and/or the model training functional block 1225). In some examples, the UE 1205 may discover and request AI/ML models from the model repository 1235 of the RAN 1210. Similarly, the RAN 1210 may be able to discover and/or request AI/ML models from the model repository 1235 of the UE 1205. In some examples, the RAN 1210 may configure models and/or model parameters in the model repository 1235 of the UE 1205. Examples of AI/ML models and model parameters are discussed infra w.r.t Figures 13 and 14.

Another such element may be a model management functional block 1240. The model management functional block 1240 may be responsible for management of the AI/ML model produced by the model training functional block 1225. Such management functions may include deployment of a trained model, monitoring model performance, etc. In model deployment, the model management functional block 1240 may allocate and schedule hardware and/or software resources for inference, based on received trained and tested models. As used herein, "inference" refers to the process of using trained AI/ML model(s) to generate data analytics, actions, policies, etc. based on input inference data. In performance monitoring, based on wireless performance KPIs and model performance metrics, the model management functional block 1240 may decide to terminate the running model, start model re-training, select another model, etc. In examples, the model management functional block 1240 of the RAN 1210 may be able to configure model management policies in the UE 1205 as shown.

Another such element may be an inference data selection/filtering functional block 1250. The inference data selection/filter functional block 1250 may be responsible for generating datasets for model inference at the inference functional block 1245, as described below. Specifically, inference data may be extracted from the data repository 1215. The inference data selection/filter functional block 1250 may select and/or filter the data based on the deployed AI/ML model. Data may be transformed/augmented/pre-processed following the same transformation/augmentation/pre-processing as those in training data selection/filtering as described with respect to functional block 1220. The produced inference dataset may be fed into the inference functional block 1245.

Another such element may be the inference functional block 1245. The inference functional block 1245 may be responsible for executing inference as described above. Specifically, the inference functional block 1245 may consume the inference dataset provided by the inference data selection/filtering functional block 1250, and generate one or more outcomes. Such outcomes may be or include data analytics, actions, policies, etc. The outcome(s) may be provided to the performance measurement functional block 1230.

The performance measurement functional block 1230 may be configured to measure model performance metrics (e.g., accuracy, model bias, run-time latency, etc.) of deployed and executing models based on the inference outcome(s) for monitoring purpose. Model performance data may be stored in the data repository 1215.

### 3. ARTIFICIAL INTELLIGENCE AND MACHINE LEARNING ASPECTS

Machine learning (ML) involves programming computing systems to optimize a performance criterion using example (training) data and/or past experience. ML refers to the use and development of computer systems that are able to learn and adapt without following explicit instructions, by using algorithms and/or statistical models to analyze and draw inferences from patterns in data. ML involves using algorithms to perform specific task(s) without using explicit instructions to perform the specific task(s), but instead relying on learnt patterns and/or inferences. ML uses statistics to build mathematical model(s) (also referred to as "ML models" or simply "models") in order to make predictions or decisions based on sample data (e.g., training data). The model is defined to have a set of parameters, and learning is the execution of a computer program to optimize the parameters of the model using the training data or past experience. The trained model may be a predictive model that makes predictions based on an input dataset, a descriptive model that gains knowledge from an input dataset, or both predictive and descriptive. Once the model is learned (trained), it can be used to make inferences (e.g., predictions).

ML algorithms perform a training process on a training dataset to estimate an underlying ML model. An ML algorithm is a computer program that learns from experience with respect to some task(s) and some performance measure(s)/metric(s), and an ML model is an object or data structure created after an ML algorithm is trained with training data. In other words, the term "ML model" or "model" may describe the output of an ML algorithm that is trained with training data. After training, an ML model may be used to make predictions on new datasets. Additionally, separately trained AI/ML models can be chained together in a AI/ML pipeline during inference or prediction generation. Although the term "ML algorithm" refers to different concepts than the term "ML model," these terms may be used interchangeably for the purposes of the present disclosure. Any of the ML techniques discussed herein may be utilized, in whole or in part, and variants and/or combinations thereof, for any of the example embodiments discussed herein.

ML may require, among other things, obtaining and cleaning a dataset, performing feature selection, selecting an ML algorithm, dividing the dataset into training data and testing data, training a model (e.g., using the selected ML algorithm), testing the model, optimizing or tuning the model, and determining metrics for the model. Some of these tasks may be optional or omitted depending on the use case and/or the implementation used.

ML algorithms accept model parameters (or simply "parameters") and/or hyperparameters that can be used to control certain properties of the training process and the resulting model. Model parameters are parameters, values, characteristics, configuration variables, and/or properties that are learnt during training. Model parameters are usually required by a model when making predictions, and their values define the skill of the model on a particular problem. Hyperparameters at least in some examples are characteristics, properties, and/or parameters for an ML process that cannot be learnt during a training process. Hyperparameter are usually set before training takes place, and may be used in processes to help estimate model parameters.

ML techniques generally fall into the following main types of learning problem categories: supervised learning, unsupervised learning, and reinforcement learning. Supervised learning involves building models from a set of data that contains both the inputs and the desired outputs. Unsupervised learning is an ML task that aims to learn a function to describe a hidden structure from unlabeled data. Unsupervised learning involves building models from a set of data that contains only inputs and no desired output labels. Reinforcement learning (RL) is a goal-oriented learning technique where an RL agent aims to optimize a long-term objective by interacting with an environment. Some implementations of AI and ML use data and neural networks (NNs) in a way that mimics the working of a biological brain. An example of such an implementation is shown by FIG. 13.

FIG. 13 illustrates an example NN 1300, which may be suitable for use by one or more of the computing systems (or subsystems) of the various implementations discussed herein, implemented in part by a HW accelerator, and/or the like. The NN 1300 may be deep neural network (DNN) used as an artificial brain of a compute node or network of compute nodes to handle very large and complicated observation spaces. Additionally or alternatively, the NN 1300 can be some other type of topology (or combination of topologies), such as a convolution NN (CNN), deep CNN (DCN), recurrent NN (RNN), Long Short Term Memory (LSTM) network, a Deconvolutional NN (DNN), gated recurrent unit (GRU), deep belief NN, a feed forward NN (FFN), a deep FNN (DFF), deep stacking network, Markov chain, perception NN, Bayesian Network (BN) or Bayesian NN (BNN), Dynamic BN (DBN), Linear Dynamical System (LDS), Switching LDS (SLDS), Optical NNs (ONNs), an NN for reinforcement learning (RL) and/or deep RL (DRL), an autoencoder, and/or the like. NNs are usually used for supervised learning, but can be used for unsupervised learning and/or RL.

The NN 1300 may encompass a variety of ML techniques where a collection of connected artificial neurons 1310 that (loosely) model neurons in a biological brain that transmit signals to other neurons/nodes 1310. The neurons 1310 may also be referred to as nodes 1310, processing elements (PEs) 1310, or the like. The connections 1320 (or edges 1320) between the nodes 1310 are (loosely) modeled on synapses of a biological brain and convey the signals between nodes 1310. Note that not all neurons 1310 and edges 1320 are labeled in FIG. 13 for the sake of clarity.

Each neuron 1310 has one or more inputs and produces an output, which can be sent to one or more other neurons 1310 (the inputs and outputs may be referred to as "signals"). Inputs to the neurons 1310 of the input layer *Lₓ* can be feature values of a sample of external data (e.g., input variables *xᵢ*). The input variables *xᵢ* can be set as a vector containing relevant data (e.g., observations, ML features, and the like). The inputs to hidden units 1310 of the hidden layers *Lₐ, L_{b},* and *L_{c}* may be based on the outputs of other neurons 1310. The outputs of the final output neurons 1310 of the output layer *L_{y}* (e.g., output variables *yⱼ*) include predictions, inferences, and/or accomplish a desired/configured task. The output variables *yⱼ* may be in the form of determinations, inferences, predictions, and/or assessments. Additionally or alternatively, the output variables *yⱼ* can be set as a vector containing the relevant data (e.g., determinations, inferences, predictions, assessments, and/or the like).

In the context of ML, an "ML feature" (or simply "feature") is an individual measureable property or characteristic of a phenomenon being observed. Features are usually represented using numbers/numerals (e.g., integers), strings, variables, ordinals, real-values, categories, and/or the like. Additionally or alternatively, ML features are individual variables, which may be independent variables, based on observable phenomenon that can be quantified and recorded. ML models use one or more features to make predictions or inferences. In some implementations, new features can be derived from old features.

Neurons 1310 may have a threshold such that a signal is sent only if the aggregate signal crosses that threshold. A node 1310 may include an activation function, which defines the output of that node 1310 given an input or set of inputs. Additionally or alternatively, a node 1310 may include a propagation function that computes the input to a neuron 1310 from the outputs of its predecessor neurons 1310 and their connections 1320 as a weighted sum. A bias term can also be added to the result of the propagation function.

The NN 1300 also includes connections 1320, some of which provide the output of at least one neuron 1310 as an input to at least another neuron 1310. Each connection 1320 may be assigned a weight that represents its relative importance. The weights may also be adjusted as learning proceeds. The weight increases or decreases the strength of the signal at a connection 1320.

The neurons 1310 can be aggregated or grouped into one or more layers *L* where different layers *L* may perform different transformations on their inputs. In FIG. 13, the NN 1300 comprises an input layer *Lₓ,* one or more hidden layers *Lₐ, L_{b},* and *L_{c}*, and an output layer *L_{y}* (where *a, b, c, x,* and *y* may be numbers),where each layer *L* comprises one or more neurons 1310. Signals travel from the first layer (e.g., the input layer *L*₁), to the last layer (e.g., the output layer *L_{y}*), possibly after traversing the hidden layers *Lₐ, L_{b},* and *L_{c}* multiple times. In FIG. 13, the input layer *Lₐ* receives data of input variables *xᵢ* (where *i* = 1, ... , *p*, where *p* is a number). Hidden layers *Lₐ, L_{b},* and *L_{c}* processes the inputs *xᵢ*, and eventually, output layer *L_{y}* provides output variables *yⱼ* (where *j* = 1, ..., p', where p' is a number that is the same or different than *p*). In the example of FIG. 13, for simplicity of illustration, there are only three hidden layers *Lₐ, L_{b},* and *L_{c}* in the NN 1300, however, the NN 1300 may include many more (or fewer) hidden layers *Lₐ, L_{b},* and *L_{c}* than are shown.

FIG. 14 shows an RL architecture 1400 comprising an agent 1410 and an environment 1420. The agent 1410 (e.g., software agent or AI agent) is the learner and decision maker, and the environment 1420 comprises everything outside the agent 1410 that the agent 1410 interacts with. The environment 1420 is typically stated in the form of a Markov decision process (MDP), which may be described using dynamic programming techniques. An MDP is a discrete-time stochastic control process that provides a mathematical framework for modeling decision making in situations where outcomes are partly random and partly under the control of a decision maker.

RL is a goal-oriented learning based on interaction with environment. RL is an ML paradigm concerned with how software agents (or AI agents) ought to take actions in an environment in order to maximize a numerical reward signal. In general, RL involves an agent taking actions in an environment that is/are interpreted into a reward and a representation of a state, which is then fed back into the agent. In RL, an agent aims to optimize a long-term objective by interacting with the environment based on a trial and error process. In many RL algorithms, the agent receives a reward in the next time step (or epoch) to evaluate its previous action. Examples of RL algorithms include Markov decision process (MDP) and Markov chains, associative RL, inverse RL, safe RL, Q-learning, multi-armed bandit learning, and deep RL.

The agent 1410 and environment 1420 continually interact with one another, wherein the agent 1410 selects actions A to be performed and the environment 1420 responds to these Actions and presents new situations (or states S) to the agent 1410. The action A comprises all possible actions, tasks, moves, etc., that the agent 1410 can take for a particular context. The state S is a current situation such as a complete description of a system, a unique configuration of information in a program or machine, a snapshot of a measure of various conditions in a system, and/or the like. In some implementations, the agent 1410 selects an action A to take based on a policy *π*. The policy *π* is a strategy that the agent 1410 employs to determine next action A based on the current state S. The environment 1420 also gives rise to rewards *R,* which are numerical values that the agent 1410 seeks to maximize over time through its choice of actions.

The environment 1420 starts by sending a state *Sₜ* to the agent 1410. In some implementations, the environment 1420 also sends an initial a reward *Rₜ* to the agent 1410 with the state *Sₜ*. The agent 1410, based on its knowledge, takes an action *Aₜ* in response to that state *Sₜ*, (and reward *Rₜ*, if any). The action Ar is fed back to the environment 1420, and the environment 1420 sends a state-reward pair including a next state *Sₜ₊₁* and reward *Rₜ₊₁* to the agent 1410 based on the action *Aₜ*. The agent 1410 will update its knowledge with the reward *Rₜ₊₁* returned by the environment 1420 to evaluate its previous action(s). The process repeats until the environment 1420 sends a terminal state *S*, which ends the process or episode. Additionally or alternatively, the agent 1410 may take a particular action A to optimize a value *V*. The value *V* an expected long-term return with discount, as opposed to the short-term reward *R. Vπ(S)* is defined as the expected long-term return of the current state *S* under policy π.

Q-learning is a model-free RL algorithm that learns the value of an action in a particular state. Q-learning does not require a model of an environment 1420, and can handle problems with stochastic transitions and rewards without requiring adaptations. The "Q" in Q-learning refers to the function that the algorithm computes, which is the expected reward(s) for an action *A* taken in a given state S. In Q-learning, a Q-value is computed using the state *Sₜ* and the action *Aₜ* at time *t* using the function *Q*(*St , Ar*)*. Q*(*St* , *Aₜ*) is the long-term return of a current state *S* taking action *A* under policy π. For any finite MDP (FMDP), Q-learning finds an optimal policy π in the sense of maximizing the expected value of the total reward over any and all successive steps, starting from the current state *S.* Additionally, examples of value-based deep RL include Deep Q-Network (DQN), Double DQN, and Dueling DQN. DQN is formed by substituting the Q-function of the Q-learning by an artificial neural network (ANN) such as a convolutional neural network (CNN).

### 4. EXAMPLE IMPLEMENTATIONS

Additional examples of the presently described methods, devices, systems, and networks discussed herein include the following, non-limiting implementations. Each of the following non-limiting examples may stand on its own or may be combined in any permutation or combination with any one or more of the other examples provided below or throughout the present disclosure.

Example 1 includes a method, comprising: identifying a model mismatch for two-sided autoencoder based channel state information (CSI) feedback.

Example 2 includes the method of example 1 and/or some other example(s) herein, wherein the method includes: mitigating the identified mismatch of the two-sided autoencoder based CSI feedback.

Example 3 includes the method of examples 1-2 and/or some other example(s) herein, wherein a *CSI-AE-UE-Capability-Request* information element (IE) is to indicate the request from a radio access network (RAN) node on the UE's capability of autoencoder based CSI feedback that the UE shall report It includes

Example 4 includes the method of example 2 and/or some other example(s) herein, wherein the *CSI-AE-UE-Capability-Request* IE includes one or more of: a field to indicate whether the UE shall report autoencoder based CSI feedback is enabled/disabled at the UE; a field to indicate whether the UE shall report encoder model interoperability information; a field to indicate whether the UE shall report the capability of accepting RAN node-defined encoder; a field to indicate whether the UE shall report the capability of encoder training; a field to indicate whether the UE shall report encoder information; and/or a field to indicate whether the UE shall report the information of the dataset managed by the UE.

Example 5 includes the method of examples 1-4 and/or some other example(s) herein, wherein a *CSI-AE-UE-Capability-Information* IE is to define the UE's report of its capability of autoencoder based CSI feedback.

Example 6 includes the method of example 5 and/or some other example(s) herein, wherein the *CSI-AE-UE-Capability-Information* IE includes one or more of: a field to indicate whether autoencoder based CSI feedback is enabled/disabled at the UE; a field to indicate UE's encoder model interoperability information; a field to indicate UE's capability of accepting RAN node-defined encoder; a field to indicate UE's capability of encoder training; a field to indicate UE's encoder information; and/or a field to indicate the private dataset managed by the UE

Example 7 includes the method of examples 5-6 and/or some other example(s) herein, wherein a *CSI-AE-UE-AcceptEncoder-Capability* IE is to define the UE's capability of accepting a RAN node-defined encoder.

Example 8 includes the method of example 7 and/or some other example(s) herein, wherein the *CSI-AE-UE-AcceptEncoder-Capability* IE includes a field to indicate whether the UE supports accepting RAN node-defined encoder; a field to indicate the maximum encoder ML model that can be supported by the UE; and/or a field to indicate a list of encoder ML model inference precisions that can be supported by the UE

Example 9 includes the method of examples 5-8 and/or some other example(s) herein, wherein a *CSI-AE-UE-TrainEncoder-Capability* IE is to define the UE's capability of encoder training.

Example 10 includes the method of example 9 and/or some other example(s) herein, wherein the *CSI-AE-UE-TrainEncoder-Capability* IE includes a field to indicate whether the UE support encoder training; a field to indicate the maximum dataset size of encoder training that can be supported by the UE; a field to indicate the maximum memory size that can be supported by the UE for encoder training; a field to indicate a list of gradient precisions of encoder training that can be supported by the UE; a field to indicate whether the UE support updating quantization codebook(s) for encoder output during training; and/or a field to indicate whether the UE support evaluating informativeness of training samples.

Example 11 includes the method of examples 5-10 and/or some other example(s) herein, wherein a *CSI-AE-UE-Encoder-Information* IE is to describe the information of UE-side encoder.

Example 12 includes the method of example 11 and/or some other example(s) herein, wherein the *CSI-AE-UE-Encoder-Information* IE includes a field to indicate the backbone of encoder ML model at UE-side; a field to indicate the input data type prior to data pre-processing block at UE-side; a field to indicate the data pre-processing block prior to encoder ML model at UE-side; and/or a field to indicate a list of supported encoder output configurations at UE-side.

Example 13 includes the method of examples 11-12 and/or some other example(s) herein, wherein a *CSI-AE-UE-Encoder-OutputConfig* IE is to describe an encoder output configuration. It is defined to capture both vector and scalar quantization.

Example 14 includes the method of example 13 and/or some other example(s) herein, wherein the *CSI-AE-UE-Encoder-OutputConfig* IE includes a field to indicate the ID of the encoder output configuration; a field to indicate the number of bits for one encoder output group at UE-side; a field to indicate the width of one encoder output group at UE-side; a field to indicate the quantization codebook for one encoder output group at UE-side; and/or a field to indicate the total width of encoder output at UE-side.

Example 15 includes the method of examples 5-14 and/or some other example(s) herein, wherein a *CSI-AE-UE-PrivateDataset* IE is to describe the private dataset that is managed by UE.

Example 16 includes the method of example 15 and/or some other example(s) herein, wherein the *CSI-AE-UE-PrivateDataset* IE includes a field to indicate whether the UE owns a dataset that is managed by the UE; a field to indicate the data type of the data samples of the dataset managed by the UE; a field to indicate the number of samples of the dataset managed by the UE; and/or a field to indicate the precision of the ground truth values of the data samples of the dataset managed by the UE

Example 17 includes the method of examples 1-16 and/or some other example(s) herein, wherein a *CSI-AE-ModId* IE is to define a model ID of the autoencoder for CSI feedback.

Example 18 includes the method of example 17 and/or some other example(s) herein, wherein a *csi-AE-ModId* is to add to a *CSI-reportConfig* IE, which is used to indicate the model ID of the autoencoder for CSI reporting.

Example 19 includes the method of example 18 and/or some other example(s) herein, wherein upon receiving *CSI-reportConfig* with a *csi-AE-ModId* matched with the model ID of an encoder that the UE owns, UE assumes the encoder can be put to use and adopts the encoder for CSI reporting.

Example 20 includes the method of examples 2-19 and/or some other example(s) herein, wherein, to mitigate the model mismatch, RAN node directly configures UE-side encoder.

Example 21 includes the method of example 20 and/or some other example(s) herein, wherein a *csi-AE-UE-Encoder-OtherProcess* IE is to define UE-side data processing blocks apart from encoder ML model.

Example 22 includes the method of example 21 and/or some other example(s) herein, wherein the *csi-AE-UE-Encoder-OtherProcess* IE includes a field to indicate the model ID of the autoencoder that data processing blocks should be attached to; a field to indicate the input type prior to data pre-processing block at UE-side, e.g., raw channel matrix or eigenvectors; a field to indicate the pre-processing block prior to encoder ML model at UE-side; and/or a field to indicate a list of encoder output configurations at UE-side.

Example 23 includes the method of examples 2-22 and/or some other example(s) herein, wherein to mitigate the model mismatch, RAN node conducts RAN node-side decoder fine-tuning while UE-side encoder is kept frozen.

Example 24 includes the method of example 23 and/or some other example(s) herein, wherein a *CSI-AE-UE-SingleFinetuneConfig* IE is to define the setting of RAN node-side decoder fine-tuning.

Example 25 includes the method of example 24 and/or some other example(s) herein, wherein the *CSI-AE-UE-SingleFinetuneConfig* IE includes a field to indicate the model ID of the autoencoder; and/or a field to indicate the dataset for decoder-side fine-tuning.

Example 26 includes the method of examples 23-25 and/or some other example(s) herein, wherein a *CSI-AE-UE-SingleFinetune-EncOutput-Request* IE is to define the request of RAN node to query UE-side encoder output.

Example 27 includes the method of examples 25-26 and/or some other example(s) herein, wherein the *CSI-AE-UE-SingleFinetune-EncOutput-Request* IE includes a field to indicate the model ID of the autoencoder; a field to indicate a list of data samples whose encoder output should be reported by the UE; and/or a field to indicate a list of encoder output configurations for the requested data samples

Example 28 includes the method of examples 23-27 and/or some other example(s) herein, wherein a *CSI-AE-UE-SingleFinetune-EncOutput-Response* IE is to define the response from UE of UE-side encoder output.

Example 29 includes the method of example 28 and/or some other example(s) herein, wherein the *CSI-AE-UE-SingleFinetune-EncOutput-Response* IE includes a field to indicate the model ID of the autoencoder; and/or a field to indicate a list of encoder outputs for every requested data samples

Example 30 includes the method of examples 28-29 and/or some other example(s) herein, wherein a *CSI-AE-UE-SingleFinetune-EncOutput-Response-Element* IE is to define the encoder outputs for one requested data sample.

Example 31 includes the method of example 30 and/or some other example(s) herein, wherein the *CSI-AE-UE-SingleFinetune-EncOutput-Response-Element* IE includes a field to indicate the ID of the requested data sample; and/or a field to indicate a list of encoder outputs for every encoder output configuration requested by the RAN node.

Example 32 includes the method of examples 30-31 and/or some other example(s) herein, wherein a *CSI-AE-UE-SingleFinetune-EncOutput-Response-Result* IE is to define the encoder output for one data sample at an encoder output configuration.

Example 33 includes the method of example 32 and/or some other example(s) herein, wherein the *CSI-AE-UE-SingleFinetune-EncOutput-Response-Result* IE includes a field to indicate the ID of the encoder output configuration; and/or a field to indicate the encoder output at the specified encoder output configuration.

Example 34 includes the method of example 23-33 and/or some other example(s) herein, wherein a *CSI-AE-UE-SingleFinetune-Terminate* IE is to define the message from RAN node to UE to indicate the termination of RAN node-side decoder fine-tuning.

Example 35 includes the method of example 34 and or and/or some other example(s) herein, wherein a *CSI-AE-UE-SingleFinetune-Terminate* IE includes a field to indicate the model ID of the autoencoder where the RAN node-side decoder fine-tuning terminates.

Example 36 includes the method of examples 2-35 and/or some other example(s) herein, wherein, to mitigate the model mismatch, joint two-sided fine-tuning is performed wherein both UE-side encoder and RAN node-side decoder are fine-tuned.

Example 37 includes the method of example 36 and/or some other example(s) herein, wherein a *CSI-AE-UE-JointFinetuneConfig* IE is to define the setting of joint two-sided fine-tuning.

Example 38 includes the method of example 37 and/or some other example(s) herein, wherein the *CSI-AE-UE-JointFinetuneConfig* IE includes a field to indicate the model ID of the autoencoder; a field to indicate the dataset for joint two-sided fine-tuning; a field to indicate the batch size for joint two-sided fine-tuning; a field to indicate the gradient precision for joint two-sided fine-tuning; a field to indicate whether the UE shall update the quantization codebook(s) for encoder output during joint two-sided fine-tuning; a field to indicate a list of encoder output configurations for joint two-sided fine-tuning; and/or a field to indicate the total number of epochs for joint two-sided fine-tuning

Example 39 includes the method of examples 36-38 and/or some other example(s) herein, wherein a *CSI-AE-UE-JointFinetune-Forward IE* is to define the forward propagation results delivered from UE to RAN node.

Example 40 includes the method of example 39 and/or some other example(s) herein, wherein the *CSI-AE-UE-JointFinetune-Forward* IE includes a field to indicate the model ID of the autoencoder; a field to indicate the epoch number; a field to indicate the batch number; a field to indicate the forward propagation results for one batch of training samples; and/or a field to indicate the quantization codebook(s) for encoder output.

Example 41 includes the method of examples 36-40 and/or some other example(s) herein, wherein a *CSI-AE-UE-JointFinetune-Forward-Element* IE is to define the forward propagation results for one training sample.

Example 42 includes the method of example 41 and/or some other example(s) herein, wherein the *CSI-AE-UE-JointFinetune-Forward-Element* IE includes a field to indicate the ID of the data sample; and/or a field to indicate a list of forward propagation results for every encoder output configurations requested by the RAN node.

Example 43 includes the method of examples 41-42 and/or some other example(s) herein, wherein a *CSI-AE-UE-JointFinetune-Forward-Element-Result* IE is to define the forward propagation result for one data sample at an encoder output configuration.

Example 44 includes the method of example 43 and/or some other example(s) herein, wherein the *CSI-AE-UE-JointFinetune-Forward-Element-Result* IE includes a field to indicate the ID of the encoder output configuration; and/or a field to indicate the forward propagation result at the specified encoder output configuration.

Example 45 includes the method of examples 36-44 and/or some other example(s) herein, wherein a *CSI-AE-UE-JointFinetune-Backward* IE is to define the backpropagation results delivered from RAN node to UE for one batch of data samples.

Example 46 includes the method of example 45 and/or some other example(s) herein, wherein the *CSI-AE-UE-JointFinetune-Backward* IE includes a field to indicate the model ID of the autoencoder; a field to indicate the epoch number; a field to indicate the batch number; and/or a field to indicate a list of backpropagation results for every encoder output configuration requested by the RAN node

Example 47 includes the method of examples 45-46 and/or some other example(s) herein, wherein a *CSI-AE-UE-JointFinetune-Backward-Result* IE is to define the backward propagation result for one batch of data samples at an encoder output configuration.

Example 48 includes the method of example 47 and/or some other example(s) herein, wherein the *CSI-AE-UE-JointFinetune-Backward-Result* IE includes a field to indicate the ID of the encoder output configuration; and/or field to indicate the backpropagation result at the specified encoder output configuration

Example 49 includes the method of examples 36-48 and/or some other example(s) herein, wherein a *CSI-AE-UE-JointFinetune-NewData-Recommend-Request* IE is to define the request of RAN node to query UE's recommendation on new training samples to add.

Example 50 includes the method of example 49 and/or some other example(s) herein, wherein the *CSI-AE-UE-JointFinetune-NewData-Recommend-Request* IE includes a field to indicate the model ID of the autoencoder; a field to indicate the dataset that the new training samples belong to; and/or field to indicate the number of new samples that the UE shall recommend to RAN node to add to the fine-tuning dataset.

Example 51 includes the method of examples 36-50 and/or some other example(s) herein, wherein a *CSI-AE-UE-JointFinetune-NewData-Recommend-Response* IE is to define the response from UE of its recommendation on new training samples to add.

Example 52 includes the method of example 51 and/or some other example(s) herein, wherein the *CSI-AE-UE-JointFinetune-NewData-Recommend-Response* IE includes a field to indicate the model ID of the autoencoder; and/or a field to indicate a list of indices of the new samples that UE recommends to RAN node to add to the fine-tuning dataset.

Example 53 includes the method of examples 36-52 and/or some other example(s) herein, wherein a *CSI-AE-UE-JointFinetune-ToAddDataList* IE is to define the new training samples added to the fine-tuning dataset.

Example 54 includes the method of example 53 and/or some other example(s) herein, wherein the *CSI-AE-UE-JointFinetune-ToAddDataList* IE includes a field to indicate the model ID of the autoencoder; a field to indicate the dataset that new training samples belong to; a field to indicate a list of indices of the new training samples; and/or a field to indicate the epoch number that the updated dataset is put to use.

Example 55 includes the method of examples 36-54 and/or some other example(s) herein, wherein a *CSI-AE-UE-JointFinetune-Terminate* IE is to define the message from the RAN node to the UE to indicate the termination of joint two-sided fine-tuning.

Example 56 includes the method of example 55 and/or some other example(s) herein, wherein the *CSI-AE-UE-JointFinetune-Terminate* IE includes a field to indicate the model ID of the autoencoder where the joint two-sided fine-tuning terminates.

Example 57 includes a method comprising: performing an autoencoder model mismatch mitigation process for a channel state information (CSI) autoencoder model, wherein the CSI autoencoder model includes an encoder model and a decoder model.

Example 58 includes the method of example 57 and/or some other example(s) herein, wherein the method includes: performing the autoencoder model mismatch mitigation process when no user equipment (UE) autoencoder model interoperability information is available and/or when an autoencorder model mismatch is detected.

Example 59 includes the method of examples 57-58 and/or some other example(s) herein, wherein the method includes: broadcasting a CSI autoencoder support indicator.

Example 60 includes the method of example 59 and/or some other example(s) herein, wherein the method includes: transmitting a request for a UE autoencoder-based CSI feedback capability; and receiving the autoencoder-based CSI feedback capability based on the request.

Example 61 includes the method of examples 59-60 and/or some other example(s) herein, wherein the performing the autoencoder model mismatch mitigation process includes: configuring a UE with an encoder model identity (ID) of the encoder when no model mismatch is detected.

Example 62 includes the method of examples 59-60 and/or some other example(s) herein, wherein the performing the autoencoder model mismatch mitigation process includes: configuring a UE with an encoder model ID of the encoder when a model mismatch is detected.

Example 63 includes the method of examples 61-62 and/or some other example(s) herein, wherein the method includes: configuring the encoder model and zero or more additional data processing blocks based on the autoencoder-based CSI feedback capability.

Example 64 includes the method of example 63 and/or some other example(s) herein, wherein the method includes: sending the encoder model to the UE and the zero of more additional data processing blocks when the UE is capable of accepting a network access node (NAN)-defined encoder model.

Example 65 includes the method of example 64 and/or some other example(s) herein, wherein the sending the encoder model to the UE includes: configuring the UE with the encoder model ID and/or with an CSI autoencoder configuration.

Example 66 includes the method of example 62 and/or some other example(s) herein, wherein the method includes: performing a decoder tuning process when the UE is not capable of training the encoder model.

Example 67 includes the method of example 66 and/or some other example(s) herein, wherein the performing the decoder tuning process includes: sending a single-side tuning configuration to the UE.

Example 68 includes the method of examples 66-67 and/or some other example(s) herein, wherein the performing the decoder tuning process includes: sending, to the UE, a encoder output request for an encoder output from the encoder based on a batch of data samples; and receiving, from the UE, the encoder output based on the encoder output request.

Example 69 includes the method of example 68 and/or some other example(s) herein, wherein the performing the decoder tuning process includes: sending the batch of data samples to the UE.

Example 70 includes the method of examples 68-69 and/or some other example(s) herein, wherein the performing the decoder tuning process includes: receiving, from the UE, a ground truth of the batch of data samples.

Example 71 includes the method of examples 68-70 and/or some other example(s) herein, wherein the performing the decoder tuning process includes: when the decoder tuning process has ended, transmitting a CSI autoencoder tuning termination indicator to the UE, wherein the CSI autoencoder tuning termination indicator indicates that the CSI autoencoder tuning process is to end.

Example 72 includes the method of example 62 and/or some other example(s) herein, wherein the method includes: performing a joint tuning process when the UE is capable of training the encoder model.

Example 73 includes the method of example 72 and/or some other example(s) herein, wherein the performing the joint tuning process includes: sending a joint tuning configuration to the UE.

Example 74 includes the method of examples 72-73 and/or some other example(s) herein, wherein the performing the joint tuning process includes: sending, to the UE, a dataset to be used for the joint tuning process.

Example 75 includes the method of examples 73-74 and/or some other example(s) herein, wherein the performing the joint tuning process includes: receiving, from the UE, forward propagation results; and sending, to the UE, backpropagation results.

Example 76 includes the method of example 75 and/or some other example(s) herein, wherein the performing the joint tuning process includes: receiving forward propagation results and sending backpropagation results at each epoch of the joint tuning process.

Example 77 includes the method of examples 73-86 and/or some other example(s) herein, wherein the performing the joint tuning process includes: selecting new training samples to add to a training dataset used during the joint tuning process.

Example 78 includes the method of example 77 and/or some other example(s) herein, wherein the performing the joint tuning process includes: sending, to the UE, a request for a recommendation on new training samples to add to the joint tuning process; receiving, from the UE, the recommendation on new training samples to add to the joint tuning process; and the selecting includes selecting the new training samples based on the received recommendation.

Example 79 includes the method of examples 77-78 and/or some other example(s) herein, wherein the performing the joint tuning process includes: sending, to the UE, an indication of the selected new training samples.

Example 80 includes the method of examples 77-79 and/or some other example(s) herein, wherein the performing the joint tuning process includes: sending, to the UE, the selected new training samples.

Example 81 includes the method of examples 77-79 and/or some other example(s) herein, wherein the performing the joint tuning process includes: when the joint tuning process has ended, sending, to the UE, a joint tuning termination indication indicating that the joint tuning process has ended.

Example 82 includes the method of examples 59-81 and/or some other example(s) herein, wherein the method includes: sending a CSI report configuration to the UE; transmitting a CSI reference signal (CSI-RS); receiving, from the UE, CSI feedback generated using the configured encoder model; and decoding the CSI feedback using the decoder model.

Example 83 includes the method of examples 57-82 and/or some other example(s) herein, wherein the method is performed by a network access node (NAN).

Example 84, the subject matter includes an apparatus of an access node of a cellular network, the apparatus including a processor configured to: determine whether a user equipment, UE, is capable of implementing an autoencoder based channel state information, CSI, feedback based on capability information received from the UE; identify a model mismatch between an encoder machine learning, ML, model of the UE and a decoder ML model based on the capability information.

Example 85 includes the subject matter of example 84, wherein the capability information includes one or more fields representative of at least one of: encoder model interoperability information, capability of the UE of accepting an access node-defined model, capability of the UE of a training of the encoder ML model, a description of information of the ML encoder model of the UE, and/or a dataset managed by the UE.

Example 86 includes the subject matter of example 84 or 85, wherein the processor is further configured to: configure a model identifier, ID, to be sent to the UE; configure a CSI report to be sent to the UE; and instruct the access node to transmit a CSI reference signal, CSI-RS.

Example 87 includes the subject matter of any one of examples 84 to 85, wherein the processor is further configured to: determine whether the model mismatch exists based on a received interoperability information of the encoder ML model of the UE; initiate a model mismatch mitigation process if the model mismatch exists or if the received interoperability information of the encoder model of the UE is unavailable.

Example 88 includes the subject matter of any one of examples 84 to 87, wherein the processor is further configured to: determine whether the UE is capable of accepting an access node-defined model; configure the encoder ML model of the UE as the access node-defined model if the UE is capable of accepting the access node-defined model.

Example 89 includes the subject matter of any one of examples 84 to 88, wherein the processor is further configured to: determine whether the UE is capable of a training of the encoder ML model of the UE; configure a joint tuning of the encoder ML model of the UE and the decoder ML model if the UE is capable of the training of the encoder ML model of the UE.

Example 90 includes the subject matter of any one of examples 84 to 89, wherein the processor is further configured to: determine whether the UE is capable of a training of the encoder ML model of the UE; configure a tuning of the decoder ML model if the UE is incapable of the training of the encoder ML model of the UE.

Example 91 includes the subject matter of any one of examples 84 to 90, wherein the processor is further configured to initiate a CSI feedback procedure based on a non-ML method if the capability information represents that the UE is not capable of implementing the autoencoder based channel state information, CSI, feedback.

Example 92, a non-transitory computer-readable medium including one or more instructions which, if executed by a processor of an access node of a cellular network, cause the processor to: determine whether a user equipment, UE, is capable of implementing an autoencoder based channel state information, CSI, feedback based on capability information received from the UE; identify a model mismatch between an encoder machine learning, ML, model of the UE and a decoder ML model based on the capability information.

Example 93, the subject matter includes an apparatus of a user equipment, UE, of a cellular network, the apparatus including a processor configured to: encode capability information representative of whether the UE is capable of implementing an autoencoder based channel state information, CSI, feedback; instruct the UE to send the capability information to an access node of the cellular network.

Example 94 includes the subject matter of claim 93, wherein the capability information includes one or more fields representative of at least one of: encoder model interoperability information, capability of the UE of accepting an access node-defined model, capability of the UE of a training of the encoder ML model, a description of information of the ML encoder model of the UE, and/or a dataset managed by the UE.

Example 95 includes the subject matter of claim 93 or 94, wherein the processor is further configured to encode the capability information based on a capability information request received from the access node.

Example 96 includes the subject matter of any one of claims 93 to 95, wherein the processor is further configured to: determine a model identifier, ID, received from the access node; determine a CSI report configuration received from the access node; configure the encoder ML model of the UE according to the model ID; and measure a CSI reference signal, CSI-RS, received from the access node based on the CSI report configuration.

Example 97 includes the subject matter of any one of claims 93 to 96, wherein the processor is further configured to deploy a received encoder ML model and zero or more additional data processing blocks if the UE is capable of accepting an access node-defined model.

Example 98, a non-transitory computer-readable medium including one or more instructions which, if executed by a processor of a user equipment, UE, of a cellular network, cause the processor to: encode capability information representative of whether the UE is capable of implementing an autoencoder based channel state information, CSI, feedback; instruct the UE to send the capability information to an access node of the cellular network.

Example Z01 includes one or more computer readable media comprising instructions, wherein execution of the instructions by processor circuitry is to cause the processor circuitry to perform the method of any one of examples 1-98.

Example Z02 includes a computer program comprising the instructions of example Z01.

Example Z03 includes an Application Programming Interface defining functions, methods, variables, data structures, and/or protocols for the computer program of example Z02.

Example Z04 includes an API or specification defining functions, methods, variables, data structures, protocols, and the like, defining or involving use of any of examples 1-73 or portions thereof, or otherwise related to any of examples 1-73 or portions thereof.

Example Z05 includes an apparatus comprising circuitry loaded with the instructions of example Z01.

Example Z06 includes an apparatus comprising circuitry operable to run the instructions of example Z01.

Example Z07 includes an integrated circuit comprising one or more of the processor circuitry of example Z01 and the one or more computer readable media of example Z01.

Example Z08 includes a computing system comprising the one or more computer readable media and the processor circuitry of example Z01.

Example Z09 includes an apparatus comprising means for executing the instructions of example Z01.

Example Z10 includes a signal generated as a result of executing the instructions of example Z01.

Example Z11 includes a data unit generated as a result of executing the instructions of example Z01.

Example Z12 includes the data unit of example Z10 and/or some other example(s) herein, wherein the data unit is a datagram, network packet, data frame, data segment, a Protocol Data Unit (PDU), a Service Data Unit (SDU), a message, or a database object.

Example Z13 includes a signal encoded with the data unit of examples Z11 and/or Z12.

Example Z14 includes an electromagnetic signal carrying the instructions of example Z01.

Example Z15 includes an apparatus comprising means for performing the method of any one of examples 1-73 and/or some other example(s) herein.

Example Z16 includes an edge compute node executing a service as part of one or more edge applications instantiated on virtualization infrastructure, the service being related to any of examples 1-73, portions thereof, and/or some other example(s) herein.

### 5. TERMINOLOGY

For the purposes of the present document, the following terms and definitions are applicable to the examples and embodiments discussed herein.

As used herein, the singular forms "a," "an" and "the" are intended to include plural forms as well, unless the context clearly indicates otherwise. It will be further understood that the terms "comprises" and/or "comprising," when used in this specification, specific the presence of stated features, integers, steps, operations, elements, and/or components, but do not preclude the presence or addition of one or more other features, integers, steps, operation, elements, components, and/or groups thereof. The phrase "A and/or B" means (A), (B), or (A and B). For the purposes of the present disclosure, the phrase "A, B, and/or C" means (A), (B), (C), (A and B), (A and C), (B and C), or (A, B and C). The phrase "X(s)" means one or more X or a set of X. The description may use the phrases "in an embodiment," "In some embodiments," "in one implementation," "In some implementations," "in some examples", and the like, each of which may refer to one or more of the same or different embodiments, implementations, and/or examples. Furthermore, the terms "comprising," "including," "having," and the like, as used with respect to the present disclosure, are synonymous.

The terms "master" and "slave" at least in some examples refers to a model of asymmetric communication or control where one device, process, element, or entity (the "master") controls one or more other device, process, element, or entity (the "slaves"). The terms "master" and "slave" are used in this disclosure only for their technical meaning. The term "master" or "grandmaster" may be substituted with any of the following terms "main", "source", "primary", "initiator", "requestor", "transmitter", "host", "maestro", "controller", "provider", "producer", "client", "source", "mix", "parent", "chief', "manager", "reference" (e.g., as in "reference clock" or the like), and/or the like. Additionally, the term "slave" may be substituted with any of the following terms "receiver", "secondary", "subordinate", "replica", target", "responder", "device", "performer", "agent", "standby", "consumer", "peripheral", "follower", "server", "child", "helper", "worker", "node", and/or the like.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "establish" or "establishment" at least in some examples refers to (partial or in full) acts, tasks, operations, and the like, related to bringing or the readying the bringing of something into existence either actively or passively (e.g., exposing a device identity or entity identity). Additionally or alternatively, the term "establish" or "establishment" at least in some examples refers to (partial or in full) acts, tasks, operations, and the like, related to initiating, starting, or warming communication or initiating, starting, or warming a relationship between two entities or elements (e.g., establish a session, establish a session, and the like). Additionally or alternatively, the term "establish" or "establishment" at least in some examples refers to initiating something to a state of working readiness. The term "established" at least in some examples refers to a state of being operational or ready for use (e.g., full establishment). Furthermore, any definition for the term "establish" or "establishment" defined in any specification or standard can be used for purposes of the present disclosure and such definitions are not disavowed by any of the aforementioned definitions.

The term "obtain" at least in some examples refers to (partial or in full) acts, tasks, operations, and the like, of intercepting, movement, copying, retrieval, or acquisition (e.g., from a memory, an interface, or a buffer), on the original packet stream or on a copy (e.g., a new instance) of the packet stream. Other aspects of obtaining or receiving may involving instantiating, enabling, or controlling the ability to obtain or receive a stream of packets (or the following parameters and templates or template values).

The term "receipt" at least in some examples refers to any action (or set of actions) involved with receiving or obtaining an object, data, data unit, and the like, and/or the fact of the object, data, data unit, and the like being received. The term "receipt" at least in some examples refers to an object, data, data unit, and the like, being pushed to a device, system, element, and the like (e.g., often referred to as a push model), pulled by a device, system, element, and the like (e.g., often referred to as a pull model), and/or the like.

The term "element" at least in some examples refers to a unit that is indivisible at a given level of abstraction and has a clearly defined boundary, wherein an element may be any type of entity including, for example, one or more devices, systems, controllers, network elements, modules, engines, components, and so forth, or combinations thereof. The term "entity" at least in some examples refers to a distinct element of a component, architecture, platform, device, and/or system. Additionally or alternatively, the term "entity" at least in some examples refers to information transferred as a payload.

The term "measurement" at least in some examples refers to the observation and/or quantification of attributes of an object, event, or phenomenon. Additionally or alternatively, the term "measurement" at least in some examples refers to a set of operations having the object of determining a measured value or measurement result, and/or the actual instance or execution of operations leading to a measured value. Additionally or alternatively, the term "measurement" at least in some examples refers to data recorded during testing.

The term "metric" at least in some examples refers to a quantity produced in an assessment of a measured value. Additionally or alternatively, the term "metric" at least in some examples refers to data derived from a set of measurements. Additionally or alternatively, the term "metric" at least in some examples refers to set of events combined or otherwise grouped into one or more values. Additionally or alternatively, the term "metric" at least in some examples refers to a combination of measures or set of collected data points. Additionally or alternatively, the term "metric" at least in some examples refers to a standard definition of a quantity, produced in an assessment of performance and/or reliability of the network, which has an intended utility and is carefully specified to convey the exact meaning of a measured value.

The term "signal" at least in some examples refers to an observable change in a quality and/or quantity. Additionally or alternatively, the term "signal" at least in some examples refers to a function that conveys information about of an object, event, or phenomenon. Additionally or alternatively, the term "signal" at least in some examples refers to any time varying voltage, current, or electromagnetic wave that may or may not carry information. The term "digital signal" at least in some examples refers to a signal that is constructed from a discrete set of waveforms of a physical quantity so as to represent a sequence of discrete values.

The terms "ego" (as in, e.g., "ego device") and "subject" (as in, e.g., "data subject") at least in some examples refers to an entity, element, device, system, and the like, that is under consideration or being considered. The terms "neighbor" and "proximate" (as in, e.g., "proximate device") at least in some examples refers to an entity, element, device, system, and the like, other than an ego device or subject device.

The term "identifier" at least in some examples refers to a value, or a set of values, that uniquely identify an identity in a certain scope. Additionally or alternatively, the term "identifier" at least in some examples refers to a sequence of characters that identifies or otherwise indicates the identity of a unique object, element, or entity, or a unique class of objects, elements, or entities. Additionally or alternatively, the term "identifier" at least in some examples refers to a sequence of characters used to identify or refer to an application, program, session, object, element, entity, variable, set of data, and/or the like. The "sequence of characters" mentioned previously at least in some examples refers to one or more names, labels, words, numbers, letters, symbols, and/or any combination thereof. Additionally or alternatively, the term "identifier" at least in some examples refers to a name, address, label, distinguishing index, and/or attribute. Additionally or alternatively, the term "identifier" at least in some examples refers to an instance of identification. The term "persistent identifier" at least in some examples refers to an identifier that is reused by a device or by another device associated with the same person or group of persons for an indefinite period. The term "identification" at least in some examples refers to a process of recognizing an identity as distinct from other identities in a particular scope or context, which may involve processing identifiers to reference an identity in an identity database. The term "application identifier", "application ID", or "app ID" at least in some examples refers to an identifier that can be mapped to a specific application, application instance, or application instance. In the context of 3GPP 5G/NR, an "application identifier" at least in some examples refers to an identifier that can be mapped to a specific application traffic detection rule.

The term "circuitry" at least in some examples refers to a circuit or system of multiple circuits configured to perform a particular function in an electronic device. The circuit or system of circuits may be part of, or include one or more hardware components, such as a logic circuit, a processor (shared, dedicated, or group) and/or memory (shared, dedicated, or group), an application-specific integrated circuit (ASIC), field-programmable gate array (FPGA), programmable logic controller (PLC), single-board computer (SBC), system on chip (SoC), system in package (SiP), multi-chip package (MCP), digital signal processor (DSP), and the like, that are configured to provide the described functionality. In addition, the term "circuitry" may also refer to a combination of one or more hardware elements with the program code used to carry out the functionality of that program code. Some types of circuitry may execute one or more software or firmware programs to provide at least some of the described functionality. Such a combination of hardware elements and program code may be referred to as a particular type of circuitry.

The term "processor circuitry" at least in some examples refers to, is part of, or includes circuitry capable of sequentially and automatically carrying out a sequence of arithmetic or logical operations, or recording, storing, and/or transferring digital data. The term "processor circuitry" at least in some examples refers to one or more application processors, one or more baseband processors, a physical CPU, a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry"

The term "memory" and/or "memory circuitry" at least in some examples refers to one or more hardware devices for storing data, including random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, read-only memory (ROM), programmable ROM (PROM), erasable PROM (EPROM), electrically EPROM (EEPROM), flash memory, non-volatile RAM (NVRAM), magnetic disk storage mediums, optical storage mediums, flash memory devices or other machine readable mediums for storing data. The term "computer-readable medium" includes, but is not limited to, memory, portable or fixed storage devices, optical storage devices, and various other mediums capable of storing, containing or carrying instructions or data.

The terms "machine-readable medium" and "computer-readable medium" refers to tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus includes but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., HTTP). A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived includes source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) includes: compiling (e.g., from source code, object code, and/or the like), interpreting, loading, organizing (e.g., dynamically or statically linking), encoding, decoding, encrypting, unencrypting, packaging, unpackaging, or otherwise manipulating the information into the instructions. In an example, the derivation of the instructions includes assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, and/or the like) on one or several remote servers. The source code packages may be encrypted when in transit over a network and decrypted, uncompressed, assembled (e.g., linked) if necessary, and compiled or interpreted (e.g., into a library, stand-alone executable, and/or the like) at a local machine, and executed by the local machine. The terms "machine-readable medium" and "computer-readable medium" may be interchangeable for purposes of the present disclosure. The term "non-transitory computer-readable medium at least in some examples refers to any type of memory, computer readable storage device, and/or storage disk and may exclude propagating signals and transmission media.

The term "interface circuitry" at least in some examples refers to, is part of, or includes circuitry that enables the exchange of information between two or more components or devices. The term "interface circuitry" at least in some examples refers to one or more hardware interfaces, for example, buses, I/O interfaces, peripheral component interfaces, network interface cards, and/or the like.

The term "SmartNIC" at least in some examples refers to a network interface controller (NIC), network adapter, or a programmable network adapter card with programmable hardware accelerators and network connectivity (e.g., Ethernet or the like) that can offload various tasks or workloads from other compute nodes or compute platforms such as servers, application processors, and/or the like and accelerate those tasks or workloads. A SmartNIC has similar networking and offload capabilities as an IPU, but remains under the control of the host as a peripheral device.

The term "infrastructure processing unit" or "IPU" at least in some examples refers to an advanced networking device with hardened accelerators and network connectivity (e.g., Ethernet or the like) that accelerates and manages infrastructure functions using tightly coupled, dedicated, programmable cores. In some implementations, an IPU offers full infrastructure offload and provides an extra layer of security by serving as a control point of a host for running infrastructure applications. An IPU is capable of offloading the entire infrastructure stack from the host and can control how the host attaches to this infrastructure. This gives service providers an extra layer of security and control, enforced in hardware by the IPU.

The term "device" at least in some examples refers to a physical entity embedded inside, or attached to, another physical entity in its vicinity, with capabilities to convey digital information from or to that physical entity.

The term "controller" at least in some examples refers to an element or entity that has the capability to affect a physical entity, such as by changing its state or causing the physical entity to move.

The term "scheduler" at least in some examples refers to an entity or element that assigns resources (e.g., processor time, network links, memory space, and/or the like) to perform tasks. The term "network scheduler" at least in some examples refers to a node, element, or entity that manages network packets in transmit and/or receive queues of one or more protocol stacks of network access circuitry (e.g., a network interface controller (NIC), baseband processor, and the like). The term "network scheduler" at least in some examples can be used interchangeably with the terms "packet scheduler", "queueing discipline" or "qdisc", and/or "queueing algorithm".

The term "terminal" at least in some examples refers to point at which a conductor from a component, device, or network comes to an end. Additionally or alternatively, the term "terminal" at least in some examples refers to an electrical connector acting as an interface to a conductor and creating a point where external circuits can be connected. In some examples, terminals may include electrical leads, electrical connectors, electrical connectors, solder cups or buckets, and/or the like.

The term "compute node" or "compute device" at least in some examples refers to an identifiable entity implementing an aspect of computing operations, whether part of a larger system, distributed collection of systems, or a standalone apparatus. In some examples, a compute node may be referred to as a "computing device", "computing system", or the like, whether in operation as a client, server, or intermediate entity. Specific implementations of a compute node may be incorporated into a server, base station, gateway, road side unit, on-premise unit, user equipment, end consuming device, appliance, or the like. For purposes of the present disclosure, the term "node" at least in some examples refers to and/or is interchangeable with the terms "device", "component", "sub-system", and/or the like.

The term "computer system" at least in some examples refers to any type interconnected electronic devices, computer devices, or components thereof. Additionally, the terms "computer system" and/or "system" at least in some examples refer to various components of a computer that are communicatively coupled with one another. Furthermore, the term "computer system" and/or "system" at least in some examples refer to multiple computer devices and/or multiple computing systems that are communicatively coupled with one another and configured to share computing and/or networking resources.

The term "server" at least in some examples refers to a computing device or system, including processing hardware and/or process space(s), an associated storage medium such as a memory device or database, and, in some instances, suitable application(s) as is known in the art. The terms "server system" and "server" may be used interchangeably herein, and these terms at least in some examples refers to one or more computing system(s) that provide access to a pool of physical and/or virtual resources. The various servers discussed herein include computer devices with rack computing architecture component(s), tower computing architecture component(s), blade computing architecture component(s), and/or the like. The servers may represent a cluster of servers, a server farm, a cloud computing service, or other grouping or pool of servers, which may be located in one or more datacenters. The servers may also be connected to, or otherwise associated with, one or more data storage devices (not shown). Moreover, the servers includes an operating system (OS) that provides executable program instructions for the general administration and operation of the individual server computer devices, and includes a computer-readable medium storing instructions that, when executed by a processor of the servers, may allow the servers to perform their intended functions. Suitable implementations for the OS and general functionality of servers are known or commercially available, and are readily implemented by persons having ordinary skill in the art.

The term "platform" at least in some examples refers to an environment in which instructions, program code, software elements, and the like can be executed or otherwise operate, and examples of such an environment include an architecture (e.g., a motherboard, a computing system, and/or the like), one or more hardware elements (e.g., embedded systems, and the like), a cluster of compute nodes, a set of distributed compute nodes or network, an operating system, a virtual machine (VM), a virtualization container, a software framework, a client application (e.g., web browser or the like) and associated application programming interfaces, a cloud computing service (e.g., platform as a service (PaaS)), or other underlying software executed with instructions, program code, software elements, and the like.

The term "architecture" at least in some examples refers to a computer architecture or a network architecture. The term "computer architecture" at least in some examples refers to a physical and logical design or arrangement of software and/or hardware elements in a computing system or platform including technology standards for interacts therebetween. The term "network architecture" at least in some examples refers to a physical and logical design or arrangement of software and/or hardware elements in a network including communication protocols, interfaces, and media transmission.

The term "appliance," "computer appliance," and the like, at least in some examples refers to a computer device or computer system with program code (e.g., software or firmware) that is specifically designed to provide a specific computing resource. The term "virtual appliance" at least in some examples refers to a virtual machine image to be implemented by a hypervisor-equipped device that virtualizes or emulates a computer appliance or otherwise is dedicated to provide a specific computing resource. The term "security appliance", "firewall", and the like at least in some examples refers to a computer appliance designed to protect computer networks from unwanted traffic and/or malicious attacks. The term "policy appliance" at least in some examples refers to technical control and logging mechanisms to enforce or reconcile policy rules (information use rules) and to ensure accountability in information systems.

The term "gateway" at least in some examples refers to a network appliance that allows data to flow from one network to another network, or a computing system or application configured to perform such tasks. Examples of gateways include IP gateways, Internet-to-Orbit (I2O) gateways, IoT gateways, cloud storage gateways, and/or the like.

The term "user equipment" or "UE" at least in some examples refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, station, mobile station, mobile user, subscriber, user, remote station, access agent, user agent, receiver, radio equipment, reconfigurable radio equipment, reconfigurable mobile device, and the like. Furthermore, the term "user equipment" or "UE" includes any type of wireless/wired device or any computing device including a wireless communications interface. Examples of UEs, client devices, and the like, include desktop computers, workstations, laptop computers, mobile data terminals, smartphones, tablet computers, wearable devices, machine-to-machine (M2M) devices, machine-type communication (MTC) devices, Internet of Things (IoT) devices, embedded systems, sensors, autonomous vehicles, drones, robots, in-vehicle infotainment systems, instrument clusters, onboard diagnostic devices, dashtop mobile equipment, electronic engine management systems, electronic/engine control units/modules, microcontrollers, control module, server devices, network appliances, head-up display (HUD) devices, helmut-mounted display devices, augmented reality (AR) devices, virtual reality (VR) devices, mixed reality (MR) devices, and/or other like systems or devices.

The term "station" or "STA" at least in some examples refers to a logical entity that is a singly addressable instance of a medium access control (MAC) and physical layer (PHY) interface to the wireless medium (WM). The term "wireless medium" or WM" at least in some examples refers to the medium used to implement the transfer of protocol data units (PDUs) between peer physical layer (PHY) entities of a wireless local area network (LAN).

The term "network element" at least in some examples refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, network access node (NAN), base station, access point (AP), RAN device, RAN node, gateway, server, network applicance, network function (NF), virtualized NF (VNF), and/or the like.

The term "network controller" at least in some examples refers to a functional block that centralizes some or all of the control and management functionality of a network domain and may provide an abstract view of the network domain to other functional blocks via an interface.

The term "network access node" or "NAN" at least in some examples refers to a network element in a radio access network (RAN) responsible for the transmission and reception of radio signals in one or more cells or coverage areas to or from a UE or station. A "network access node" or "NAN" can have an integrated antenna or may be connected to an antenna array by feeder cables. Additionally or alternatively, a "network access node" or "NAN" includes specialized digital signal processing, network function hardware, and/or compute hardware to operate as a compute node. In some examples, a "network access node" or "NAN" may be split into multiple functional blocks operating in software for flexibility, cost, and performance. In some examples, a "network access node" or "NAN" may be a base station (e.g., an evolved Node B (eNB) or a next generation Node B (gNB)), an access point and/or wireless network access point, router, switch, hub, radio unit or remote radio head, Transmission Reception Point (TRxP), a gateway device (e.g., Residential Gateway, Wireline 5G Access Network, Wireline 5G Cable Access Network, Wireline BBF Access Network, and the like), network appliance, and/or some other network access hardware.

The term "access point" or "AP" at least in some examples refers to an entity that contains one station (STA) and provides access to the distribution services, via the wireless medium (WM) for associated STAs. An AP comprises a STA and a distribution system access function (DSAF).

The term "cell" at least in some examples refers to a radio network object that can be uniquely identified by a UE from an identifier (e.g., cell ID) that is broadcasted over a geographical area from a network access node (NAN). Additionally or alternatively, the term "cell" at least in some examples refers to a geographic area covered by a NAN. The term "handover" at least in some examples refers to the transfer of a user's connection from one radio channel to another (can be the same or different cell). Additionally or alternatively, the term "handover" at least in some examples refers to the process in which a radio access network changes the radio transmitters, radio access mode, and/or radio system used to provide the bearer services, while maintaining a defined bearer service QoS

The term "serving cell" at least in some examples refers to a primary cell (PCell) for a UE in a connected mode or state (e.g., RRC_CONNECTED) and not configured with carrier aggregation (CA) and/or dual connectivity (DC). Additionally or alternatively, the term "serving cell" at least in some examples refers to a set of cells comprising zero or more special cells and one or more secondary cells for a UE in a connected mode or state (e.g., RRC_CONNECTED) and configured with CA.

The term "primary cell" or "PCell" at least in some examples refers to a Master Cell Group (MCG) cell, operating on a primary frequency, in which a UE either performs an initial connection establishment procedure or initiates a connection re-establishment procedure. The term "Secondary Cell" or "SCell" at least in some examples refers to a cell providing additional radio resources on top of a special cell (SpCell) for a UE configured with CA. The term "special cell" or "SpCell" at least in some examples refers to a PCell for non-DC operation or refers to a PCell of an MCG or a PSCell of an SCG for DC operation.

The term "Master Cell Group" or "MCG" at least in some examples refers to a group of serving cells associated with a "Master Node" comprising a SpCell (PCell) and optionally one or more SCells. The term "Secondary Cell Group" or "SCG" at least in some examples refers to a subset of serving cells comprising a Primary SCell (PSCell) and zero or more SCells for a UE configured with DC. The term "Primary SCG Cell" refers to the SCG cell in which a UE performs random access when performing a reconfiguration with sync procedure for DC operation.

The term "Master Node" or "MN" at least in some examples refers to a NAN that provides control plane connection to a core network. The term "Secondary Node" or "SN" at least in some examples refers to a NAN providing resources to the UE in addition to the resources provided by an MN and/or a NAN with no control plane connection to a core network

The term "E-UTEAN NodeB", "eNodeB", or "eNB" at least in some examples refers to a RAN node providing E-UTRA user plane (PDCP/RLC/MAC/PHY) and control plane (RRC) protocol terminations towards a UE, and connected via an S1 interface to the Evolved Packet Core (EPC). Two or more eNBs are interconnected with each other (and/or with one or more en-gNBs) by means of an X2 interface.

The term "next generation eNB" or "ng-eNB" at least in some examples refers to a RAN node providing E-UTRA user plane and control plane protocol terminations towards a UE, and connected via the NG interface to the 5GC. Two or more ng-eNBs are interconnected with each other (and/or with one or more gNBs) by means of an Xn interface.

The term "Next Generation NodeB", "gNodeB", or "gNB" at least in some examples refers to a RAN node providing NR user plane and control plane protocol terminations towards a UE, and connected via the NG interface to the 5GC. Two or more gNBs are interconnected with each other (and/or with one or more ng-eNBs) by means of an Xn interface.

The term "E-UTRA-NR gNB" or "en-gNB" at least in some examples refers to a RAN node providing NR user plane and control plane protocol terminations towards a UE, and acting as a Secondary Node in E-UTRA-NR Dual Connectivity (EN-DC) scenarios (see e.g., 3GPP TS 37.340 v17.0.0 (2022-04-15) ("[TS37340]")). Two or more en-gNBs are interconnected with each other (and/or with one or more eNBs) by means of an X2 interface.

The term "Next Generation RAN node" or "NG-RAN node" at least in some examples refers to either a gNB or an ng-eNB.

The term "IAB-node" at least in some examples refers to a RAN node that supports new radio (NR) access links to user equipment (UEs) and NR backhaul links to parent nodes and child nodes. The term "IAB-donor" at least in some examples refers to a RAN node (e.g., a gNB) that provides network access to UEs via a network of backhaul and access links.

The term "Transmission Reception Point" or "TRxP" at least in some examples refers to an antenna array with one or more antenna elements available to a network located at a specific geographical location for a specific area.

The term "Central Unit" or "CU" at least in some examples refers to a logical node hosting radio resource control (RRC), Service Data Adaptation Protocol (SDAP), and/or Packet Data Convergence Protocol (PDCP) protocols/layers of an NG-RAN node, or RRC and PDCP protocols of the en-gNB that controls the operation of one or more DUs; a CU terminates an F1 interface connected with a DU and may be connected with multiple DUs. The term "Distributed Unit" or "DU" at least in some examples refers to a logical node hosting Backhaul Adaptation Protocol (BAP), F1 application protocol (F1AP), radio link control (RLC), medium access control (MAC), and physical (PHY) layers of the NG-RAN node or en-gNB, and its operation is partly controlled by a CU; one DU supports one or multiple cells, and one cell is supported by only one DU; and a DU terminates the F1 interface connected with a CU. The term "Radio Unit" or "RU" at least in some examples refers to a logical node hosting PHY layer or Low-PHY layer and radiofrequency (RF) processing based on a lower layer functional split. The term "split architecture" at least in some examples refers to an architecture in which an CU, DU, and/or RU are physically separated from one another. Additionally or alternatively, the term "split architecture" at least in some examples refers to a RAN architecture such as those discussed in 3GPP TS 38.401 v17.3.0 (2023-01-06) ("[TS38401]") and/or 3GPP TS 38.410 v 17.1.0 (2022-06-23) ("[TS38410]"), the contents of each of which are hereby incorporated by reference in their entireties.The term "integrated architecture at least in some examples refers to an architecture in which an RU and DU are implemented on one platform, and/or an architecture in which a DU and a CU are implemented on one platform.

The term "Residential Gateway" or "RG" at least in some examples refers to a device providing, for example, voice, data, broadcast video, video on demand, to other devices in customer premises. The term "Wireline 5G Access Network" or "W-5GAN" at least in some examples refers to a wireline AN that connects to a 5GC via N2 and N3 reference points. The W-5GAN can be either a W-5GBAN or W-5GCAN. The term "Wireline 5G Cable Access Network" or "W-5GCAN" at least in some examples refers to an Access Network defined in/by CableLabs. The term "Wireline BBF Access Network" or "W-5GBAN" at least in some examples refers to an Access Network defined in/by the Broadband Forum (BBF). The term "Wireline Access Gateway Function" or "W-AGF" at least in some examples refers to a Network function in W-5GAN that provides connectivity to a 3GPP 5G Core network (5GC) to 5G-RG and/or FN-RG. The term "5G-RG" at least in some examples refers to an RG capable of connecting to a 5GC playing the role of a user equipment with regard to the 5GC; it supports secure element and exchanges N1 signaling with 5GC. The 5G-RG can be either a 5G-BRG or 5G-CRG.

The term "SMTC" refers to an SSB-based measurement timing configuration configured by *SSB-MeasurementTimingConfiguration.* The term "SSB" refers to an SS/PBCH block.

The term "a "Primary Cell" refers to the MCG cell, operating on the primary frequency, in which the UE either performs the initial connection establishment procedure or initiates the connection re-establishment procedure. The term "Primary SCG Cell" refers to the SCG cell in which the UE performs random access when performing the Reconfiguration with Sync procedure for DC operation. The term "Secondary Cell" refers to a cell providing additional radio resources on top of a Special Cell for a UE configured with CA. The term "Secondary Cell Group" refers to the subset of serving cells comprising the PSCell and zero or more secondary cells for a UE configured with DC. The term "Serving Cell" refers to the primary cell for a UE in RRC_CONNECTED not configured with CA/DC there is only one serving cell comprising of the primary cell. The term "serving cell" or "serving cells" refers to the set of cells comprising the Special Cell(s) and all secondary cells for a UE in RRC_CONNECTED configured with CA. The term "Special Cell" refers to the PCell of the MCG or the PSCell of the SCG for DC operation; otherwise, the term "Special Cell" refers to the Pcell.

The term "edge computing" at least in some examples refers to an implementation or arrangement of distributed computing elements that move processing activities and resources (e.g., compute, storage, acceleration, and/or network resources) towards the "edge" of the network in an effort to reduce latency and increase throughput for endpoint users (client devices, user equipment, and the like). Additionally or alternatively, term "edge computing" at least in some examples refers to a set of services hosted relatively close to a client/UE's access point of attachment to a network to achieve relatively efficient service delivery through reduced end-to-end latency and/or load on the transport network. In some examples, edge computing implementations involve the offering of services and/or resources in a cloud-like systems, functions, applications, and subsystems, from one or multiple locations accessible via wireless networks. Additionally or alternatively, term "edge computing" at least in some examples refers to the concept, as described in [TS23501], that enables operator and 3rd party services to be hosted close to a UE's access point of attachment, to achieve an efficient service delivery through the reduced end-to-end latency and load on the transport network.

The term "edge compute node" or "edge compute device" at least in some examples refers to an identifiable entity implementing an aspect of edge computing operations, whether part of a larger system, distributed collection of systems, or a standalone apparatus. In some examples, a compute node may be referred to as a "edge node", "edge device", "edge system", whether in operation as a client, server, or intermediate entity. Additionally or alternatively, the term "edge compute node" at least in some examples refers to a real-world, logical, or virtualized implementation of a compute-capable element in the form of a device, gateway, bridge, system or subsystem, component, whether operating in a server, client, endpoint, or peer mode, and whether located at an "edge" of an network or at a connected location further within the network. however, references to an "edge computing system" generally refer to a distributed architecture, organization, or collection of multiple nodes and devices, and which is organized to accomplish or offer some aspect of services or resources in an edge computing setting.

The term "edge computing platform" or "edge platform" at least in some examples refers to a collection of functionality that is used to instantiate, execute, or run edge applications on a specific edge compute node (e.g., virtualisation infrastructure and/or the like), enable such edge applications to provide and/or consume edge services, and/or otherwise provide one or more edge services.

The term "edge application" or "edge app" at least in some examples refers to an application that can be instantiated on, or executed by, an edge compute node within an edge computing network, system, or framework, and can potentially provide and/or consume edge computing services.

The term "edge service" at least in some examples refers to a service provided via an edge compute node and/or edge platform, either by the edge platform itself and/or by an edge application.

The term "colocated" or "co-located" at least in some examples refers to two or more elements being in the same place or location, or relatively close to one another (e.g., within some predetermined distance from one another). Additionally or alternatively, the term "colocated" or "co-located" at least in some examples refers to the placement or deployment of two or more compute elements or compute nodes together in a secure dedicated storage facility, or within a same enclosure or housing.

The term "central office" or "CO" at least in some examples refers to an aggregation point for telecommunications infrastructure within an accessible or defined geographical area, often where telecommunication service providers have traditionally located switching equipment for one or multiple types of access networks. In some examples, a CO can be physically designed to house telecommunications infrastructure equipment or compute, data storage, and network resources. The CO need not, however, be a designated location by a telecommunications service provider. The CO may host any number of compute devices for edge applications and services, or even local implementations of cloud-like services.

The term "cloud computing" or "cloud" at least in some examples refers to a paradigm for enabling network access to a scalable and elastic pool of shareable computing resources with self-service provisioning and administration on-demand and without active management by users. Cloud computing provides cloud computing services (or cloud services), which are one or more capabilities offered via cloud computing that are invoked using a defined interface (e.g., an API or the like).

The term "cluster" at least in some examples refers to a set or grouping of entities as part of a cloud computing service and/or an edge computing system (or systems), in the form of physical entities (e.g., different computing systems, network elements, networks and/or network groups), logical entities (e.g., applications, functions, security constructs, virtual machines, virtualization containers, and the like), and the like. In some examples, a "cluster" is also referred to as a "group" or a "domain". The membership of cluster may be modified or affected based on conditions, parameters, criteria, configurations, functions, and/or other aspects including from dynamic or property-based membership, from network or system management scenarios, and/or the like.

The term "compute resource" or simply "resource" at least in some examples refers to an object with a type, associated data, a set of methods that operate on it, and, if applicable, relationships to other resources. Additionally or alternatively, the term "compute resource" or "resource" at least in some examples refers to any physical or virtual component, or usage of such components, of limited availability within a computer system or network. Examples of computing resources include usage/access to, for a period of time, servers, processor(s), storage equipment, memory devices, memory areas, networks, electrical power, input/output (peripheral) devices, mechanical devices, network connections (e.g., channels/links, ports, network sockets, and the like), operating systems, virtual machines (VMs), software/applications, computer files, and/or the like. A "hardware resource" at least in some examples refers to compute, storage, and/or network resources provided by physical hardware element(s). A "virtualized resource" at least in some examples refers to compute, storage, and/or network resources provided by virtualization infrastructure to an application, device, system, and the like. The term "network resource" or "communication resource" at least in some examples refers to resources that are accessible by computer devices/systems via a communications network. The term "system resources" at least in some examples refers to any kind of shared entities to provide services, and includes computing and/or network resources. System resources may be considered as a set of coherent functions, network data objects or services, accessible through a server where such system resources reside on a single host or multiple hosts and are clearly identifiable.

The term "workload" at least in some examples refers to an amount of work performed by a computing system, device, entity, and the like, during a period of time or at a particular instant of time. A workload may be represented as a benchmark, such as a response time, throughput (e.g., how much work is accomplished over a period of time), and/or the like. Additionally or alternatively, the workload may be represented as a memory workload (e.g., an amount of memory space needed for program execution to store temporary or permanent data and to perform intermediate computations), processor workload (e.g., a number of instructions being executed by a processor during a given period of time or at a particular time instant), an I/O workload (e.g., a number of inputs and outputs or system accesses during a given period of time or at a particular time instant), database workloads (e.g., a number of database queries during a period of time), a network-related workload (e.g., a number of network attachments, a number of mobility updates, a number of radio link failures, a number of handovers, an amount of data to be transferred over an air interface, and the like), and/or the like. Various algorithms may be used to determine a workload and/or workload characteristics, which may be based on any of the aforementioned workload types.

The term "cloud service provider" or "CSP" at least in some examples refers to an organization that operates or otherwise provides cloud resources including, for example, centralized, regional, and/or edge data centers and/or the like. In some examples, the term "cloud computing" refers to computing resources and services offered by a CSP.

The term "data center" at least in some examples refers to a purpose-designed structure that is intended to house multiple high-performance compute and data storage nodes such that a large amount of compute, data storage and network resources are present at a single location. This often entails specialized rack and enclosure systems, suitable heating, cooling, ventilation, security, fire suppression, and power delivery systems. The term may also refer to a compute and data storage node in some contexts. A data center may vary in scale between a centralized or cloud data center (e.g., largest), regional data center, and edge data center (e.g., smallest).

The term "access edge layer" indicates the sub-layer of infrastructure edge closest to the end user or device. For example, such layer may be fulfilled by an edge data center deployed at a cellular network site. The access edge layer functions as the front line of the infrastructure Edge and may connect to an aggregation Edge layer higher in the hierarchy.

The term "aggregation edge layer" indicates the layer of infrastructure edge one hop away from the access edge layer. This layer can exist as either a medium-scale data center in a single location or may be formed from multiple interconnected micro data centers to form a hierarchical topology with the access Edge to allow for greater collaboration, workload failover, and scalability than access Edge alone.

The term "network function" or "NF" at least in some examples refers to a functional block within a network infrastructure that has one or more external interfaces and a defined functional behavior.

The term "network service" or "NS" at least in some examples refers to a composition or collection of NF(s) and/or network service(s), defined by its functional and behavioral specification(s).

The term "RAN function" or "RANF" at least in some examples refers to a functional block within a RAN architecture that has one or more external interfaces and a defined behavior related to the operation of a RAN or RAN node. Additionally or alternatively, the term "RAN function" or "RANF" at least in some examples refers to a set of functions and/or NFs that are part of a RAN.

The term "Application Function" or "AF" at least in some examples refers to an element or entity that interacts with a 3GPP core network in order to provide services. Additionally or alternatively, the term "Application Function" or "AF" at least in some examples refers to an edge compute node or ECT framework from the perspective of a 5G core network. The term "edge compute function" or "ECF" at least in some examples refers to an element or entity that performs an aspect of an edge computing technology (ECT), an aspect of edge networking technology (ENT), or performs an aspect of one or more edge computing services running over the ECT or ENT. The term "management function" at least in some examples refers to a logical entity playing the roles of a service consumer and/or a service producer. The term "management service" at least in some examples refers to a set of offered management capabilities. The term "network function virtualization" or "NFV" at least in some examples refers to the principle of separating network functions from the hardware they run on by using virtualisation techniques and/or virtualization technologies.

The term "virtualized network function" or "VNF" at least in some examples refers to an implementation of an NF that can be deployed on a Network Function Virtualisation Infrastructure (NFVI). The term "Network Functions Virtualisation Infrastructure Manager" or "NFVI" at least in some examples refers to a totality of all hardware and software components that build up the environment in which VNFs are deployed.

The term "slice" at least in some examples refers to a set of characteristics and behaviors that separate one instance, traffic, data flow, application, application instance, link or connection, RAT, device, system, entity, element, and the like from another instance, traffic, data flow, application, application instance, link or connection, RAT, device, system, entity, element, and the like, or separate one type of instance, and the like, from another instance, and the like.

The term "network slice" at least in some examples refers to a logical network that provides specific network capabilities and network characteristics and/or supports various service properties for network slice service consumers. Additionally or alternatively, the term "network slice" at least in some examples refers to a logical network topology connecting a number of endpoints using a set of shared or dedicated network resources that are used to satisfy specific service level objectives(SLOs) and/or service level agreements (SLAs).

The term "network slicing" at least in some examples refers to methods, processes, techniques, and technologies used to create one or multiple unique logical and virtualized networks over a common multi-domain infrastructure. The term "access network slice", "radio access network slice", or "RAN slice" at least in some examples refers to a part of a network slice that provides resources in a RAN to fulfill one or more application and/or service requirements (e.g., SLAs, and the like). The term "network slice instance" at least in some examples refers to a set of Network Function instances and the required resources (e.g., compute, storage and networking resources) which form a deployed network slice. Additionally or alternatively, the term "network slice instance" at least in some examples refers to a representation of a service view of a network slice. The term "network instance" at least in some examples refers to information identifying a domain.

The term "service consumer" at least in some examples refers to an entity that consumes one or more services. The term "service producer" at least in some examples refers to an entity that offers, serves, or otherwise provides one or more services. The term "service provider" at least in some examples refers to an organization or entity that provides one or more services to at least one service consumer. For purposes of the present disclosure, the terms "service provider" and "service producer" may be used interchangeably even though these terms may refer to difference concepts. Examples of service providers include cloud service provider (CSP), network service provider (NSP), application service provider (ASP) (e.g., Application software service provider in a service-oriented architecture (ASSP)), internet service provider (ISP), telecommunications service provider (TSP), online service provider (OSP), payment service provider (PSP), managed service provider (MSP), storage service providers (SSPs), SAML service provider, and/or the like. At least in some examples, SLAs may specify, for example, particular aspects of the service to be provided including quality, availability, responsibilities, metrics by which service is measured, as well as remedies or penalties should agreed-on service levels not be achieved. The term "SAML service provider" at least in some examples refers to a system and/or entity that receives and accepts authentication assertions in conjunction with a single sign-on (SSO) profile of the Security Assertion Markup Language (SAML) and/or some other security mechanism(s).

The term "Virtualized Infrastructure Manager" or "VIM" at least in some examples refers to a functional block that is responsible for controlling and managing the NFVI compute, storage and network resources, usually within one operator's infrastructure domain.

The term "virtualization container", "execution container", or "container" at least in some examples refers to a partition of a compute node that provides an isolated virtualized computation environment. The term "OS container" at least in some examples refers to a virtualization container utilizing a shared Operating System (OS) kernel of its host, where the host providing the shared OS kernel can be a physical compute node or another virtualization container. Additionally or alternatively, the term "container" at least in some examples refers to a standard unit of software (or a package) including code and its relevant dependencies, and/or an abstraction at the application layer that packages code and dependencies together. Additionally or alternatively, the term "container" or "container image" at least in some examples refers to a lightweight, standalone, executable software package that includes everything needed to run an application such as, for example, code, runtime environment, system tools, system libraries, and settings.

The term "virtual machine" or "VM" at least in some examples refers to a virtualized computation environment that behaves in a same or similar manner as a physical computer and/or a server. The term "hypervisor" at least in some examples refers to a software element that partitions the underlying physical resources of a compute node, creates VMs, manages resources for VMs, and isolates individual VMs from each other.

The term "Data Network" or "DN" at least in some examples refers to a network hosting data-centric services such as, for example, operator services, the internet, third-party services, or enterprise networks. Additionally or alternatively, a DN at least in some examples refers to service networks that belong to an operator or third party, which are offered as a service to a client or user equipment (UE). DNs are sometimes referred to as "Packet Data Networks" or "PDNs". The term "Local Area Data Network" or "LADN" at least in some examples refers to a DN that is accessible by the UE only in specific locations, that provides connectivity to a specific DNN, and whose availability is provided to the UE.

The term "Internet of Things" or "IoT" at least in some examples refers to a system of interrelated computing devices, mechanical and digital machines capable of transferring data with little or no human interaction, and may involve technologies such as real-time analytics, machine learning and/or AI, embedded systems, wireless sensor networks, control systems, automation (e.g., smarthome, smart building and/or smart city technologies), and the like. IoT devices are usually low-power devices without heavy compute or storage capabilities. The term "edge IoT devices" at least in some examples refers to any kind of IoT devices deployed at a network's edge.

The term "protocol" at least in some examples refers to a predefined procedure or method of performing one or more operations. Additionally or alternatively, the term "protocol" at least in some examples refers to a common means for unrelated objects to communicate with each other (sometimes also called interfaces). The term "communication protocol" at least in some examples refers to a set of standardized rules or instructions implemented by a communication device and/or system to communicate with other devices and/or systems, including instructions for packetizing/depacketizing data, modulating/demodulating signals, implementation of protocols stacks, and/or the like. In various implementations, a "protocol" and/or a "communication protocol" may be represented using a protocol stack, a finite state machine (FSM), and/or any other suitable data structure. The term "standard protocol" at least in some examples refers to a protocol whose specification is published and known to the public and is controlled by a standards body. The term "protocol stack" or "network stack" at least in some examples refers to an implementation of a protocol suite or protocol family. In various implementations, a protocol stack includes a set of protocol layers, where the lowest protocol deals with low-level interaction with hardware and/or communications interfaces and each higher layer adds additional capabilities. Additionally or alternatively, the term "protocol" at least in some examples refers to a formal set of procedures that are adopted to ensure communication between two or more functions within the within the same layer of a hierarchy of functions.

The term "application layer" at least in some examples refers to an abstraction layer that specifies shared communications protocols and interfaces used by hosts in a communications network. Additionally or alternatively, the term "application layer" at least in some examples refers to an abstraction layer that interacts with software applications that implement a communicating component, and includes identifying communication partners, determining resource availability, and synchronizing communication. Examples of application layer protocols include HTTP, HTTPs, File Transfer Protocol (FTP), Dynamic Host Configuration Protocol (DHCP), Internet Message Access Protocol (IMAP), Lightweight Directory Access Protocol (LDAP), MQTT (MQ Telemetry Transport), Remote Authentication Dial-In User Service (RADIUS), Diameter protocol, Extensible Authentication Protocol (EAP), RDMA over Converged Ethernet version 2 (RoCEv2), Real-time Transport Protocol (RTP), RTP Control Protocol (RTCP), Real Time Streaming Protocol (RTSP), SBMV Protocol, Skinny Client Control Protocol (SCCP), Session Initiation Protocol (SIP), Session Description Protocol (SDP), Simple Mail Transfer Protocol (SMTP), Simple Network Management Protocol (SNMP), Simple Service Discovery Protocol (SSDP), Small Computer System Interface (SCSI), Internet SCSI (iSCSI), iSCSI Extensions for RDMA (iSER), Transport Layer Security (TLS), voice over IP (VoIP), Virtual Private Network (VPN), Extensible Messaging and Presence Protocol (XMPP), and/or the like.

The term "session layer" at least in some examples refers to an abstraction layer that controls dialogues and/or connections between entities or elements, and may include establishing, managing and terminating the connections between the entities or elements.

The term "transport layer" at least in some examples refers to a protocol layer that provides end-to-end (e2e) communication services such as, for example, connection-oriented communication, reliability, flow control, and multiplexing. Examples of transport layer protocols include datagram congestion control protocol (DCCP), fibre channel protocol (FBC), Generic Routing Encapsulation (GRE), GPRS Tunneling (GTP), Micro Transport Protocol (µTP), Multipath TCP (MPTCP), MultiPath QUIC (MPQUIC), Multipath UDP (MPUDP), Quick UDP Internet Connections (QUIC), Remote Direct Memory Access (RDMA), Resource Reservation Protocol (RSVP), Stream Control Transmission Protocol (SCTP), transmission control protocol (TCP), user datagram protocol (UDP), and/or the like.

The term "network layer" at least in some examples refers to a protocol layer that includes means for transferring network packets from a source to a destination via one or more networks. Additionally or alternatively, the term "network layer" at least in some examples refers to a protocol layer that is responsible for packet forwarding and/or routing through intermediary nodes. Additionally or alternatively, theterm "network layer" or "internet layer" at least in some examples refers to a protocol layer that includes interworking methods, protocols, and specifications that are used to transport network packets across a network. As examples, the network layer protocols include internet protocol (IP), IP security (IPsec), Internet Control Message Protocol (ICMP), Internet Group Management Protocol (IGMP), Open Shortest Path First protocol (OSPF), Routing Information Protocol (RIP), RDMA over Converged Ethernet version 2 (RoCEv2), Subnetwork Access Protocol (SNAP), and/or some other internet or network protocol layer.

The term "link layer" or "data link layer" at least in some examples refers to a protocol layer that transfers data between nodes on a network segment across a physical layer. Examples of link layer protocols include logical link control (LLC), medium access control (MAC), Ethernet, RDMA over Converged Ethernet version 1 (RoCEv1), and/or the like.

The term "radio resource control", "RRC layer", or "RRC" at least in some examples refers to a protocol layer or sublayer that performs system information handling; paging; establishment, maintenance, and release of RRC connections; security functions; establishment, configuration, maintenance and release of Signalling Radio Bearers (SRBs) and Data Radio Bearers (DRBs); mobility functions/services; QoS management; and some sidelink specific services and functions over the Uu interface (see e.g., 3GPP TS 36.331 v17.4.0 (2023-03-30) ("[TS36331]") and/or 3GPP TS 38.331 v17.4.0 (2023-03-30) ("[TS38331]")).

The term "Service Data Adaptation Protocol", "SDAP layer", or "SDAP" at least in some examples refers to a protocol layer or sublayer that performs mapping between QoS flows and a data radio bearers (DRBs) and marking QoS flow IDs (QFI) in both DL and UL packets (see e.g., 3GPP TS 37.324 v17.0.0 (2022-04-13) ("[TS37324]").

The term "Packet Data Convergence Protocol", "PDCP layer", or "PDCP" at least in some examples refers to a protocol layer or sublayer that performs transfer user plane or control plane data; maintains PDCP sequence numbers (SNs); header compression and decompression using the Robust Header Compression (ROHC) and/or Ethernet Header Compression (EHC) protocols; ciphering and deciphering; integrity protection and integrity verification; provides timer based SDU discard; routing for split bearers; duplication and duplicate discarding; reordering and in-order delivery; and/or out-of-order delivery (see e.g., 3GPP TS 36.323 v17.2.0 (2023-01-13) and/or 3GPP TS 38.323 v17.4.0 (2023-03-28) ("[TS38323]")).

The term "radio link control layer", "RLC layer", or "RLC" at least in some examples refers to a protocol layer or sublayer that performs transfer of upper layer PDUs; sequence numbering independent of the one in PDCP; error Correction through ARQ; segmentation and/or re-segmentation of RLC SDUs; reassembly of SDUs; duplicate detection; RLC SDU discarding; RLC re-establishment; and/or protocol error detection (see e.g., 3GPP TS 36.322 v17.0.0 (2022-04-15) and 3GPP TS 38.322 v17.2.0 (2023-01-13) ("[TS38322]")).

The term "medium access control protocol", "MAC protocol", or "MAC" at least in some examples refers to a protocol that governs access to the transmission medium in a network, to enable the exchange of data between stations in a network. Additionally or alternatively, the term "medium access control layer", "MAC layer", or "MAC" at least in some examples refers to a protocol layer or sublayer that performs functions to provide frame-based, connectionless-mode (e.g., datagram style) data transfer between stations or devices. Additionally or alternatively, the term "medium access control layer", "MAC layer", or "MAC" at least in some examples refers to a protocol layer or sublayer that performs mapping between logical channels and transport channels; multiplexing/demultiplexing of MAC SDUs belonging to one or different logical channels into/from transport blocks (TB) delivered to/from the physical layer on transport channels; scheduling information reporting; error correction through HARQ (one HARQ entity per cell in case of CA); priority handling between UEs by means of dynamic scheduling; priority handling between logical channels of one UE by means of logical channel prioritization; priority handling between overlapping resources of one UE; and/or padding (see e.g., [IEEE802], 3GPP TS 36.321 v17.3.0 (2023-01-13), and 3GPP TS 38.321 v17.4.0 (2023-03-29) ("[TS38321]").

The term "physical layer", "PHY layer", or "PHY" at least in some examples refers to a protocol layer or sublayer that includes capabilities to transmit and receive modulated signals for communicating in a communications network (see e.g., [IEEE802], 3GPP TS 36.201 v17.0.0 (2022-03-31), and 3GPP TS 38.201 v17.0.0 (2022-01-05) ("[TS38201]")

The term "access technology" at least in some examples refers to the technology used for the underlying physical connection to a communication network. The term "radio access technology" or "RAT" at least in some examples refers to the technology used for the underlying physical connection to a radio based communication network. The term "radio technology" at least in some examples refers to technology for wireless transmission and/or reception of electromagnetic radiation for information transfer. The term "RAT type" at least in some examples may identify a transmission technology and/or communication protocol used in an access network. Examples of access technologies include wireless access technologies/RATs, wireline, wireline-cable, wireline broadband forum (wireline-BBF), Ethernet (see e.g., IEEE Standard for Ethernet, IEEE Std 802.3-2018 (31 Aug. 2018) ("[IEEE8023]")) and variants thereof, fiber optics networks (e.g., ITU-T G.651, ITU-T G.652, Optical Transport Network (OTN), Synchronous optical networking (SONET) and synchronous digital hierarchy (SDH), and the like), digital subscriber line (DSL) and variants thereof, Data Over Cable Service Interface Specification (DOCSIS) technologies, hybrid fiber-coaxial (HFC) technologies, and/or the like. Examples of RATs (or RAT types) and/or communications protocols include Advanced Mobile Phone System (AMPS) technologies (e.g., Digital AMPS (D-AMPS), Total Access Communication System (TACS) and variants thereof, such as Extended TACS (ETACS), and the like); Global System for Mobile Communications (GSM) technologies (e.g., Circuit Switched Data (CSD), High-Speed CSD (HSCSD), General Packet Radio Service (GPRS), and Enhanced Data Rates for GSM Evolution (EDGE)); Third Generation Partnership Project (3GPP) technologies (e.g., Universal Mobile Telecommunications System (UMTS) and variants thereof (e.g., UMTS Terrestrial Radio Access (UTRA), Wideband Code Division Multiple Access (W-CDMA), Freedom of Multimedia Access (FOMA), Time Division-Code Division Multiple Access (TD-CDMA), Time Division-Synchronous Code Division Multiple Access (TD-SCDMA), and the like), Generic Access Network (GAN) / Unlicensed Mobile Access (UMA), High Speed Packet Access (HSPA) and variants thereof (e.g., HSPA Plus (HSPA+)), Long Term Evolution (LTE) and variants thereof (e.g., LTE-Advanced (LTE-A), Evolved UTRA (E-UTRA), LTE Extra, LTE-A Pro, LTE LAA, MuLTEfire, and the like), Fifth Generation (5G) or New Radio (NR), narrowband IoT (NB-IOT), 3GPP Proximity Services (ProSe), and/or the like); ETSI RATs (e.g., High Performance Radio Metropolitan Area Network (HiperMAN), Intelligent Transport Systems (ITS) (e.g., ITS-G5, ITS-G5B, ITS-G5C, and the like), and the like); Institute of Electrical and Electronics Engineers (IEEE) technologies and/or WiFi (e.g., IEEE Standard for Local and Metropolitan Area Networks: Overview and Architecture, IEEE Std 802-2014, pp.1-74 (30 Jun. 2014) ("[IEEE802]"), IEEE Standard for Information TechnologyTelecommunications and Information Exchange between Systems - Local and Metropolitan Area Networks--Specific Requirements - Part 11: Wireless LAN Medium Access Control (MAC) and Physical Layer (PHY) Specifications, IEEE Std 802.11-2020, pp.1-4379 (26 Feb. 2021) ("[IEEE80211]"), IEEE 802.15 technologies (e.g*.,* IEEE Standardfor Low-Rate Wireless Networks, IEEE Std 802.15.4-2020, pp.1-800 (23 July 2020) ("[IEEE802154]") and variants thereof (e.g., ZigBee, WirelessHART, MiWi, ISA100.1 1a, Thread, IPv6 over Low power WPAN (6LoWPAN), and the like), IEEE Standard for Local and metropolitan area networks - Part 15.6: Wireless Body Area Networks, IEEE Std 802.15.6-2012, pp. 1-271 (29 Feb. 2012), and the like), WLAN V2X RATs (e.g., IEEE Standard for Information technology-- Local and metropolitan area networks-- Specific requirements-- Part 11: Wireless LAN Medium Access Control (MAC) and Physical Layer (PHY) Specifications Amendment 6: Wireless Access in Vehicular Environments, IEEE Std 802.11p-2010, pp.1-51 (15 July 2010) ("[IEEE80211p]") (which is now part of [IEEE80211]), IEEE Guide for Wireless Access in Vehicular Environments (WAVE) Architecture, IEEE STANDARDS ASSOCIATION, IEEE 1609.0-2019 (10 Apr. 2019) ("[IEEE16090]"), IEEE 802.11bd, Dedicated Short Range Communications (DSRC), and/or the like), Worldwide Interoperability for Microwave Access (WiMAX) (e.g., IEEE Standard for Air Interface for Broadband Wireless Access Systems, IEEE Std 802.16-2017, pp.1-2726 (02 Mar. 2018) ("[WiMAX]")), Mobile Broadband Wireless Access (MBWA)/iBurst (e.g., IEEE 802.20 and variants thereof), Wireless Gigabit Alliance (WiGig) standards (e.g., IEEE 802.11ad, IEEE 802.11ay, and the like), and so forth); Integrated Digital Enhanced Network (iDEN) and variants thereof (e.g., Wideband Integrated Digital Enhanced Network (WiDEN)); millimeter wave (mmWave) technologies/standards (e.g., wireless systems operating at 10-300 GHz and above 3GPP 5G); short-range and/or wireless personal area network (WPAN) technologies/standards (e.g., IEEE 802.15 technologies (e.g., as mentioned previously); Bluetooth and variants thereof (e.g., Bluetooth 5.3, Bluetooth Low Energy (BLE), and the like), WiFi-direct, Miracast, ANT/ANT+, Z-Wave, Universal Plug and Play (UPnP), low power Wide Area Networks (LPWANs), Long Range Wide Area Network (LoRA or LoRaWAN^{™}), and the like); optical and/or visible light communication (VLC) technologies/standards (*e.g.,* IEEE Standard for Local and metropolitan area networks--Part 15.7: Short-Range Optical Wireless Communications, IEEE Std 802.15.7-2018, pp.1-407 (23 Apr. 2019), and the like); Sigfox; Mobitex; 3GPP2 technologies (e.g., cdmaOne (2G), Code Division Multiple Access 2000 (CDMA 2000), and Evolution-Data Optimized or Evolution-Data Only (EV-DO); Push-to-talk (PTT), Mobile Telephone System (MTS) and variants thereof (e.g., Improved MTS (IMTS), Advanced MTS (AMTS), and the like); Personal Digital Cellular (PDC); Personal Handy-phone System (PHS), Cellular Digital Packet Data (CDPD); Cellular Digital Packet Data (CDPD); DataTAC; Digital Enhanced Cordless Telecommunications (DECT) and variants thereof (e.g., DECT Ultra Low Energy (DECT ULE), DECT-2020, DECT-5G, and the like); Ultra High Frequency (UHF) communication; Very High Frequency (VHF) communication; and/or any other suitable RAT or protocol. In addition to the aforementioned RATs/standards, any number of satellite uplink technologies may be used for purposes of the present disclosure including, for example, radios compliant with standards issued by the International Telecommunication Union (ITU), or the ETSI, among others. The examples provided herein are thus understood as being applicable to various other communication technologies, both existing and not yet formulated.

The term "Ethernet" at least in some examples refers to a term that is used to refer either to the IEEE 802.3 media access method or to the frame format discussed in [IEEE8023].

The term "V2X" at least in some examples refers to vehicle to vehicle (V2V), vehicle to infrastructure (V2I), infrastructure to vehicle (I2V), vehicle to network (V2N), and/or network to vehicle (N2V) communications and associated radio access technologies.

The term "channel" at least in some examples refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" at least in some examples refers to a connection between two devices through a RAT for the purpose of transmitting and receiving information.

The term "carrier" at least in some examples refers to a modulated waveform conveying one or more physical channels (e.g., 5G/NR, E-UTRA, UTRA, and/or GSM/EDGE physical channels). The term "carrier frequency" at least in some examples refers to the center frequency of a cell.

The term "bearer" at least in some examples refers to a information transmission path of defined capacity, delay, bit error rate, and/or the like. The term "radio bearer" at least in some examples refers to the service provided by Layer 2 (L2) for transfer of user data between user equipment (UE) and a radio access network (RAN). The term "radio access bearer" at least in some examples refers to the service that the access stratum provides to the non-access stratum for transfer of user data between a UE and a CN.

The terms "beamforming" and "beam steering" at least in some examples refer to a spatial filtering mechanism used at a transmitter (Tx) to improve the received signal power, signal-to-noise ratio (SNR), or some other signalling metric at an intended receiver (Rx). The term "beamformer" at least in some examples refers to a STA that transmits a physical layer PDU (PPDU) using a beamforming steering matrix. The term "beamforming steering matrix" at least in some examples refers to a matrix determined using knowledge of the channel between a Tx and an intended Rx that maps from space-time streams to transmit antennas with the goal of improving the signal power, SNR, and/or some other signalling metric at the intended Rx.

The term "subframe" at least in some examples refers to a time interval during which a signal is signaled. In some implementations, a subframe is equal to 1 millisecond (ms). The term "time slot" at least in some examples refers to an integer multiple of consecutive subframes. The term "superframe" at least in some examples refers to a time interval comprising two time slots.

The term "channel matrix" at least in some examples refers to a mathematical representation of a radio channel between a transmitter (Tx) and a receiver (Rx). In some examples, a "channel matrix" is a square matrix with dimensions equal to the number of transmit antennas and the number of receive antennas. In some examples, the elements of a channel matrix represent the complex gain of the channel between each transmit antenna and each receive antenna. In some examples, a channel matrix is used by an Rx to demodulate a received signal, wherein the Rx multiplies the received signal by the conjugate transpose of the channel matrix, which cancels out the effects of the channel and allows the Rx to recover the transmitted signal. In some examples, a channel matrix is used by a Tx to precode a transmitted signal. In some examples, "precoding" refers to a technique that is used to improve the performance of a communication system by increasing the signal-to-noise ratio at the receiver. In some examples, the Tx multiplies a transmitted signal by the channel matrix, which effectively aligns the transmitted signal with the channel and can improve the signal-to-noise ratio at the Rx. In some examples, the channel matrix is a statistical quantity that varies from one transmission to another due to a variety of factors that can affect a radio channel such as, for example, the movement of the Tx and/or Rx, the presence of obstacles, weather/environmental conditions, and/or the like.

The term "interoperability" at least in some examples refers to the ability of STAs utilizing one communication system or RAT to communicate with other STAs utilizing another communication system or RAT. The term "Coexistence" at least in some examples refers to sharing or allocating radiofrequency resources among STAs using either communication system or RAT.

The term "reliability" at least in some examples refers to the ability of a computer-related component (e.g., software, hardware, or network element/entity) to consistently perform a desired function and/or operate according to a specification. Reliability in the context of network communications (e.g., "network reliability") at least in some examples refers to the ability of a network to carry out communication. The term "network reliability" at least in some examples refers to a probability or measure of delivering a specified amount of data from a source to a destination (or sink).

The term "local area network" or "LAN" at least in some examples refers to a network of devices, whether indoors or outdoors, covering a limited area or a relatively small geographic area (e.g., within a building or a campus). The term "wireless local area network", "wireless LAN", or "WLAN" at least in some examples refers to a LAN that involves wireless communications.

The term "wide area network" or "WAN" at least in some examples refers to a network of devices that extends over a relatively large geographic area (e.g., a telecommunications network). Additionally or alternatively, the term "wide area network" or "WAN" at least in some examples refers to a computer network spanning regions, countries, or even an entire planet.

The term "backbone network", "backbone", or "core network" at least in some examples refers to a computer network which interconnects networks, providing a path for the exchange of information between different subnetworks such as LANs or WANs.

The term "interworking" at least in some examples refers to the use of interconnected stations in a network for the exchange of data, by means of protocols operating over one or more underlying data transmission paths.

The term "flow" at least in some examples refers to a sequence of data and/or data units (e.g., datagrams, packets, or the like) from a source entity/element to a destination entity/element. Additionally or alternatively, the terms "flow" or "traffic flow" at least in some examples refer to an artificial and/or logical equivalent to a call, connection, or link. Additionally or alternatively, the terms "flow" or "traffic flow" at least in some examples refer to a sequence of packets sent from a particular source to a particular unicast, anycast, or multicast destination that the source desires to label as a flow; from an upper-layer viewpoint, a flow may include of all packets in a specific transport connection or a media stream, however, a flow is not necessarily 1:1 mapped to a transport connection. Additionally or alternatively, the terms "flow" or "traffic flow" at least in some examples refer to a set of data and/or data units (e.g., datagrams, packets, or the like) passing an observation point in a network during a certain time interval. Additionally or alternatively, the term "flow" at least in some examples refers to a user plane data link that is attached to an association. Examples are circuit switched phone call, voice over IP call, reception of an SMS, sending of a contact card, PDP context for internet access, demultiplexing a TV channel from a channel multiplex, calculation of position coordinates from geopositioning satellite signals, and the like. For purposes of the present disclosure, the terms "traffic flow", "data flow", "dataflow", "packet flow", "network flow", and/or "flow" may be used interchangeably even though these terms at least in some examples refers to different concepts.

The term "dataflow" or "data flow" at least in some examples refers to the movement of data through a system including software elements, hardware elements, or a combination of both software and hardware elements. Additionally or alternatively, the term "dataflow" or "data flow" at least in some examples refers to a path taken by a set of data from an origination or source to destination that includes all nodes through which the set of data travels.

The term "stream" or "data stream" at least in some examples refers to a sequence of data elements made available over time. Additionally or alternatively, the term "stream", "data stream", or "streaming" refers to a unidirectional flow of data. Additionally or alternatively, the term "stream", "data stream", or "streaming" refers to a manner of processing in which an object is not represented by a complete data structure of nodes occupying memory proportional to a size of that object, but are processed "on the fly" as a sequence of events. At least in some examples, functions that operate on a stream, which may produce another stream, are referred to as "filters," and can be connected in pipelines, analogously to function composition; filters may operate on one item of a stream at a time, or may base an item of output on multiple input items, such as a moving average or the like.

The term "distributed computing" at least in some examples refers to computation resources that are geographically distributed within the vicinity of one or more localized networks' terminations. The term "distributed computations" at least in some examples refers to a model in which components located on networked computers communicate and coordinate their actions by passing messages interacting with each other in order to achieve a common goal.

The term "service" at least in some examples refers to the provision of a discrete function within a system and/or environment. Additionally or alternatively, the term "service" at least in some examples refers to a functionality or a set of functionalities that can be reused. The term "microservice" at least in some examples refers to one or more processes that communicate over a network to fulfil a goal using technology-agnostic protocols (e.g., HTTP or the like). Additionally or alternatively, the term "microservice" at least in some examples refers to services that are relatively small in size, messaging-enabled, bounded by contexts, autonomously developed, independently deployable, decentralized, and/or built and released with automated processes. Additionally or alternatively, the term "microservice" at least in some examples refers to a self-contained piece of functionality with clear interfaces, and may implement a layered architecture through its own internal components. Additionally or alternatively, the term "microservice architecture" at least in some examples refers to a variant of the service-oriented architecture (SOA) structural style wherein applications are arranged as a collection of loosely-coupled services (e.g., fine-grained services) and may use lightweight protocols. The term "network service" at least in some examples refers to a composition of Network Function(s) and/or Network Service(s), defined by its functional and behavioural specification.

The term "session" at least in some examples refers to a temporary and interactive information interchange between two or more communicating devices, two or more application instances, between a computer and user, and/or between any two or more entities or elements. Additionally or alternatively, the term "session" at least in some examples refers to a connectivity service or other service that provides or enables the exchange of data between two entities or elements. The term "network session" at least in some examples refers to a session between two or more communicating devices over a network. The term "web session" at least in some examples refers to session between two or more communicating devices over the Internet or some other network. The term "session identifier," "session ID," or "session token" at least in some examples refers to a piece of data that is used in network communications to identify a session and/or a series of message exchanges.

The term "quality" at least in some examples refers to a property, character, attribute, or feature of something as being affirmative or negative, and/or a degree of excellence of something. Additionally or alternatively, the term "quality" at least in some examples, in the context of data processing, refers to a state of qualitative and/or quantitative aspects of data, processes, and/or some other aspects of data processing systems.

The term "Quality of Service" or "QoS' at least in some examples refers to a description or measurement of the overall performance of a service (e.g., telephony and/or cellular service, network service, wireless communication/connectivity service, cloud computing service, and the like). In some cases, the QoS may be described or measured from the perspective of the users of that service, and as such, QoS may be the collective effect of service performance that determine the degree of satisfaction of a user of that service. In other cases, QoS at least in some examples refers to traffic prioritization and resource reservation control mechanisms rather than the achieved perception of service quality. In these cases, QoS is the ability to provide different priorities to different applications, users, or flows, or to guarantee a certain level of performance to a flow. In either case, QoS is characterized by the combined aspects of performance factors applicable to one or more services such as, for example, service operability performance, service accessibility performance; service retain ability performance; service reliability performance, service integrity performance, and other factors specific to each service. Several related aspects of the service may be considered when quantifying the QoS, including packet loss rates, bit rates, throughput, transmission delay, availability, reliability, jitter, signal strength and/or quality measurements, and/or other measurements such as those discussed herein. Additionally or alternatively, the term "Quality of Service" or "QoS' at least in some examples refers to mechanisms that provide traffic-forwarding treatment based on flow-specific traffic classification. In some examples, Additionally or alternatively, the term "Quality of Service" or "QoS' at least in some examples is based on the definitions provided by SERIES E: OVERALL NETWORK OPERATION, TELEPHONE SERVICE, SERVICE OPERATION AND HUMAN FACTORS Quality of telecommunication services: concepts, models, objectives and dependability planning - Terms and definitions related to the quality of telecommunication services, Definitions of terms related to quality of service, ITU-T Recommendation E.800 (09/2008) ("[ITUE800]"), the contents of which is hereby incorporated by reference in its entirety. Additionally or alternatively, the term "Quality of Service" or "QoS' at least in some examples refers to the collective effect of service performances which determine the degree of satisfaction of a user of a service. In some examples, QoS is characterised by the combined aspects of performance factors applicable to all services, such as service operability performance; service accessibility performance; service retainability performance; service integrity performance; and/or other factors specific to each service. In some implementations, the term "Quality of Service" or "QoS" can be used interchangeably with the term "Class of Service" or "CoS". The term "Class of Service" or "CoS' at least in some examples refers to mechanisms that provide traffic-forwarding treatment based on non-flow-specific traffic classification. In some implementations, the term "Class of Service" or "CoS" can be used interchangeably with the term "Quality of Service" or "QoS".

The term "QoS flow" at least in some examples refers to the finest granularity for QoS forwarding treatment in a network. The term "5G QoS flow' at least in some examples refers to the finest granularity for QoS forwarding treatment in a 5G System (5GS). Traffic mapped to the same QoS flow (or 5G QoS flow) receive the same forwarding treatment. The term "QoS Identifier" at least in some examples refers to a scalar that is used as a reference to a specific QoS forwarding behavior (e.g., packet loss rate, packet delay budget, and the like) to be provided to a QoS flow. This may be implemented in an access network by referencing node specific parameters that control the QoS forwarding treatment (e.g., scheduling weights, admission thresholds, queue management thresholds, link layer protocol configuration, and the like). The term "QoS profile" at least in some examples refers to a QoS profile comprises a number of QoS parameters. A QoS profile is associated with each QoS session. The QoS profile defines the performance expectations placed on the bearer network. The term "QoS session" at least in some examples refers to a lifetime of PDP context. Additionally or alternatively, the term "QoS session" at least in some examples refers to a period between the opening and closing of a network connection whose characteristics are defined by a QoS profile. In some examples, multiple QoS sessions may exist, each with a different QoS profile.

The term "data buffer" or "buffer" at least in some examples refers to a region of a physical or virtual memory used to temporarily store data, for example, when data is being moved from one storage location or memory space to another storage location or memory space, data being moved between processes within a computer, allowing for timing corrections made to a data stream, reordering received data packets, delaying the transmission of data packets, and the like. At least in some examples, a "data buffer" or "buffer" may implement a queue. The term "circular buffer", "circular queue", "cyclic buffer", or "ring buffer" at least in some examples refers to a data structure that uses a single fixed-size buffer or other area of memory as if it were connected end-to-end or as if it has a circular or elliptical shape.

The term "channel coding" at least in some examples refers to processes and/or techniques to add redundancy to messages or packets in order to make those messages or packets more robust against noise, channel interference, limited channel bandwidth, and/or other errors. For purposes of the present disclosure, the term "channel coding" can be used interchangeably with the terms "forward error correction" or "FEC"; "error correction coding", "error correction code", or "ECC"; and/or "network coding" or "NC". The term "network coding" at least in some examples refers to processes and/or techniques in which transmitted data is encoded and decoded to improve network performance. The term "code rate" at least in some examples refers to the proportion of a data stream or flow that is useful or non-redundant (e.g., for a code rate of k/n, for every k bits of useful information, the (en)coder generates a total of n bits of data, of which n - k are redundant). The term "systematic code" at least in some examples refers to any error correction code in which the input data is embedded in the encoded output. The term "non-systematic code" at least in some examples refers to any error correction code in which the input data is not embedded in the encoded output. The term "interleaving" at least in some examples refers to a process to rearrange code symbols so as to spread bursts of errors over multiple codewords that can be corrected by ECCs. The term "code word" or "codeword" at least in some examples refers to an element of a code or protocol, which is assembled in accordance with specific rules of the code or protocol.

The term "network path" or "path" at least in some examples refers to a data communications feature of a communication system describing the sequence and identity of system components visited by one or more packets, where the components of the path may be either logical or physical. The term "network forwarding path" at least in some examples refers to an ordered list of connection points forming a chain ofNFs and/or nodes, along with policies associated to the list.

The term "PDU Connectivity Service" at least in some examples refers to a service that provides exchange of protocol data units (PDUs) between a UE and a data network (DN). The term "PDU Session" at least in some examples refers to an association between a UE and a DN that provides a PDU connectivity service (see e.g., 3GPP TS 38.415 v17.0.0 (2022-04-06) ("[TS38415]") and 3GPP TS 38.413 v17.3.0 (2023-01-06) ("[TS38413]"), the contents of each of which are hereby incorporated by reference in their entireties); a PDU Session type can be IPv4, IPv6, IPv4v6, Ethernet), Unstructured, or any other network/connection type, such as those discussed herein. The term "PDU Session Resource" at least in some examples refers to an NG-RAN interface (e.g., NG, Xn, and/or E1 interfaces) and radio resources provided to support a PDU Session. The term "multi-access PDU session" or "MA PDU Session" at least in some examples refers to a PDU Session that provides a PDU connectivity service, which can use one access network at a time or multiple access networks simultaneously.

The term "traffic shaping" at least in some examples refers to a bandwidth management technique that manages data transmission to comply with a desired traffic profile or class of service. Traffic shaping ensures sufficient network bandwidth for time-sensitive, critical applications using policy rules, data classification, queuing, QoS, and other techniques. The term "throttling" at least in some examples refers to the regulation of flows into or out of a network, or into or out of a specific device or element. The term "access traffic steering" or "traffic steering" at least in some examples refers to a procedure that selects an access network for a new data flow and transfers the traffic of one or more data flows over the selected access network. Access traffic steering is applicable between one 3GPP access and one non-3GPP access. The term "access traffic switching" or "traffic switching" at least in some examples refers to a procedure that moves some or all traffic of an ongoing data flow from at least one access network to at least one other access network in a way that maintains the continuity of the data flow. The term "access traffic splitting" or "traffic splitting" at least in some examples refers to a procedure that splits the traffic of at least one data flow across multiple access networks. When traffic splitting is applied to a data flow, some traffic of the data flow is transferred via at least one access channel, link, or path, and some other traffic of the same data flow is transferred via another access channel, link, or path.

The term "network address" at least in some examples refers to an identifier for a node or host in a computer network, and may be a unique identifier across a network and/or may be unique to a locally administered portion of the network. Examples of identifiers and/or network addresses can include am application identifier, Bluetooth hardware device address (BD ADDR), a cellular network address (e.g., Absolute Radio-Frequency Channel Number (ARFCN), Access Point Name (APN), AMF name and/or AMF identifier (ID), AF-Service-Identifier, Cell Global Identifier (CGI) (e.g., NR CGI (NCGI), CGI NG-RAN, CGI EUTRA, and/or the like), Closed Access Group Identifier (CAG-ID), Edge Application Server (EAS) ID, Data Network Access Identifier (DNAI), Data Network Name (DNN), Evolved Cell Global Identifier (ECGI), EPS Bearer Identity (EBI), Equipment Identity Register (EIR) and/or 5G-EIR, Extended Unique Identifier (EUI), Group ID for Network Selection (GIN), Generic Public Subscription Identifier (GPSI), Globally Unique AMF Identifier (GUAMI), Globally Unique Temporary Identifier (GUTI) and/or 5G-GUTI, gNB Identifier (gNB ID), Global gNB ID, International Mobile Equipment Identity (IMEI), IMEI Type Allocation Code (IMEA/TAC), International Mobile Subscriber Identity (IMSI), IMSI software version (IMSISV), permanent equipment identifier (PEI), Local Area Data Network (LADN) DNN, Local NG-RAN Node Identifier, Mobile Subscriber Identification Number (MSIN), Mobile Subscriber/Station ISDN Number (MSISDN), Network identifier (NID), Network Slice Instance (NSI) ID, Network Slice AS Group (NSAG), Permanent Equipment Identifier (PEI), Public Land Mobile Network (PLMN) identity (ID), Physical Cell Identifier (PCI), QoS Flow ID (QFI) and/or 5G QoS Identifier (5QI), RAN ID, Routing Indicator, Radio Network Temporary Identifier (RNTI) and variants thereof (e.g., any of those discussed in clause 8 of 3GPP TS 38.300 v17.4.0 (2023-03-28) ("[TS38300]")), SMS Function (SMSF) ID, Stand-alone Non-Public Network (SNPN) ID, Single Network Slice Selection Assistance information (S-NSSAI), sidelink identities (e.g., Source Layer-2 ID, Destination Layer-2 ID, PC5 Link Identifier, and the like), Subscription Concealed Identifier (SUCI), Subscription Permanent Identifier (SUPI), Temporary Mobile Subscriber Identity (TMSI) and variants thereof, Tracking Area identity (TAI), UE Access Category and Identity, and/or other cellular network related identifiers), CAG-ID, drivers license number, Global Trade Item Number (GTIN) (e.g., Australian Product Number (APN), EPC, European Article Number (EAN), Universal Product Code (UPC), and the like), email address, Enterprise Application Server (EAS) ID, an endpoint address, an Electronic Product Code (EPC) as defined by the EPCglobal Tag Data Standard, Fully Qualified Domain Name (FQDN), flow ID and/or flow hash, hash value, index, internet protocol (IP) address in an IP network (e.g., IP version 4 (IPv4), IP version 6 (IPv6), and the like), an internet packet exchange (IPX) address, LAN ID, a MAC address, personal area network (PAN) ID, port number (e.g., TCP port number, UDP port number, and the like), price lookup code (PLC), product key, QUIC connection ID, RFID tag, sequence number, service set identifier (SSID) and variants thereof, screen name, serial number, stock keeping unit (SKU), socket address, social security number (SSN), telephone number (e.g., in a public switched telephone network (PTSN)), unique identifier (UID) (e.g., including globally UID, universally unique identifier (UUID) (e.g., as specified in ISO/IEC 11578:1996), and the like), a Universal Resource Locator (URL) and/or Universal Resource Identifier (URI), user name (e.g., ID for logging into a service provider platform, such as a social network and/or some other service), vehicle identification number (VIN), Virtual LAN (VLAN) ID, X.21 address, an X.25 address, Zigbee^{®} ID, Zigbee^{®} Device Network ID, and/or any other suitable network address and components thereof.

The term "universally unique identifier" or "UUID" at least in some examples refers to a number used to identify information in computer systems. In some examples, a UUID includes 128-bit numbers and/or are represented as 32 hexadecimal digits displayed in five groups separated by hyphens in the following format: "xxxxxxxx-xxxx-Mxxx-Nxxx-xxxxxxxxxxxx" where the four-bit M and the 1 to 3 bit N fields code the format of the UUID itself. Additionally or alternatively, the term "universally unique identifier" or "UUID" at least in some examples refers to a "globally unique identifier" and/or a "GUID". The term "endpoint address" at least in some examples refers to an address used to determine the host/authority part of a target URI, where the target URI is used to access an NF service (e.g., to invoke service operations) of an NF service producer or for notifications to an NF service consumer.

The term "port" in the context of computer networks, at least in some examples refers to a communication endpoint, a virtual data connection between two or more entities, and/or a virtual point where network connections start and end. Additionally or alternatively, a "port" at least in some examples is associated with a specific process or service. Additionally or alternatively, the term "port" at least in some examples refers to a particular interface of the specified equipment (apparatus) with an electromagnetic environment (e.g., any connection point on an equipment intended for connection of cables to or from that equipment is considered as a port).

The term "subnetwork" or "subnet" at least in some examples refers to a logical subdivision of a network, such as an IP network. The practice of dividing a network into two or more networks is called "subnetting."

The term "delay" at least in some examples refers to a time interval between two events. Additionally or alternatively, the term "delay" at least in some examples refers to a time interval between the propagation of a signal and its reception. The term "delay bound" at least in some examples refers to a predetermined or configured amount of acceptable delay. The term "per-packet delay bound" at least in some examples refers to a predetermined or configured amount of acceptable packet delay where packets that are not processed and/or transmitted within the delay bound are considered to be delivery failures and are discarded or dropped. The term "goodput" at least in some examples refers to a number of useful information bits delivered by the network to a certain destination per unit of time. The term "jitter" at least in some examples refers to a deviation from a predefined ("true") periodicity of a presumably periodic signal in relation to a reference clock signal. The term "latency" at least in some examples refers to the amount of time it takes to transfer a first/initial data unit in a data burst from one point to another. Additionally or alternatively, the term "latency" at least in some examples refers to the delay experienced by a data unit (e.g., frame) in the course of its propagation between two points in a network, measured from the time that a known reference point in the frame passes the first point to the time that the reference point in the data unit passes the second point. The term "network delay" at least in some examples refers to the delay of an a data unit within a network (e.g., an IP packet within an IP network). The term "packet delay" at least in some examples refers to the time it takes to transfer any packet from one point to another. Additionally or alternatively, the term "packet delay" or "per packet delay" at least in some examples refers to the difference between a packet reception time and packet transmission time. Additionally or alternatively, the "packet delay" or "per packet delay" can be measured by subtracting the packet sending time from the packet receiving time where the transmitter and receiver are at least somewhat synchronized. The term "packet drop rate" at least in some examples refers to a share of packets that were not sent to the target due to high traffic load or traffic management and should be seen as a part of the packet loss rate. The term "packet loss rate" at least in some examples refers to a share of packets that could not be received by the target, including packets droped, packets lost in transmission and packets received in wrong format. The term "performance indicator" at least in some examples refers to performance data aggregated over a group of network functions (NFs), which is derived from performance measurements collected at the NFs that belong to the group, according to the aggregation method identified in a Performance Indicator definition. The term "physical rate" or "PHY rate" at least in some examples refers to a speed at which one or more bits are actually sent over a transmission medium. Additionally or alternatively, the term "physical rate" or "PHY rate" at least in some examples refers to a speed at which data can move across a wireless link between a transmitter and a receiver. The term "processing delay" at least in some examples refers to an amount of time taken to process a packet in a network node. The term "propagation delay" at least in some examples refers to amount of time it takes a signal's header to travel from a sender to a receiver. The term "queuing delay" at least in some examples refers to an amount of time a job waits in a queue until that job can be executed. Additionally or alternatively, the term "queuing delay" at least in some examples refers to an amount of time a packet waits in a queue until it can be processed and/or transmitted. The term "throughput" or "network throughput" at least in some examples refers to a rate of production or the rate at which something is processed. Additionally or alternatively, the term "throughput" or "network throughput" at least in some examples refers to a rate of successful message (date) delivery over a communication channel. The term "transmission delay" at least in some examples refers to an amount of time needed (or necessary) to push a packet (or all bits of a packet) into a transmission medium.

The term "application" or "app" at least in some examples refers to a computer program designed to carry out a specific task other than one relating to the operation of the computer itself. Additionally or alternatively, term "application" or "app" at least in some examples refers to a complete and deployable package, environment to achieve a certain function in an operational environment.

The term "process" at least in some examples refers to an instance of a computer program that is being executed by one or more threads. In some implementations, a process may be made up of multiple threads of execution that execute instructions concurrently.

The term "algorithm" at least in some examples refers to an unambiguous specification of how to solve a problem or a class of problems by performing calculations, input/output operations, data processing, automated reasoning tasks, and/or the like.

The term "analytics" at least in some examples refers to the discovery, interpretation, and communication of meaningful patterns in data.

The term "application programming interface" or "API" at least in some examples refers to a set of subroutine definitions, communication protocols, and tools for building software. Additionally or alternatively, the term "application programming interface" or "API" at least in some examples refers to a set of clearly defined methods of communication among various components. In some examples, an API may be defined or otherwise used for a web-based system, operating system, database system, computer hardware, software library, and/or the like.

The term "data processing" or "processing" at least in some examples refers to any operation or set of operations which is performed on data or on sets of data, whether or not by automated means, such as collection, recording, writing, organization, structuring, storing, adaptation, alteration, retrieval, consultation, use, disclosure by transmission, dissemination or otherwise making available, alignment or combination, restriction, erasure and/or destruction.

The term "data preprocessing" or "data pre-processing" at least in some examples refers to any operation or set of operations performed prior to data processing including, for example, data manipulation, dropping of data items/points, and/or the like.

The term "data pipeline" or "pipeline" at least in some examples refers to a set of data processing elements (or data processors) connected in series and/or in parallel, where the output of one data processing element is the input of one or more other data processing elements in the pipeline; the elements of a pipeline may be executed in parallel or in time-sliced fashion and/or some amount of buffer storage can be inserted between elements.

The term "software engine" at least in some examples refers to a component of a software system, subsystem, component, functional unit, module or other collection of software elements, functions, and the like. In some examples, the term "software engine" can be used interchangeably with the terms "software core engine" or simply "engine".

The term "software component" at least in some examples refers to a software package, web service, web resource, module, application, algorithm, and/or another collection of elements, or combination(s) therefore, that encapsulates a set of related functions (or data). In some examples, a "software component" includes one or more stages and/or one or more blocks.

The term "stage" at least in some examples refers to a logical grouping of blocks that perform related tasks in a processing pipeline. In some examples, a "stage" includes one or more blocks.

The term "block" at least in some examples refers to a self-contained unit of work that performs a specific task. In some examples, blocks can be connected together in a linear fashion, wherein some blocks receive input from a previous block and produces an output for a next block. In some examples, blocks are implemented as classes or functions. Examples of tasks that can be performed by a block include: reading or writing data; applying a transformation to data; filtering data; sorting data; aggregating data; logging data; and sending data to another system.

The term "filter" at least in some examples refers to computer program, subroutine, or other software element capable of processing a stream, data flow, or other collection of data, and producing another stream. In some implementations, multiple filters can be strung together or otherwise connected to form a pipeline.

The term "packet processor" at least in some examples refers to software and/or hardware element(s) that transform a stream of input packets into output packets (or transforms a stream of input data into output data); examples of the transformations include adding, removing, and modifying fields in a packet header, trailer, and/or payload.

The term "encoder" or "decoder" at least in some examples refers to a hardware and/or software element that converts information from one format to another format. Additionally or alternatively, the term "encoder" at least in some examples refers to a hardware and/or software element that performs inverse operations of a decoder. Additionally or alternatively, the term "dencoder" at least in some examples refers to a hardware and/or software element that performs inverse operations of a encoder. In some examples, an encoder compresses, translates, transcodes, transforms, or otherwise converts input data into a lower-dimensional representation, and a corresponding decoder decompresses, translates, transcodes, transforms, or otherwise converts the lower-dimensional representation and reconstructs the original input data (at some level of accuracy and/or within some margin of error).

The term "software agent" at least in some examples refers to a computer program that acts for a user or other program in a relationship of agency.

The terms "instantiate," "instantiation," and the like at least in some examples refers to the creation of an instance. In some examples, an "instance" also at least in some examples refers to a concrete occurrence of an object, which may occur, for example, during execution of program code.

The term "reference point" at least in some examples refers to a conceptual point at the conjunction of two nonoverlapping functional groups, elements, or entities.

The term "reference" at least in some examples refers to data useable to locate other data and may be implemented a variety of ways (e.g., a pointer, an index, a handle, a key, an identifier, a hyperlink, and/or the like).

The term "use case" at least in some examples refers to a description of a system from a user's perspective. Use cases sometimes treat a system as a black box, and the interactions with the system, including system responses, are perceived as from outside the system. In some examples, use cases avoid technical jargon, preferring instead the language of the end user or domain expert. The term "user" at least in some examples refers to an abstract representation of any entity issuing commands, requests, and/or data to a compute node or system, and/or otherwise consumes or uses services. Additionally or alternative, the term "user" at least in some examples refers to an entity, not part of a 3GPP system, which uses 3GPP system services (e.g., a person using a 3GPP system mobile station as a portable telephone). The term "user profile" at least in some examples refers to a set of information used to provide a user with a consistent, personalised service environment, irrespective of the user's location or the terminal used (within the limitations of the terminal and the serving network).

The terms "configuration", "policy", "ruleset", and/or "operational parameters", at least in some examples refer to a machine-readable information object that contains instructions, conditions, parameters, and/or criteria that are relevant to a device, system, or other element/entity.

The term "datagram" at least in some examples refers to a basic transfer unit associated with a packet-switched network; a datagram may be structured to have header and payload sections. The term "datagram" at least in some examples may be synonymous with any of the following terms, even though they may refer to different aspects: "data unit", a "protocol data unit" or "PDU", a "service data unit" or "SDU", "frame", "packet", a "network packet", "segment", "block", "cell", "chunk", "Type Length Value" or "TLV", and/or the like. Examples of datagrams, network packets, and the like, include internet protocol (IP) packet, Internet Control Message Protocol (ICMP) packet, UDP packet, TCP packet, SCTP packet, ICMP packet, Ethernet frame, RRC messages/packets, SDAP PDU, SDAP SDU, PDCP PDU, PDCP SDU, MAC PDU, MAC SDU, BAP PDU. BAP SDU, RLC PDU, RLC SDU, WiFi frames as discussed in a [IEEE802] protocol/standard (e.g., [IEEE80211] or the like), Type Length Value (TLV), and/or other like data structures. The term "packet" at least in some examples refers to an information unit identified by a label at layer 3 of the OSI reference model. In some examples, a "packet" may also be referred to as a "network protocol data unit" or "NPDU".The term "protocol data unit" at least in some examples refers to a unit of data specified in an (N)-protocol layer and consisting of (N)-protocol control information and possibly (N)-user data.

The term "information element" or "IE" at least in some examples refers to a structural element containing one or more fields. Additionally or alternatively, the term "information element" or "IE" at least in some examples refers to a field or set of fields defined in a standard or specification that is used to convey data and/or protocol information. The term "field" at least in some examples refers to individual contents of an information element, or a data element that contains content. The term "data frame", "data field", or "DF" at least in some examples refers to a data type that contains more than one data element in a predefined order. The term "data element" or "DE" at least in some examples refers to a data type that contains one single data. Additionally or alternatively, the term "data element" at least in some examples refers to an atomic state of a particular object with at least one specific property at a certain point in time, and may include one or more of a data element name or identifier, a data element definition, one or more representation terms, enumerated values or codes (e.g., metadata), and/or a list of synonyms to data elements in other metadata registries. Additionally or alternatively, a "data element" at least in some examples refers to a data type that contains one single data. Data elements may store data, which may be referred to as the data element's content (or "content items"). Content items may include text content, attributes, properties, and/or other elements referred to as "child elements." Additionally or alternatively, data elements may include zero or more properties and/or zero or more attributes, each of which may be defined as database objects (e.g., fields, records, and the like), object instances, and/or other data elements. An "attribute" at least in some examples refers to a markup construct including a name-value pair that exists within a start tag or empty element tag. Attributes contain data related to its element and/or control the element's behavior.

The term "translation" at least in some examples refers to the process of converting or otherwise changing data from a first form, shape, configuration, structure, arrangement, embodiment, description, or the like into a second form, shape, configuration, structure, arrangement, embodiment, description, or the like; at least in some examples there may be two different types of translation: transcoding and transformation. The term "transcoding" at least in some examples refers to taking information/data in one format (e.g., a packed binary format) and translating the same information/data into another format in the same sequence. Additionally or alternatively, the term "transcoding" at least in some examples refers to taking the same information, in the same sequence, and packaging the information (e.g., bits or bytes) differently. The term "transformation" at least in some examples refers to changing data from one format and writing it in another format, keeping the same order, sequence, and/or nesting of data items. Additionally or alternatively, the term "transformation" at least in some examples involves the process of converting data from a first format or structure into a second format or structure, and involves reshaping the data into the second format to conform with a schema or other like specification. Transformation may include rearranging data items or data objects, which may involve changing the order, sequence, and/or nesting of the data items/objects. Additionally or alternatively, the term "transformation" at least in some examples refers to changing the schema of a data object to another schema.

The term "data set" or "dataset" at least in some examples refers to a collection of data; a "data set" or "dataset" may be formed or arranged in any type of data structure. In some examples, one or more characteristics can define or influence the structure and/or properties of a dataset such as the number and types of attributes and/or variables, and various statistical measures (e.g., standard deviation, kurtosis, and/or the like). The term "data structure" at least in some examples refers to a data organization, management, and/or storage format. Additionally or alternatively, the term "data structure" at least in some examples refers to a collection of data values, the relationships among those data values, and/or the functions, operations, tasks, and the like, that can be applied to the data. Examples of data structures include primitives (e.g., Boolean, character, floating-point numbers, fixed-point numbers, integers, reference or pointers, enumerated type, and/or the like), composites (e.g., arrays, records, strings, union, tagged union, and/or the like), abstract data types (e.g., data container, list, tuple, associative array, map, dictionary, set (or dataset), multiset or bag, stack, queue, graph (e.g., tree, heap, and the like), and/or the like), routing table, symbol table, quad-edge, blockchain, purely-functional data structures (e.g., stack, queue, (multi)set, random access list, hash consing, zipper data structure, and/or the like).

The term "authorization" at least in some examples refers to a prescription that a particular behavior shall not be prevented. The term "authentication" at least in some embodiments refers to a process of proving or verifying an identity. Additionally or alternatively, the term "authentication" at least in some embodiments refers to a mechanism by which a computer system checks or verifies that a user or entity is really the user or entity being claimed. Examples of the authentication and/or authorization techniques include using API keys, basic access authentication ("Basic Auth"), Open Authorization (OAuth), hash-based message authentication codes (HMAC), Kerberos protocol, OpenID, WebID, and/or other authentication and/or authorization techniques.

The term "cryptographic mechanism" at least in some examples refers to any cryptographic protocol and/or cryptographic algorithm. Examples of cryptographic mechanisms include a cryptographic hash algorithm, such as a function in the Secure Hash Algorithm (SHA) 2 set of cryptographic hash algorithms (e.g., SHA-226, SHA-256, SHA-512, and the like), SHA 3, and so forth, or any type of keyed or unkeyed cryptographic hash function and/or any other function discussed herein; an elliptic curve cryptographic (ECC) algorithm (e.g., Elliptic Curve cryptography Key Agreement algorithm (ECKA) algorithm,Elliptic Curve cryptography Digital Signature Algorithm (ECDSA), Lenstra elliptic-curve factorization or elliptic-curve factorization method (ECM), Menezes-Qu-Vanstone (MQV) or elliptic curve MQV (ECMQV), Elliptic Curve Diffie-Hellman (ECDH) key agreement, Elliptic Curve Integrated Encryption Scheme (ECIES) or Elliptic Curve Augmented Encryption Scheme, Edwards-curve Digital Signature Algorithm (EdDSA), and/or the like); Rivest-Shamir-Adleman (RSA) cryptography; Merkle signature scheme, advanced encryption system (AES) algorithm; a triple data encryption algorithm (3DES); Quantum cryptography algorithms; and/or the like. Additionally or alternatively, the term "cryptographic protocol" at least in some examples refers to a sequence of steps precisely specifying the actions required of two or more entities to achieve specific security objectives (e.g., cryptographic protocol for key agreement). Additionally or alternatively, the term "cryptographic algorithm" at least in some examples refers to an algorithm specifying the steps followed by a single entity to achieve specific security objectives (e.g., cryptographic algorithm for symmetric key encryption).

The term "cryptographic hash function", "hash function", or "hash") at least in some examples refers to a mathematical algorithm that maps data of arbitrary size (sometimes referred to as a "message") to a bit array of a fixed size (sometimes referred to as a "hash value", "hash", or "message digest"). A cryptographic hash function is usually a one-way function, which is a function that is practically infeasible to invert.

The term "cryptographic key" or "key"in cryptography at least in some examples refers to a piece of information, usually a string of numbers or letters that are stored in a file, which, when processed through a cryptographic algorithm can encode or decode cryptographic data. The term "symmetric-key algorithm" at least in some examples refers to a cryptographic algorithm that uses the same cryptographic key for both the encryption of plaintext and the decryption of ciphertext; the keys may be identical, or there may be a simple transformation to go between the two keys.

The term "encryption" at least in some examples refers to a process of encoding information wherein the original representation of information (referred to as "plaintext") into an alternative form (referred to as "ciphertext"). In some examples, an encryption scheme includes use of a pseudo-random encryption key generated by a cryptographic mechanism or some other algorithm to generate an encryption key, which can be used to encrypt and/or decrypt the plaintext.

The term "accuracy" at least in some examples refers to the closeness of one or more measurements to a specific value.

The term "artificial intelligence" or "AI" at least in some examples refers to any intelligence demonstrated by machines, in contrast to the natural intelligence displayed by humans and other animals. Additionally or alternatively, the term "artificial intelligence" or "AI" at least in some examples refers to the study of "intelligent agents" and/or any device that perceives its environment and takes actions that maximize its chance of successfully achieving a goal.

The terms "artificial neural network", "neural network", or "NN" refer to an ML technique comprising a collection of connected artificial neurons or nodes that (loosely) model neurons in a biological brain that can transmit signals to other arterial neurons or nodes, where connections (or edges) between the artificial neurons or nodes are (loosely) modeled on synapses of a biological brain. The artificial neurons and edges typically have a weight that adjusts as learning proceeds. The weight increases or decreases the strength of the signal at a connection. Neurons may have a threshold such that a signal is sent only if the aggregate signal crosses that threshold. The artificial neurons can be aggregated or grouped into one or more layers where different layers may perform different transformations on their inputs. Signals travel from the first layer (the input layer), to the last layer (the output layer), possibly after traversing the layers multiple times. NNs are usually used for supervised learning, but can be used for unsupervised learning as well. Examples of NNs include deep NN (DNN), feed forward NN (FFN), deep FNN (DFF), convolutional NN (CNN), deep CNN (DCN), deconvolutional NN (DNN), a deep belief NN, a perception NN, recurrent NN (RNN) (e.g., including Long Short Term Memory (LSTM) algorithm, gated recurrent unit (GRU), echo state network (ESN), and the like), spiking NN (SNN), deep stacking network (DSN), Markov chain, perception NN, generative adversarial network (GAN), transformers, stochastic NNs (e.g., Bayesian Network (BN), Bayesian belief network (BBN), a Bayesian NN (BNN), Deep BNN (DBNN), Dynamic BN (DBN), probabilistic graphical model (PGM), Boltzmann machine, restricted Boltzmann machine (RBM), Hopfield network or Hopfield NN, convolutional deep belief network (CDBN), and the like), Linear Dynamical System (LDS), Switching LDS (SLDS), Optical NNs (ONNs), an NN for reinforcement learning (RL) and/or deep RL (DRL), autoencoder, and/or the like.

The term "attention" in the context of machine learning and/or neural networks, at least in some examples refers to a technique that mimics cognitive attention, which enhances important parts of a dataset where the important parts of the dataset may be determined using training data by gradient descent. The term "dot-product attention" at least in some examples refers to an attention technique that uses the dot product between vectors to determine attention. The term "multi-head attention" at least in some examples refers to an attention technique that combines several different attention mechanisms to direct the overall attention of a network or subnetwork.

The term "attention model" or "attention mechanism" at least in some examples refers to input processing techniques for neural networks that allow the neural network to focus on specific aspects of a complex input, one at a time until the entire dataset is categorized. The goal is to break down complicated tasks into smaller areas of attention that are processed sequentially. Similar to how the human mind solves a new problem by dividing it into simpler tasks and solving them one by one. The term "attention network" at least in some examples refers to an artificial neural networks used for attention in machine learning.

The term "autoencoder" at least in some examples refers to a type of artificial neural network that learns to encode and/or decode data. In some examples, an autoencoder is used for unsupervised learning. Additionally or alternatively, an autoencoder learns to encode and decode data by minimizing reconstruction error, wherein the autoencoder is trained to minimize the reconstruction error by adjusting the weights of an encoder and a decoder. The term "reconstruction error" at least in some examples refers to the difference between original input data and reconstructed data. Examples of autoencoder implementations include denoising autoencoders, probabilistic autoencoder, variational autoencoders, convolutional autoencoders, recurrent autoencoders, generative adversarial autoencoders, dimensionality reduction autoencoders, and feature extraction autoencoders.

The term "backpropagation" at least in some examples refers to a method used in NNs to calculate a gradient that is needed in the calculation of weights to be used in the NN; "backpropagation" is shorthand for "the backward propagation of errors." Additionally or alternatively, the term "backpropagation" at least in some examples refers to a method of calculating the gradient of neural network parameters. Additionally or alternatively, the term "backpropagation" or "back pass" at least in some examples refers to a method of traversing a neural network in reverse order, from the output to the input layer.

The term "classification" in the context of machine learning at least in some examples refers to to an ML technique for determining the classes to which various data points belong. Here, the term "class" or "classes" at least in some examples refers to to categories, and are sometimes called "targets" or "labels." Classification is used when the outputs are restricted to a limited set of quantifiable properties. Classification algorithms may describe an individual (data) instance whose category is to be predicted using a feature vector. As an example, when the instance includes a collection (corpus) of text, each feature in a feature vector may be the frequency that specific words appear in the corpus of text. In ML classification, labels are assigned to instances, and models are trained to correctly predict the pre-assigned labels of from the training examples. ML algorithms for classification may be referred to as a "classifier." Examples of classifiers include linear classifiers, k-nearest neighbor (kNN), decision trees, random forests, support vector machines (SVMs), Bayesian classifiers, convolutional neural networks (CNNs), among many others (note that some of these algorithms can be used for other ML tasks as well).

The term "computational graph" at least in some examples refers to a data structure that describes how an output is produced from one or more inputs.

The term "converge" or "convergence" at least in some examples refers to the stable point found at the end of a sequence of solutions via an iterative optimization algorithm. Additionally or alternatively, the term "converge" or "convergence" at least in some examples refers to the output of a function or algorithm getting closer to a specific value over multiple iterations of the function or algorithm.

The term "convolution" at least in some examples refers to a convolutional operation or a convolutional layer of a CNN.

The term "convolutional filter" at least in some examples refers to a matrix having the same rank as an input matrix, but a smaller shape. In machine learning, a convolutional filter is mixed with an input matrix in order to train weights.

The term "convolutional layer" at least in some examples refers to a layer of a DNN in which a convolutional filter passes along an input matrix (e.g., a CNN). Additionally or alternatively, the term "convolutional layer" at least in some examples refers to a layer that includes a series of convolutional operations, each acting on a different slice of an input matrix.

The term "convolutional neural network" or "CNN" at least in some examples refers to a neural network including at least one convolutional layer. Additionally or alternatively, the term "convolutional neural network" or "CNN" at least in some examples refers to a DNN designed to process structured arrays of data such as images.

The term "convolutional operation" at least in some examples refers to a mathematical operation on two functions (e.g., *f* and *g*) that produces a third function (*f* * *g*) that expresses how the shape of one is modified by the other where the term "convolution" may refer to both the result function and to the process of computing it. Additionally or alternatively, term "convolutional" at least in some examples refers to the integral of the product of the two functions after one is reversed and shifted, where the integral is evaluated for all values of shift, producing the convolution function. Additionally or alternatively, term "convolutional" at least in some examples refers to a two-step mathematical operation includilement-wise multiplication of the convolutional filter and a slice of an input matrix (the slice of the input matrix has the same rank and size as the convolutional filter); and (2) summation of all the values in the resulting product matrix.

The term "covariance" at least in some examples refers to a measure of the joint variability of two random variables, wherein the covariance is positive if the greater values of one variable mainly correspond with the greater values of the other variable (and the same holds for the lesser values such that the variables tend to show similar behavior), and the covariance is negative when the greater values of one variable mainly correspond to the lesser values of the other.

The term "ensemble averaging" at least in some examples refers to the process of creating multiple models and combining them to produce a desired output, as opposed to creating just one model.

The term "ensemble learning" or "ensemble method" at least in some examples refers to using multiple learning algorithms to obtain better predictive performance than could be obtained from any of the constituent learning algorithms alone.

The term "epoch" at least in some examples refers to one cycle through a full training dataset. Additionally or alternatively, the term "epoch" at least in some examples refers to a full training pass over an entire training dataset such that each training example has been seen once; here, an epoch represents N/batch size training iterations, where N is the total number of examples.

The term "event", in probability theory, at least in some examples refers to a set of outcomes of an experiment (e.g., a subset of a sample space) to which a probability is assigned. Additionally or alternatively, the term "event" at least in some examples refers to a software message indicating that something has happened. Additionally or alternatively, the term "event" at least in some examples refers to an object in time, or an instantiation of a property in an object. Additionally or alternatively, the term "event" at least in some examples refers to a point in space at an instant in time (e.g., a location in spacetime). Additionally or alternatively, the term "event" at least in some examples refers to a notable occurrence at a particular point in time.

The term "experiment" in probability theory, at least in some examples refers to any procedure that can be repeated and has a well-defined set of outcomes, known as a sample space.

The term "F score" or "F measure" at least in some examples refers to a measure of a test's accuracy that may be calculated from the precision and recall of a test or model. The term "F1 score" at least in some examples refers to the harmonic mean of the precision and recall, and the term "Fβ score" at least in some examples refers to an F-score having additional weights that emphasize or value one of precision or recall more than the other.

The term "feature" at least in some examples refers to an individual measureable property, quantifiable property, or characteristic of a phenomenon being observed. Additionally or alternatively, the term "feature" at least in some examples refers to an input variable used in making predictions. At least in some examples, features may be represented using numbers/numerals (e.g., integers), strings, variables, ordinals, real-values, categories, and/or the like.

The term "feature engineering" at least in some examples refers to a process of determining which features might be useful in training an ML model, and then converting raw data into the determined features. Feature engineering is sometimes referred to as "feature extraction."

The term "feature extraction" at least in some examples refers to a process of dimensionality reduction by which an initial set of raw data is reduced to more manageable groups for processing. Additionally or alternatively, the term "feature extraction" at least in some examples refers to retrieving intermediate feature representations calculated by an unsupervised model or a pretrained model for use in another model as an input. Feature extraction is sometimes used as a synonym of "feature engineering."

The term "feature map" at least in some examples refers to a function that takes feature vectors (or feature tensors) in one space and transforms them into feature vectors (or feature tensors) in another space. Additionally or alternatively, the term "feature map" at least in some examples refers to a function that maps a data vector (or tensor) to feature space. Additionally or alternatively, the term "feature map" at least in some examples refers to a function that applies the output of one filter applied to a previous layer. In some embodiments, the term "feature map" may also be referred to as an "activation map".

The term "feature vector" at least in some examples, in the context of ML, refers to a set of features and/or a list of feature values representing an example passed into a model. Additionally or alternatively, the term "feature vector" at least in some examples, in the context of ML, refers to a vector that includes a tuple of one or more features.

The term "forward propagation" or "forward pass" at least in some examples, in the context of ML, refers to the calculation and storage of intermediate variables (including outputs) for a neural network in order from the input layer to the output layer.

The term "hidden layer", in the context of ML and NNs, at least in some examples refers to an internal layer of neurons in an ANN that is not dedicated to input or output. The term "hidden unit" refers to a neuron in a hidden layer in an ANN.

The term "hyperparameter" at least in some examples refers to characteristics, properties, and/or parameters for an ML process that cannot be learnt during a training process. Hyperparameter are usually set before training takes place, and may be used in processes to help estimate model parameters. Examples of hyperparameters include model size (e.g., in terms of memory space, bytes, number of layers, and the like); training data shuffling (e.g., whether to do so and by how much); number of evaluation instances, iterations, epochs (e.g., a number of iterations or passes over the training data), or episodes; number of passes over training data; regularization; learning rate (e.g., the speed at which the algorithm reaches (converges to) optimal weights); learning rate decay (or weight decay); momentum; number of hidden layers; size of individual hidden layers; weight initialization scheme; dropout and gradient clipping thresholds; the C value and sigma value for SVMs; the k in k-nearest neighbors; number of branches in a decision tree; number of clusters in a clustering algorithm; vector size; word vector size for NLP and NLU; and/or the like.

The term "inference engine" at least in some examples refers to a component of a computing system that applies logical rules to a knowledge base to deduce new information.

The terms "instance-based learning" or "memory-based learning" in the context of ML at least in some examples refers to to a family of learning algorithms that, instead of performing explicit generalization, compares new problem instances with instances seen in training, which have been stored in memory. Examples of instance-based algorithms include k-nearest neighbor, and the like), decision tree Algorithms (e.g., Classification And Regression Tree (CART), Iterative Dichotomiser 3 (ID3), C4.5, chi-square automatic interaction detection (CHAID), and the like), Fuzzy Decision Tree (FDT), and the like), Support Vector Machines (SVM), Bayesian Algorithms (e.g., Bayesian network (BN), a dynamic BN (DBN), Naive Bayes, and the like), and ensemble algorithms (e.g., Extreme Gradient Boosting, voting ensemble, bootstrap aggregating ("bagging"), Random Forest and the like.

The term "intelligent agent" at least in some examples refers to an a software agent or other autonomous entity which acts, directing its activity towards achieving goals upon an environment using observation through sensors and consequent actuators (i.e. it is intelligent). Intelligent agents may also learn or use knowledge to achieve their goals.

The term "iteration" at least in some examples refers to the repetition of a process in order to generate a sequence of outcomes, wherein each repetition of the process is a single iteration, and the outcome of each iteration is the starting point of the next iteration. Additionally or alternatively, the term "iteration" at least in some examples refers to a single update of a model's weights during training.

The term "knowledge base" at least in some examples refers to any technology used to store complex structured and/or unstructured information used by a computing system.

The term "knowledge distillation" in machine learning, at least in some examples refers to the process of transferring knowledge from a large model to a smaller one.

The term "logit" at least in some examples refers to a set of raw predictions (e.g., non-normalized predictions) that a classification model generates, which is ordinarily then passed to a normalization function such as a softmax function for models solving a multi-class classification problem. Additionally or alternatively, the term "logit" at least in some examples refers to a logarithm of a probability. Additionally or alternatively, the term "logit" at least in some examples refers to the output of a logit function. Additionally or alternatively, the term "logit" or "logit function" at least in some examples refers to a quantile function associated with a standard logistic distribution. Additionally or alternatively, the term "logit" at least in some examples refers to the inverse of a standard logistic function. Additionally or alternatively, the term "logit" at least in some examples refers to the element-wise inverse of the sigmoid function. Additionally or alternatively, the term "logit" or "logit function" at least in some examples refers to a function that represents probability values from 0 to 1, and negative infinity to infinity. Additionally or alternatively, the term "logit" or "logit function" at least in some examples refers to a function that takes a probability and produces a real number between negative and positive infinity.

The term "loss function" or "cost function" at least in some examples refers to an event or values of one or more variables onto a real number that represents some "cost" associated with the event. A value calculated by a loss function may be referred to as a "loss" or "error". Additionally or alternatively, the term "loss function" or "cost function" at least in some examples refers to a function used to determine the error or loss between the output of an algorithm and a target value. Additionally or alternatively, the term "loss function" or "cost function" at least in some examples refers to a function are used in optimization problems with the goal of minimizing a loss or error.

The term "mathematical model" at least in some examples refer to a system of postulates, data, and inferences presented as a mathematical description of an entity or state of affairs including governing equations, assumptions, and constraints. The term "statistical model" at least in some examples refers to a mathematical model that embodies a set of statistical assumptions concerning the generation of sample data and/or similar data from a population; in some examples, a "statistical model" represents a data-generating process.

The term "machine learning" or "ML" at least in some examples refers to the use of computer systems to optimize a performance criterion using example (training) data and/or past experience. ML involves using algorithms to perform specific task(s) without using explicit instructions to perform the specific task(s), and/or relying on patterns, predictions, and/or inferences. ML uses statistics to build ML model(s) (also referred to as "models") in order to make predictions or decisions based on sample data (e.g., training data).

The term "machine learning model" or "ML model" at least in some examples refers to an application, program, process, algorithm, and/or function that is capable of making predictions, inferences, or decisions based on an input data set and/or is capable of detecting patterns based on an input data set. In some examples, a "machine learning model" or "ML model" is trained on a training data to detect patterns and/or make predictions, inferences, and/or decisions. In some examples, a "machine learning model" or "ML model" is based on a mathematical and/or statistical model. For purposes of the present disclosure, the terms "ML model", "AI model", "AI/ML model", and the like may be used interchangeably.

The term "machine learning algorithm" or "ML algorithm" at least in some examples refers to an application, program, process, algorithm, and/or function that builds or estimates an ML model based on sample data or training data. Additionally or alternatively, the term "machine learning algorithm" or "ML algorithm" at least in some examples refers to a program, process, algorithm, and/or function that learns from experience w.r.t some task(s) and some performance measure(s)/metric(s), and an ML model is an object or data structure created after an ML algorithm is trained with training data. For purposes of the present disclosure, the terms "ML algorithm", "AI algorithm", "AI/ML algorithm", and the like may be used interchangeably. Additionally, although the term "ML algorithm" may refer to different concepts than the term "ML model," these terms may be used interchangeably for the purposes of the present disclosure.

The term "machine learning application" or "ML application" at least in some examples refers to an application, program, process, algorithm, and/or function that contains some AI/ML model(s) and application-level descriptions. Additionally or alternatively, the term "machine learning application" or "ML application" at least in some examples refers to a complete and deployable application and/or package that includes at least one ML model and/or other data capable of achieving a certain function and/or performing a set of actions or tasks in an operational environment. For purposes of the present disclosure, the terms "ML application", "AI application", "AI/ML application", and the like may be used interchangeably.

The term "matrix" at least in some examples refers to a rectangular array of numbers, symbols, or expressions, arranged in rows and columns, which may be used to represent an object or a property of such an object.

The terms "model parameter" and/or "parameter" in the context of ML, at least in some examples refer to values, characteristics, and/or properties that are learnt during training. Additionally or alternatively, "model parameter" and/or "parameter" in the context of ML, at least in some examples refer to a configuration variable that is internal to the model and whose value can be estimated from the given data. Model parameters are usually required by a model when making predictions, and their values define the skill of the model on a particular problem. Examples of such model parameters / parameters include weights (e.g., in an ANN); constraints; support vectors in a support vector machine (SVM); coefficients in a linear regression and/or logistic regression; word frequency, sentence length, noun or verb distribution per sentence, the number of specific character n-grams per word, lexical diversity, and the like, for natural language processing (NLP) and/or natural language understanding (NLU); and/or the like.

The term "momentum" at least in some examples refers to an aggregate of gradients in gradient descent. Additionally or alternatively, the term "momentum" at least in some examples refers to a variant of the stochastic gradient descent algorithm where a current gradient is replaced with m (momentum), which is an aggregate of gradients.

The term "objective function" at least in some examples refers to a function to be maximized or minimized for a specific optimization problem. In some cases, an objective function is defined by its decision variables and an objective. The objective is the value, target, or goal to be optimized, such as maximizing profit or minimizing usage of a particular resource. The specific objective function chosen depends on the specific problem to be solved and the objectives to be optimized. Constraints may also be defined to restrict the values the decision variables can assume thereby influencing the objective value (output) that can be achieved. During an optimization process, an objective function's decision variables are often changed or manipulated within the bounds of the constraints to improve the objective function's values. In general, the difficulty in solving an objective function increases as the number of decision variables included in that objective function increases. The term "decision variable" refers to a variable that represents a decision to be made.

The term "optimization" at least in some examples refers to an act, process, or methodology of making something (e.g., a design, system, or decision) as fully perfect, functional, or effective as possible. Optimization usually includes mathematical procedures such as finding the maximum or minimum of a function. The term "optimal" at least in some examples refers to a most desirable or satisfactory end, outcome, or output. The term "optimum" at least in some examples refers to an amount or degree of something that is most favorable to some end. The term "optima" at least in some examples refers to a condition, degree, amount, or compromise that produces a best possible result. Additionally or alternatively, the term "optima" at least in some examples refers to a most favorable or advantageous outcome or result.

The term "probability" at least in some examples refers to a numerical description of how likely an event is to occur and/or how likely it is that a proposition is true. The term "probability distribution" at least in some examples refers to a mathematical function that gives the probabilities of occurrence of different possible outcomes for an experiment or event.

The term "probability distribution" at least in some examples refers to a function that gives the probabilities of occurrence of different possible outcomes for an experiment or event. Additionally or alternatively, the term "probability distribution" at least in some examples refers to a statistical function that describes all possible values and likelihoods that a random variable can take within a given range (e.g., a bound between minimum and maximum possible values). A probability distribution may have one or more factors or attributes such as, for example, a mean or average, mode, support, tail, head, median, variance, standard deviation, quantile, symmetry, skewness, kurtosis, and the like. A probability distribution may be a description of a random phenomenon in terms of a sample space and the probabilities of events (subsets of the sample space). Example probability distributions include discrete distributions (e.g., Bernoulli distribution, discrete uniform, binomial, Dirac measure, Gauss Kuzmin distribution, geometric, hypergeometric, negative binomial, negative hypergeometric, Poisson, Poisson binomial, Rademacher distribution, Yule-Simon distribution, zeta distribution, Zipf distribution, and the like), continuous distributions (e.g., Bates distribution, beta, continuous uniform, normal distribution, Gaussian distribution, bell curve, joint normal, gamma, chi-squared, non-central chi-squared, exponential, Cauchy, lognormal, logit-normal, F distribution, t distribution, Dirac delta function, Pareto distribution, Lomax distribution, Wishart distribution, Weibull distribution, Gumbel distribution, Irwin Hall distribution, Gompertz distribution, inverse Gaussian distribution (or Wald distribution), Chernoff's distribution, Laplace distribution, Pólya-Gamma distribution, and the like), and/or joint distributions (e.g., Dirichlet distribution, Ewens's sampling formula, multinomial distribution, multivariate normal distribution, multivariate t-distribution, Wishart distribution, matrix normal distribution, matrix t distribution, and the like).

The term "probability distribution function" at least in some examples refers to an integral of the probability density function.

The term "probability density function" or "PDF" at least in some examples refers to a function whose value at any given sample (or point) in a sample space can be interpreted as providing a relative likelihood that the value of the random variable would be close to that sample. Additionally or alternatively, the term "probability density function" or "PDF" at least in some examples refers to a probability of a random variable falling within a particular range of values. Additionally or alternatively, the term "probability density function" or "PDF" at least in some examples refers to a value at two different samples can be used to infer, in any particular draw of the random variable, how much more likely it is that the random variable would be close to one sample compared to the other sample.

The term "precision" at least in some examples refers to the closeness of the two or more measurements to each other. The term "precision" may also be referred to as "positivie predictive value".

The term "quantile" at least in some examples refers to a cut point(s) dividing a range of a probability distribution into continuous intervals with equal probabilities, or dividing the observations in a sample in the same way. The term "quantile function" at least in some examples refers to a function that is associated with a probability distribution of a random variable, and the specifies the value of the random variable such that the probability of the variable being less than or equal to that value equals the given probability. The term "quantile function" may also be refered to as a percentile function, percent-point function, or inverse cumulative distribution function.

The term "recall" at least in some examples refers to the fraction of relevant instances that were retrieved, or he number of true positive predictions or inferences divided by the number of true positives plus false negative predictions or inferences. The term "recall" may also be referred to as "sensitivity".

The terms "regression algorithm" and/or "regression analysis" in the context of ML at least in some examples refers to to a set of statistical processes for estimating the relationships between a dependent variable (often referred to as the "outcome variable") and one or more independent variables (often referred to as "predictors", "covariates", or "features"). Examples of regression algorithms/models include logistic regression, linear regression, gradient descent (GD), stochastic GD (SGD), and the like.

The term "reinforcement learning" or "RL" at least in some examples refers to a goal-oriented learning technique based on interaction with an environment. In RL, an agent aims to optimize a long-term objective by interacting with the environment based on a trial and error process. Examples of RL algorithms include Markov decision process, Markov chain, Q-learning, multi-armed bandit learning, temporal difference learning, and deep RL. The term "multi-armed bandit problem", "K-armed bandit problem", "N-armed bandit problem", or "contextual bandit" at least in some examples refers to a problem in which a fixed limited set of resources must be allocated between competing (alternative) choices in a way that maximizes their expected gain, when each choice's properties are only partially known at the time of allocation, and may become better understood as time passes or by allocating resources to the choice. The term "contextual multi-armed bandit problem" or "contextual bandit" at least in some examples refers to a version of multi-armed bandit where, in each iteration, an agent has to choose between arms; before making the choice, the agent sees a d-dimensional feature vector (context vector) associated with a current iteration, the learner uses these context vectors along with the rewards of the arms played in the past to make the choice of the arm to play in the current iteration, and over time the learner's aim is to collect enough information about how the context vectors and rewards relate to each other, so that it can predict the next best arm to play by looking at the feature vectors.

The term "reward function", in the context of RL, at least in some examples refers to a function that outputs a reward value based on one or more reward variables; the reward value provides feedback for an RL policy so that an RL agent can learn a desirable behavior. The term "reward shaping", in the context of RL, at least in some examples refers to a adjusting or altering a reward function to output a positive reward for desirable behavior and a negative reward for undesirable behavior.

The term "sample space" in probability theory (also referred to as a "sample description space" or "possibility space") of an experiment or random trial at least in some examples refers to a set of all possible outcomes or results of that experiment.

The term "softmax" or "softmax function" at least in some examples refers to a generalization of the logistic function to multiple dimensions; the "softmax function" is used in multinomial logistic regression and is often used as the last activation function of a neural network to normalize the output of a network to a probability distribution over predicted output classes.

The term "supervised learning" at least in some examples refers to an ML technique that aims to learn a function or generate an ML model that produces an output given a labeled data set. Supervised learning algorithms build models from a set of data that contains both the inputs and the desired outputs. For example, supervised learning involves learning a function or model that maps an input to an output based on example input-output pairs or some other form of labeled training data including a set of training examples. Each input-output pair includes an input object (e.g., a vector) and a desired output object or value (referred to as a "supervisory signal"). Supervised learning can be grouped into classification algorithms, regression algorithms, and instance-based algorithms.

The term "standard deviation" at least in some examples refers to a measure of the amount of variation or dispersion of a set of values. Additionally or alternatively, the term "standard deviation" at least in some examples refers to the square root of a variance of a random variable, a sample, a statistical population, a dataset, or a probability distribution.

The term "stochastic" at least in some examples refers to a property of being described by a random probability distribution. Although the terms "stochasticity" and "randomness" are distinct in that the former refers to a modeling approach and the latter refers to phenomena themselves, for purposes of the present disclosure these two terms may be used synonymously unless the context indicates otherwise.

The term "tensor" at least in some examples refers to an object or other data structure represented by an array of components that describe functions relevant to coordinates of a space. Additionally or alternatively, the term "tensor" at least in some examples refers to a generalization of vectors and matrices and/or may be understood to be a multidimensional array. Additionally or alternatively, the term "tensor" at least in some examples refers to an array of numbers arranged on a regular grid with a variable number of axes. At least in some examples, a tensor can be defined as a single point, a collection of isolated points, or a continuum of points in which elements of the tensor are functions of position, and the Tensor forms a "tensor field". At least in some examples, a vector may be considered as a one dimensional (1D) or first order tensor, and a matrix may be considered as a two dimensional (2D) or second order tensor. Tensor notation may be the same or similar as matrix notation with a capital letter representing the tensor and lowercase letters with subscript integers representing scalar values within the tensor.

The term "tuning" or "tune" at least in some examples refers to a process of adjusting model parameters or hyperparameters of an ML model in order to improve its performance. Additionally or alternatively, the term "tuning" or "tune" at least in some examples refers to a optimizing an ML model's model parameters and/or hyperparameters. In some examples, the particular model parameters and/or hyperparameters that are selected for adjustment, and the optimal values for the model parameters and/or hyperparameters vary depending on various aspects of the ML model, the training data, ML application and/or use cases, and/or other parameters, conditions, or criteria.

The term "unsupervised learning" at least in some examples refers to an ML technique that aims to learn a function to describe a hidden structure from unlabeled data. Unsupervised learning algorithms build models from a set of data that contains only inputs and no desired output labels. Unsupervised learning algorithms are used to find structure in the data, like grouping or clustering of data points. Examples of unsupervised learning are K-means clustering, principal component analysis (PCA), and topic modeling, among many others. The term "semi-supervised learning at least in some examples refers to ML algorithms that develop ML models from incomplete training data, where a portion of the sample input does not include labels.

The term "vector" at least in some examples refers to a one-dimensional array data structure. Additionally or alternatively, the term "vector" at least in some examples refers to to a tuple of one or more values called scalars. The terms "sparse vector", "sparse matrix", and "sparse array" at least in some examples refer to an input vector, matrix, or array including both non-zero elements and zero elements. The terms "dense vector", "dense matrix", and "dense array" at least in some examples refer to an input vector, matrix, or array including all non-zero elements. The term "ZVC data vector" at least in some examples refers to a vector that includes all non-zero elements of a vector in the same order as a sparse vector, but excludes all zero elements. The term "ZVC matrix" at least in some examples refers to a matrix that includes all non-zero elements of a matrix in the same order as a sparse matrix, but excludes all zero elements. The term "ZVC array" at least in some examples refers to an array that includes all non-zero elements of an array in the same order as a sparse array, but excludes all zero elements.

The term "predictive service" at least in some examples refers to a service model which provides reliable performance, but allowing a specified variance in the measured performance criteria.

Although many of the previous examples are provided with use of specific cellular / mobile network terminology, including with the use of 4G/5G 3GPP network components (or expected terahertz-based 6G/6G+ technologies), it will be understood these examples may be applied to many other deployments of wide area and local wireless networks, as well as the integration of wired networks (including optical networks and associated fibers, transceivers, and/or the like). Furthermore, various standards (e.g, 3GPP, ETSI, and/or the like) may define various message formats, PDUs, containers, frames, and/or the like, as comprising a sequence of optional or mandatory data elements (DEs), data frames (DFs), information elements (IEs), and/or the like. However, it should be understood that the requirements of any particular standard should not limit the examples discussed herein, and as such, any combination of containers, frames, DFs, DEs, IEs, values, actions, and/or features are possible in various examples, including any combination of containers, DFs, DEs, values, actions, and/or features that are strictly required to be followed in order to conform to such standards or any combination of containers, frames, DFs, DEs, IEs, values, actions, and/or features strongly recommended and/or used with or in the presence/absence of optional elements.

Aspects of the inventive subject matter may be referred to herein, individually and/or collectively, merely for convenience and without intending to voluntarily limit the scope of this application to any single aspect or inventive concept if more than one is in fact disclosed. Thus, although specific aspects have been illustrated and described herein, it should be appreciated that any arrangement calculated to achieve the same purpose may be substituted for the specific aspects shown. This disclosure is intended to cover any and all adaptations or variations of various aspects. Combinations of the above aspects and other aspects not specifically described herein will be apparent to those of skill in the art upon reviewing the above description.

## Claims

1. An apparatus for an access node of a cellular network, the apparatus comprising a processor configured to:
determine whether a user equipment, UE, is capable of implementing an autoencoder based channel state information, CSI, feedback based on capability information received from the UE; and
identify a model mismatch between an encoder machine learning, ML, model of the UE and a decoder ML model based on the capability information.

2. The apparatus of claim 1, wherein the capability information comprises one or more fields representative of at least one of: encoder model interoperability information, capability of the UE of accepting an access node-defined model, capability of the UE of a training of the encoder ML model, a description of information of the ML encoder model of the UE, and/or a dataset managed by the UE.

3. The apparatus of claim 1 or 2, wherein the processor is further configured to:
configure a model identifier, ID, to be sent to the UE;
configure a CSI report to be sent to the UE; and
instruct the access node to transmit a CSI reference signal, CSI-RS.

4. The apparatus of any one of claims 1 to 3, wherein the processor is further configured to:
determine whether the model mismatch exists based on a received interoperability information of the encoder ML model of the UE; and
initiate a model mismatch mitigation process if the model mismatch exists or if the received interoperability information of the encoder model of the UE is unavailable.

5. The apparatus of any one of claims 1 to 4, wherein the processor is further configured to:
determine whether the UE is capable of accepting an access node-defined model; and
configure the encoder ML model of the UE as the access node-defined model if the UE is capable of accepting the access node-defined model.

6. The apparatus of any one of claims 1 to 5, wherein the processor is further configured to:
determine whether the UE is capable of a training of the encoder ML model of the UE; and
configure a joint tuning of the encoder ML model of the UE and the decoder ML model if the UE is capable of the training of the encoder ML model of the UE.

7. The apparatus of any one of claims 1 to 6, wherein the processor is further configured to:
determine whether the UE is capable of a training of the encoder ML model of the UE; and
configure a tuning of the decoder ML model if the UE is incapable of the training of the encoder ML model of the UE.

8. The apparatus of any one of claims 1 to 7, wherein the processor is further configured to initiate a CSI feedback procedure based on a non-ML method if the capability information represents that the UE is not capable of implementing the autoencoder based channel state information, CSI, feedback.

9. A computer-readable medium comprising one or more instructions which, if executed by a processor of an access node of a cellular network, cause the processor to:
determine whether a user equipment, UE, is capable of implementing an autoencoder based channel state information, CSI, feedback based on capability information received from the UE;
identify a model mismatch between an encoder machine learning, ML, model of the UE and a decoder ML model based on the capability information.

10. An apparatus for a user equipment, UE, of a cellular network, the apparatus comprising a processor configured to:
encode capability information representative of whether the UE is capable of implementing an autoencoder based channel state information, CSI, feedback; and
instruct the UE to send the capability information to an access node of the cellular network.

11. The apparatus of claim 10, wherein the capability information comprises one or more fields representative of at least one of: encoder model interoperability information, capability of the UE of accepting an access node-defined model, capability of the UE of a training of the encoder ML model, a description of information of the ML encoder model of the UE, and/or a dataset managed by the UE.

12. The apparatus of claim 10 or 11, wherein the processor is further configured to encode the capability information based on a capability information request received from the access node.

13. The apparatus of any one of claims 10 to 12, wherein the processor is further configured to:
determine a model identifier, ID, received from the access node;
determine a CSI report configuration received from the access node;
configure the encoder ML model of the UE according to the model ID; and
measure a CSI reference signal, CSI-RS, received from the access node based on the CSI report configuration.

14. The apparatus of any one of claims 10 to 13, wherein the processor is further configured to deploy a received encoder ML model and zero or more additional data processing blocks if the UE is capable of accepting an access node-defined model.

15. A computer-readable medium comprising one or more instructions which, if executed by a processor of a user equipment, UE, of a cellular network, cause the processor to:
encode capability information representative of whether the UE is capable of implementing an autoencoder based channel state information, CSI, feedback; and
instruct the UE to send the capability information to an access node of the cellular network.
